# EUROPÄISCHE PATENTSCHRIFT

(11) **EP 1 416 430 B1**
(45) Veröffentlichungstag und Bekanntmachung des Hinweises auf die Patenterteilung: **29.08.2007**
(21) Anmeldenummer: 03090190.4
(22) Anmeldetag: 27.06.2003
(51) Int. Cl.: G06K 15/02, G07B 17/00

(54) **Anordnung zum Drucken eines Druckbildes mit Bereichen unterschiedlicher Druckbildauflösung**
Arrangement for printing an image having areas of different imaging resolution
Dispositif pour imprimer des images ayant des zones d'impression à résolutions différentes

(30) Priorität: 31.10.2002 DE 10250820
(43) Veröffentlichungstag der Anmeldung: 06.05.2004
(73) Patentinhaber: Francotyp-Postalia GmbH, 16547 Birkenwerder (DE)
(72) Erfinder: Jauert, Joachim, 13187 Berlin (DE)

(56) Entgegenhaltungen:
- US-A- 5 239 625
- US-A- 5 608 636
- US-A- 5 729 461

## Beschreibung

Die Erfindung betrifft eine Anordnung zum Drucken eines Druckbildes mit Bereichen unterschiedlicher Druckbildauflösung, gemäß des Oberbegriffs des Anspruchs 1. Die Erfindung kommt in Frankiermaschinen, Adressiermaschinen und anderen druckenden Postverarbeitungsgeräten zum Einsatz.

In der US 4.746.234 wurde bereits eine Frankiermaschine mit einem Thermotransferdrucker vorgeschlagen, der eine leichte Änderung der Druckbildinformationen erlaubt. Dabei werden semipermanente und variable Druckbildinformationen als Druckdaten elektronisch in einem Speicher gespeichert und zum Drucken in eine Thermotransferdruckvorrichtung ausgelesen. Diese Lösung wurde in der Frankiermaschine T1000 der Anmelderin eingesetzt und gestattete erstmalig ein Werbestempelbild per Knopfdruck zu wechseln.

Für die abteilungsweise Abrechnung der verbrauchten Postgebührenwerte mit der Frankiermaschine T1000 wurde ein Verfahren und Anordnung für einen internen Kostenstellendruck vorgeschlagen, wobei es mittels einer speziellen Drucksteuerung gelingt, ein elektronisch um 90° oder 270° gedrehtes Druckbild zu erzeugen (EP 580 274 B1, US 5.790.768).

Außerdem ermöglicht die Maschine T1000, Visitenkarten, Gebühren- und

Gerichtskostenstempelbilder auszudrucken, d.h. Druckbilder zu erzeugen, die sich in Aufbau und Inhalt wesentlich von einem Frankierstempelbild unterscheiden, aber die gleiche Druckbildauflösung aufweisen.

Ein Frankierstempelbild umfaßt gewöhnlich ein Postwertzeichenbild, ein Poststempelbild mit dem Posteinlieferungsort und Datum sowie das vorgenannte Werbestempelbild und wird in der vorgenannten Reihenfolge beispielsweise durch die Frankiermaschine T1000 erzeugt, durch ein Drucken von Druckspalten in senkrechter Anordnung zur Frankierguttransportrichtung. Die gesamte Druckspalte wird von einem einzigen Thermotransferdruckkopf aufdruckt. Die Maschine kann dadurch einen maximalen Durchsatz an Frankiergut von 2200 Briefen/Stunde bei einer Druckauflösung 240 dot per 30 mm, d.h. 203 dpi erreichen, jedoch die Zuführung von Frankiergut per Hand begrenzt den praktisch erzielbaren Durchsatz an Frankiergut.

Aus der EP 578 042 B1 (US 5.608.636) ist ein Verfahren zum Steuern des spaltenweisen Drucks eines Postwertzeichens bekannt, bei dem codierte Bildinformationen vor dem jeweiligen Druckvorgang in Binärsignale zum Ansteuern von Druckelementen umgesetzt werden, wobei die umgesetzten veränderlichen und unveränderlichen Bilddaten erst während des Druckens zusammengesetzt werden. Dabei erfolgt das Dekodieren der variablen Druckdaten und Bereitstellen der Druckdaten für eine komplette Spalte in einem Register durch einen Mikroprozessor. Da in der Zeit zwischen zwei Druckspalten die Daten für die nächste Druckspalte bereitgestellt werden müssen, wird Rechenzeit des Mikroprozessors entsprechend dem Anteil der variablen Druckdaten, der Höhe des Frankiergutdurchsatzes und der Druckauflösung benötigt. Das erhöht die BUS-Last und begrenzt die Möglichkeit, ein Frankierstempelbild schneller auf ein Frankiergut aufzudrucken. Letzteres beinhaltet eine Mitteilung mit einer postalischen Information einschließlich der Postgebührendaten zur Beförderung des Briefes. Moderne Frankiermaschinen ermöglichen einen sogenannten Sicherheitsabdruck, d.h. einen Abdruck einer speziellen Markierung zusätzlich zu der vorgenannten Mitteilung. Beispielsweise wird aus der vorgenannten Mitteilung ein Message Authentication Code oder eine Signatur erzeugt und dann eine Zeichenkette oder ein Barcode als Markierung gebildet. Wenn ein Sicherheitsabdruck mit einer solchen Markierung gedruckt wird, ermöglicht das eine Nachprüfung der Echtheit des Sicherheitsabdruckes beispielsweise im Postamt oder privaten Carrier (US 5.953.426, US 6.041.704).

Die Entwicklung der postalischen Anforderungen für einen Sicherheitsabdruck hat in einigen Ländern zur Folge, dass die Menge der variablen Duckbilddaten sehr hoch ist, die zwischen zwei Abdrucken von unterschiedlichen Frankierstempelbildern geändert werden muss. So soll beispielsweise für Kanada ein Datamatrixcode von 48 x 48 Bildelementen für jeden einzelnen Frankierabdruck erzeugt und gedruckt werden.

Ein Inkjet-Druckkopf kann aus mehreren Modulen nach dem "Nonlnterlaced"-Prinzip zusammengesetzt sein, wenn die Abstände zwischen den Düsen zu groß sind und die Anzahl der Düsen eines Moduls nicht ausreichen, um mit einem Modul eine Druckbreite von 1 Zoll (= 25,4 mm) bei einer Auflösung von ca. 200 dpi zu drucken. Beispielsweise sind im Tintendruckkopf der Frankiermaschine JetMail® drei Module zueinander in Druckbildspaltenrichtung versetzt angeordnet, wobei die Module jeweils nur eine Düsenreihe mit 64 Düse haben und zur Druckspalte soweit schräg gestellt angeordnet sind, dass jede Düsenreihe einen spitzen Winkel zur Transportrichtung des Frankiergutes einnimmt. Somit drucken die einzelnen Düsen jedes Moduls nicht entlang einer Druckbildspalte sondern längs einer Diagonalen, welche die Spalten des Druckbildes schneidet. Infolge dessen summieren sich Pixelversatzfehler, wenn die Transportgeschwindigkeit nicht korrekt erfaßt wird. Trotz Erfassung der Bewegung des Frankiergutes in Transportrichtung mit einem hochwertigen Encoder ist es schwer, eine Linie in Druckbildspaltenrichtung gerade auszudrucken. Die einzelnen Module und deren Versatz zueinander weisen fertigungsbedingte Toleranzen auf. Unterhalb einer Größe, die eine Druckbildspalte von der nächstfolgenden beabstandet ist, wird ein Druckimpuls für jedes Modul unterschiedlich verzögert zugeführt.

Ein Verfahren und eine Anordnung zum Toleranzausgleich wurden bereits im EP 921 008 A1 und im EP 921 009 A1 vorgeschlagen, wobei individuelle Druckkopfdaten in einem nichtflüchtigen Speicher des Druckkopfes gespeichert sind und bei der Druckimpulsverzögerung berücksichtigt werden. Geht der Pixelversatzfehler über die Größe hinaus, die eine Druckspalte von der nächstfolgenden beabstandet ist, müssen die binären Pixeldaten im Pixelspeicher geändert werden.

Eine aus US 5.707.158 und EP 762 334 B1 bekannte Lösung zur Druckbilderzeugung für die Jetmail® beschreibt, wie die ein komplettes Druckbild beschreibenden Daten vor dem Drucken erzeugt und eingespeichert werden und geht von einer Steuerdatei zum feldweisen Erzeugen des Druckbildes in einem Pixelspeicher vor dem Drucken aus. Das Druckbild wird in Teilbilddateien der Steuerdatei definiert und ist in Pixeldateien als Muster gespeichert. Damit die Druckeinrichtung direkt auf die Pixeldaten zugreifen kann, werden binäre Pixeldaten nicht in der Reihenfolge entlang einer Druckbildspalte, sondern jeweils entlang einer Diagonalen in drei übereinanderliegenden Teilbereichen als geändertes Muster in einem Pixelspeicher gespeichert, um die beim Drucken aufgrund der Noninterlaced-Anordnung der Module verursachten Änderungen im Muster zu kompensieren. Die Lösung basiert auf kompletten unter Beteiligung einer Pixeldatenänderungseinheit geänderten Mustern an binären Pixeldaten, die im Pixelspeicher zwischengespeichert werden, wobei die Druckbilder vor dem Drucken so zusammengestellt werden, dass letztere durch eine Druckdatensteuerung unmittelbar aus dem Pixelspeicher in ein Schieberegister eingelesen, seriell zu einem Schieberegister im Druckkopf übertragen und in ein Latch übernommen werden können. Die Druckdatensteuerung ist zusammen mit anderen Baugruppen in einem ASIC realisiert (US 5.710.721, EP 1 154 382 A2).

Mit dieser Lösung können einige postalische Anforderungen nur deshalb erfüllt werden, da der Mikroprozessor beim Ändern der Bilddaten von variablen Bildelementen im Speicher durch die spezielle Pixeldatenänderungseinheit im ASIC auf dem JetMail CPU-Board unterstützt wird, welche die variablen Bildelemente zwischen aufeinanderfolgenden Frankierungen ändern kann, damit diese in Form von binären Pixeldaten in einen Pixelspeicher gespeichert vor dem Drucken vorliegen. Die für das Drucken erforderliche Anordnung der Bildpunkte (Pixel) im Pixelspeicher ist auf Grund der Schrägstellung der Druckmodule eines Druckkopfes für das Ändern von Bildelementen durch den Mikroprozessor ungünstig und würde einen hohen Rechenaufwand erfordern. Durch letzteren kann auch bei Unterstützung durch eine Pixelaufbereitungseinheit nur eine geringe Anzahl variabler Bildelemente zwischen den Abdrucken geändert werden.

Aus der US 5.651.103 ist eine Vorrichtung und ein Verfahren zum spaltenweisen Druck eines Bildes in Echtzeit bekannt, bei der variable und feste Bilddatenelemente miteinander verbunden und in einem Puffer abgelegt werden, um dann zum Drucken einer Spalte benutzt zu werden. Die variablen und festen Bilddatenelemente liegen in einem nichtflüchtigen Speicher, wobei ein Teil der festen Bilddatenelemente komprimiert ist. Die Druckbilddaten werden für das Drucken einer jeden Druckspalte erst unmittelbar vor deren Drucken aus veränderlichen und unveränderlichen Bilddaten zusammengesetzt, d.h. die Bilddaten für einen Abdruck liegen nicht in binärer Form in einem Speicherbereich vor, sondern in einer mit dem im EP 578 042 B1 für die T1000 offenbarten Verfahren vergleichbaren Form. Durch eine Steuerung werden die variablen Bilddatenelemente im nichtflüchtigen Speicher identifiziert und Daten die mit den variablen Bilddatenelementen korrespondieren an eine weitere Steuerung übergeben, um die variablen und festen Bilddatenelemente herunterzuladen, miteinander zu verbinden und dann zu drucken. Die dafür vorgeschlagene Steuerung benötigt für jedes variable Bilddatenelement ein variables Adressregister. Die Anzahl der variablen Bildelementen ist damit durch die Anzahl der Adressregister begrenzt.

In einigen Frankiermaschinen kommt heute ein postalischer ½ Zoll Inkjet-Druckkopf mit Bubble-jet-Technologie zum Einsatz, der in einer Kartusche beispielsweise vom Typ HP 51640 der Firma Hewlett Packard angeordnet und durch besondere Mittel gesichert ist (EP 1 132 868 A1). Im ½ Zoll Inkjet-Druckkopf sind 300 Düsen in zwei Düsenreihen angeordnet, die zur Frankierguttransportrichtung orthogonal und zueinander in Druckbildspaltenrichtung und in Frankierguttransportrichtung versetzt angeordnet sind ("Interlaced"-Prinzip).

In der europäischen Patentanmeldung EP 1 176 016 A2 mit dem Titel: Anordnung und Verfahren zur Datennachführung für Aufwärmzyklen von Tintenstrahldruckköpfen werden speziell gesicherte und für einen Frankierabdruck ansteuerbare Tintenstrahldruckköpfe näher erläutert. Um in einem Durchlauf des Frankiergutes durch eine Frankiermaschine einen kompletten Frankierabdruck mit einer Druckspaltenlänge von 1 Zoll = 25,4 mm und mit einer maximalen Auflösung bis zu 600 dpi in Druckbildspaltenrichtung auszudrucken, wurden zwei ½ Zoll Inkjet-Druckköpfe zueinander in Druckbildspaltenrichtung und in Frankierguttransportrichtung versetzt angeordnet. Das Druckbild wird aus Druckbildspalten in orthogonaler Anordnung zur Frankierguttransportrichtung erzeugt, wobei jeder der Druckköpfe einen Teil der Druckbildspalte druckt. Die Maschine kann dadurch einen hohen Durchsatz von Frankiergut erreichen (5500 Briefe je Stunde). Die Menge der Druckbilddaten, die zwischen zwei Abdrucken geändert werden muss, ist nicht nur sehr hoch, sondern muß auch in einer kürzeren Zeit bereitgestellt werden. Wenn die Speicherung der binären Druckbilddaten im Pixelspeicher für die Pixel aber in der speziellen Reihenfolge erfolgt, in der die Pixeldaten beim Drucken einer Spalte für die Ansteuerung der beiden postalischen ½ Zoll Inkjet-Druckköpfe mit Bubble-jet-Technologie benötigt werden, dann wird das Druckbild im Pixelspeicher als ein entsprechend umgeändertes Muster von binären Pixeldaten abgebildet. Dadurch wird das Ändern von Bildelementen durch den Mikroprozessor wieder kompliziert und erfordert einen hohen Rechenaufwand, der entweder nur mit einem teueren Mikroprozessor in der erforderlichen Zeit bereitgestellt werden kann oder aber der Durchsatz an Frankiergut ist entsprechend verringert.

Die Aufgabe der Erfindung besteht darin, eine kostengünstige Lösung einer Steuerung des Druckens eines Druckbildes mit Bereichen unterschiedlicher Druckbildauflösung auf ein bewegtes Postgut in einem Postbearbeitungsgerät mit hochauflösenden Druckköpfen für einen hohen Durchsatz von Postgut zu schaffen. Bei einfacher Zwischenspeicherung und Adressenberechnung vor dem Ausdrucken soll der für die Steuerung eines kompletten Postbearbeitungssystems zuständige Mikroprozessor entlastet werden.

Die Aufgabe wird mit den Merkmalen der Anordnung nach dem Anspruch 1 gelöst.

Die erfinderische Lösung geht davon aus, dass die zum Einsatz kommenden Tintenstrahldruckköpfe hohe Anforderungen an die Druckauflösung erfüllen. Die Druckauflösung orthogonal zur Transportrichtung eines Postgutes gelegenen Druckbildspalte kann einen maximalen Wert (600 dpi) erreichen. Das Postbearbeitungsgerät ist beispielsweise eine Frankiermaschine deren Frankierstempelbild ein Druckbild mit einer vorbestimmten Anzahl von Druckbildspalten von ca. einem Zoll Länge ist. Wenn ein handelsüblicher Tintenstrahldruckkopf mit Halb-Zoll Breite nur ein Teil des Druckbildes (Druckhalbbild) ausdrucken kann, werden für ein Drucken des ganzen Druckbildes zwei Halb-Zoll-Tintenstrahldruckköpfe benötigt. Von jedem durch einen Tintenstrahldruckkopf auszudruckenden Teil des Druckbildes existiert ein Abbild in Form eines Musters an binären Pixeldaten. Die Pixeldaten für zwei komplette Druckhalbbilder werden unter Verwendung von Daten aus einem Festwertspeicher durch den Mikroprozessor generiert und im Pixelspeicher in Form von Datenworten gespeichert. Deren Anzahl in einem Datenstring entspricht der maximal möglichen Druckauflösung des Druckkopfes. Die im Pixelspeicher gespeicherten binären Pixeldaten werden zur Druckdatensteuerung übertragen und während des Druckens dem Typ des Druckkopfes entsprechend gruppiert. Das Druckbild kann jedoch auch Abschnitte enthalten, die nicht hochauflösend ausgedruckt werden müssen. Da ein Muster mit einer Vielzahl von spaltenweise angeordneten Datenstrings das Druckbild wiederspiegelt, ergibt sich eine Wiederspiegelung eines komprimierten Druckbildabschnittes, wenn die binären Pixeldaten komprimiert in Datenworten eines Datenstrings gespeichert werden. Das nun die Länge der entsprechenden Datenstrings reduziert ist, trägt zu einer erheblichen Speicherplatzeinsparung im Pixelspeicher bei. Durch die Druckdatensteuerung werden beim Dekomprimieren der Pixeldaten die fehlenden Pixeldaten erzeugt.

Es wird vorgeschlagen, dass Pixeldaten vor dem Drucken in leicht änderbarer und binärer Form im Pixelspeicher wortweise gespeichert vorliegen sowie dass eine umschaltbare Anzahl von Datenwörtern für ein Drucken von Abschnitten im Druckbild mit einer geänderten Auflösung vorgesehen sind und dass die Druckdatensteuerung in Abhängigkeit von der geänderten Druckbildauflösung entsprechend umschaltbar ausgebildet ist.

Die Druckdatensteuerung weist Mittel zum Erzeugen eines Druckbildes in Abhängigkeit von der erforderlichen Auflösung auf und entlastet damit den in dem Postbearbeitungsgerät eingesetzten Mikroprozessor, einerseits für die Änderung der Druckdaten der variablen Druckbildelemente im Pixelspeicher zwischen den Frankierungen. Anschließend oder parallel dazu werden Druckdaten per Direct Memory Access (DMA) zur Druckdatensteuerung transferiert. Weil andererseits der Mikroprozessor auch für die komplette Steuerung des gesamten Postbearbeitungssystems zuständig ist, werden auch zusätzliche Steuerungsfunktionen realisiert, wie die Regelung des Postguttransportmotors und Steuerung der Schließerund Zuführeinrichtung und ggf. weiterer Peripheriegeräte. Die Anforderungen an den eingesetzten kostengünstigen Prozessor sind deshalb sehr hoch und führen zu einer hohen Auslastung seiner Rechenleistung.

Ausgehend davon, dass das Ändern von Bildelementen vereinfacht wird, was für den Mikroprozessor einen geringeren Rechenaufwand ergibt, wenn das durch den jeweiligen Druckkopf zu druckende Druckhalbbild im Pixelspeicher in Form von binären Pixeldaten so wiedergespiegelt wird, dass mit jedem Befehl des Mikroprozessors eine möglichst große Anzahl an binären Pixeldaten eines Bildelements geändert werden kann, wird eine Druckdatensteuerung mit einer Pixeldatenaufbereitung pro Druckkopf vorgeschlagen. Zwei Pixeldatenaufbereitungseinheiten werden durch eine spezielle Steuerung angesteuert, um binäre Pixeldaten aus dem Pixelspeicher in einen Zwischenspeicher zu übertragen und um bitweise binäre Pixeldaten auszuwählen, welche in ein Sammelregister der jeweiligen Pixeldatenaufbereitung eingeschrieben und anschließend in ein Schieberegister übernommen werden, so daß die Pixeldaten in einer solchen speziellen Reihenfolge vom Schieberegister geliefert werden, wie das beim Drucken von Druckspalten mit beiden postalischen ½ Zoll Inkjet-Druckköpfen benötigt wird. Der Mikroprozessor ist programmiert, eine Anzahl an Datenstrings mit einer umschaltbaren Anzahl an Datenworten im Pixelspeicher zu speichern. Die Druckdatensteuerung ist mit Mitteln ausgestattet, um die aufgrund der Komprimierung fehlenden Pixeldaten so zu ergänzen, dass die Verringerung der Anzahl an Datenworten je Datenstring der Reduzierung der Auflösung beim Drucken entspricht.

Die spezielle Steuerung in der Druckdatensteuerung umfaßt eine DMA-Steuerung, einen Adressengenerator und eine Druckersteuerung. Die DMA-Steuerung ist zur Erzeugung eines Druckbildes mit niedriger Auflösung umschaltbar, so dass beim Laden von binären Pixeldaten in die Zwischenspeicher die Anzahl an DMA-Zyklen mindestens halbiert ist. Der ebenfalls umschaltbare Adressengenerator erzeugt dann mindestens halbierte Leseadressen für einen Lesezugriff auf die Zwischenspeicher.

Die Druckersteuerung ist mit einem Encoder verbunden, welcher eine der Transportgeschwindigkeit des Postguts entsprechende Impulsrate liefert. Die Druckersteuerung ist mit Mittel zur Speicherung von Sollwerten für einen Datenstringzähler in Registern, mit Mittel zum Veranlassens des Ladens eines Datenstrings mit den binären Pixeldaten für jeweils eine der Druckspalten in einen Zwischenspeicher, mit Mittel zum Inkrementieren und zum Auswerten eines Zählwertes des Datenstringzählers ausgestattet. Wenn der Inhalt dieses Datenstringzählers gleich dem Inhalt eines Sollwertregisters ist, wird entsprechend der aktuellen Druckauflösung ein F_{D}-Signal von der Druckersteuerung ausgegeben. Am Steuereingang der DMA-Steuerung liegt eine Steuerleitung an, über die mindestens ein F_{D}-Signal mit einem Wert 'Eins' übertragen werden kann. Liegt ein solches F_{D}-Signal mit dem Wert 'Eins' an, dann wird die DMA-Steuerung dazu veranlasst, eine maximale Anzahl an Zyklen zum Laden von Datenworten mit binären Pixeldaten für eine maximale Auflösung auszuführen. Davon jeweils die halbe Anzahl an Datenworten wird dabei in den für jeden Halb-Zoll Druckkopf vorgesehenen Zwischenspeicher geladen. Zum Auslesen von Pixeldaten aus dem Zwischenspeicher wird dann die vom Adressengenerator erzeugte Adresse verwendet. Liegt jedoch ein F_{D}-Signal mit einem alternativen Wert über die Steuerleitung am Steuereingang der DMA-Steuerung an, dann wird die DMA-Steuerung veranlasst, eine geringere als die maximale Anzahl an Zyklen zum Laden von Datenworten mit binären Pixeldaten für eine verringerte Auflösung auszuführen. Das Verhältnis der maximalen Anzahl an DMA-Zyklen zur reduzierten Anzahl an DMA-Zyklen entspricht dem via F_{D}-Signal übermittelten Kompressionsfaktor F_{D}, wobei der auf einunddenselben Datenstring angewendete Kompressionsfaktor F_{D} gleich dem via F_{A}-Signal zum Adressengenerator übermittelten Dekompressionsfaktor F_{A} ist. Falls weitere Sollwertregister vorhanden sind, wird mit jedem weiteren Gleichstand des Sollwertes eines dieser Sollwertregister mit dem aktuellen Zählwert des Datenstringzählers die aktuelle Druckauflösung geändert. Das Drucken wird beendet, wenn der Datenstringzähler einen vorgegebenen Grenzwert erreicht.

Durch die Druckdatensteuerung ergeben sich Vorteile für den Mikroprozessor bezüglich der Rechenzeit und für den Pixelspeicher bezüglich Speicherplatzbedarf.

Da in den Druckbildbereichen mit geringer Auflösung vom Mikroprozessor weniger Zyklen zum Laden eines Datenstrings in die Zwischenspeicher ausgeführt werden müssen, reduziert sich die BUS-Last und dem Mikroprozessor steht mehr Zeit zur Programmabarbeitung zur Verfügung.

Bei einer Änderung variabler Druckbildelemente müssen durch den Mikroprozessor weniger Daten zwischen den Frankierungen geändert werden. Dadurch wird die benötigte Rechenzeit reduziert.

Da durch Druckbildabschnitte mit geringer Auflösung die Anzahl der Datenworte je Datenstring im Pixelspeicher verringert wird, können zur Speicherung einer größeren Datenmenge kleinere Speicherbausteine verwendet werden bzw. gegebenenfalls können Speicherbausteine entfallen, was die Herstellungskosten reduziert.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

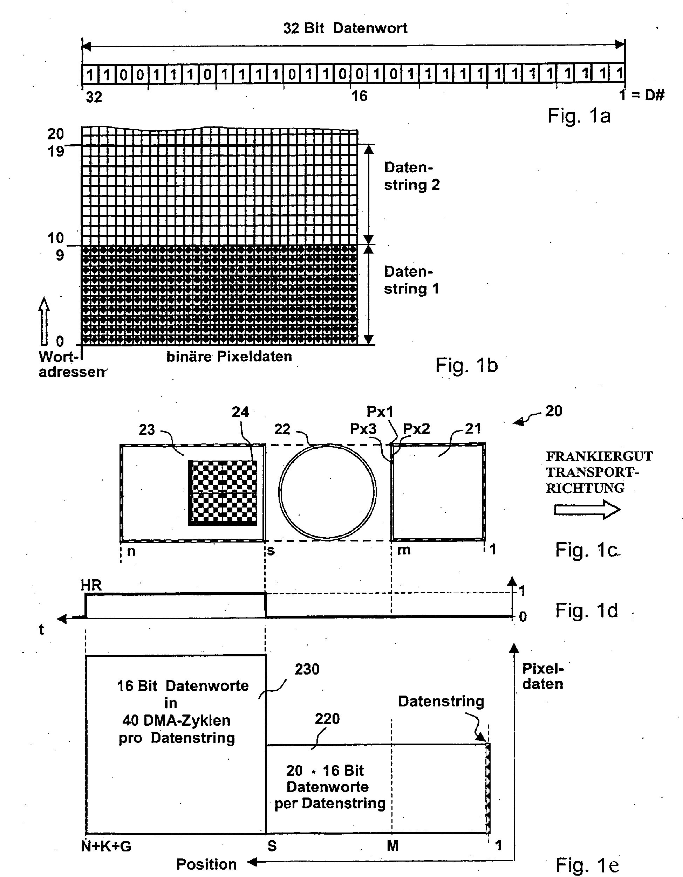

- Figur 1 a,: Darstellung eines 32 Bit-Datenwortes,
- Figur 1 b,: Vereinfachte Darstellung von gespeicherten Datenwörten,
- Figur 1 c,: Vereinfachtes Druckbild eines Frankierabdruckes,
- Figur 1d,: Impuls/Zeit-Diagramm für ein HR-Signal für ein Druckbild nach Figur 1 c,
- Figur 1 e,: Darstellung einer Datenstringanordnung für ein Druckbild nach Figur 1 c,
- Figur 2,: Blockschaltbild für die Pixeldatenaufbereitung durch eine Druckdatensteuerung,
- Figur 3,: Ausschnitt aus der Schaltungsanordnung nach Fig.2 mit einer Pixeldatenaufbereitungseinheit für den zweiten Druckkopf,
- Figur 4,: Pixeldatenaufbereitungseinheit für den zweiten Druckkopf,
- Figur 5a,: Druckbild für eine Frankiermaschine mit zwei Druckköpfen,
- Figur 5b,: Anordnung der zwei Druckköpfe zum Drucken des Druckbildes,
- Figur 6,: Darstellung von Pixeldaten für zwei Druckhalbbilder im Pixelspeicher,
- Figur 7,: Darstellung von Pixeldaten für vier Druckhalbbilder im Pixelspeicher,
- Figur 8,: Anordnung der zwei Druckköpfe zum Drucken des Druckbildes mit einer verdoppelten Auflösung,
- Figur 9a,: Darstellung von Pixeldaten für vier Druckhalbbilder im Pixelspeicher, in einer bevorzugten Anordnung,
- Figur 9b,: Darstellung zum spaltenweisen Druck von Pixeln,
- Figur 10a,: Darstellung der in einem Pixelspeicher gespeicherten binären Pixeldaten von einem Bildelement,
- Figur 10b,: Darstellung der binären Pixeldaten eines Bildelementes, das vorteilhaft aufgeteilt im Pixelspeicher gespeichert ist,
- Figur 10c,: Darstellung der in bekannter Weise gespeicherten binären Pixeldaten eines Bildelementes im Pixelspeicher,
- Figur 11,: Flußplan zur Ablaufsteuerung der Druckersteuerung,
- Figur 12a, b,: Flußplan und Blockschaltung zur DMA-Steuerung,
- Figur 13a, b,: Flußplan und Blockschaltung zur Adressengenerierung,
- Figur 14,: Tabelle zur Adressengenerierung,
- Figur 15,: Flußplan der Ausgaberoutine,
- Figur 16a, b,: Detail zur Ablaufsteuerung nach Fig.11,
- Figur 17,: Blockbild der Druckersteuerung,
- Figur 18,: Darstellung verschiedener Druckauflösungen.

Die Figur 1a und 1 b zeigen eine Darstellung eines 32 Bit-Datenwortes und die vereinfachte Darstellung von Datenwörtern, die in einem Speicherbereich des Pixelspeichers gespeichert sind, welcher in ansich bekannter Weise wortweise adressierbar ist. Im Bereich der Wortadressen 0 bis 9 ist ein erster Datenstring und im Bereich der Wortadressen 10 bis 19 ist ein zweiter Datenstring gespeichert. Im ersten Datenstring haben alle binären Pixeldaten den Wert 'Eins' (fettgedruckter Punkt). Im zweiten Datenstring haben alle binären Pixeldaten den Wert 'Null'. Jeder der Datenstrings besteht aus je 10 * 32 Bit-Datenworten. Zum Errreichen der Hochauflösung wird die doppelte Anzahl an Datenworten je Datenstring benötigt.

Die Figur 1 c zeigt ein vereinfachtes Druckbild 20, mit einem Frankierstempelbild 21, Poststempelbild 22 und Werbestempelbild 23 sowie mit einem 2D-Barcodefeld 24. Letzteres ist zwar im Werbestempel gelegen eingezeichnet, kann aber an beliebiger Stelle im Druckbild 20 angeordnet sein. Ein - nicht gezeigter - Druckkopf kann druckbildspaltenweise ein Postgut mit einem Druckbild 20 bedrucken bei einer Relativbewegung zum Poststück, welches vorzugsweise in Frankierguttransportrichtung (weisser Pfeil) bewegt wird. Jedes der Stempelbilder ist der Einfachheit halber auf einen äußeren Rahmen reduziert worden, der nur zur besseren Darstellung von entsprechend dort angeordneten Pixeln mit einer Doppellinie gezeichnet worden ist. Das Druckbild 20 wird durch orthogonal zur Transportrichtung angeordnete Druckbildspalten geschnitten. Es ist ersichtlich, dass ein erstes, zweites und drittes Pixel Px1, Px2 und Px3 in der Druckbildspalte m liegen. Nur zur Erläuterung der vertikalen und horizontalen Auflösung des Druckbildes 20 wird von einer Anzahl von Druckbildspalten 1,..., m, ..., n, ausgegangen, welche für einen spaltenweisen Druck bedeutungsvoll sind. Letzterer würde einen Tintendruckmodul mit einer einzigen Düsenreihe von Druckbildspaltenlänge erfordern (EP 581 395 B1). Ein solches Tintendruckmodul wird nur im Spezialfall eingesetzt und ist noch nicht handelsüblich. Es wird aber später noch näher erläutert, wie mit einer Anordnung von zwei handelsüblichen Tintendruckmodulen, beispielsweise von der Firma Hewlett Packard mit dem Typ HP51645A, ein Drucken mit qualitativ hoher Auflösung realisiert wird. Mit letzteren wird beispielsweise bei einer hohen Frankierguttransportgeschwindigkeit eine horizontalen Auflösung von 300 dpi und in Druckbildspaltenrichtung eine maximale vertikale Auflösung von 600 dpi erreicht. Die vorgenannte Auflösung ist für ein 2D-Barcodefeld 24 ausreichend, so dass die Frankierguttransportgeschwindigkeit nicht weiter verringert werden braucht, um eine höhere horizontale Auflösung zu erreichen. Für Frankierabdrucke ist jedoch eine geringe vertikale und horizontale Druckbildauflösung von je 300 dpi in den meisten Fällen ausreichend. Die beim Frankiermaschinenhersteller durchgeführten Tests mit einer der für das Frankieren geeigneten Tinte haben ergeben, dass es von Vorteil ist, wenn nur mit jeder zweiten Düse der Druckköpfe gedruckt wird. Da dadurch weniger Tinte auf das Frankiergut gelangt, erhöht sich die Anzahl der Abdrucke, die mit einer Tintenpatrone gedruckt werden können. Auch trocknet die Tinte schneller und wird nicht verschmiert, wenn die frankierten Briefe übereinander abgelegt werden. Für diesen Fall genügt es, wenn im Pixelspeicher eine Anzahl an Datenstrings mit jeweils 320 Bit zum Drucken gespeichert werden.

Die Figur 1d zeigt ein Impuls/Zeit-Diagramm für ein HR-Signal für ein Druckbild nach Figur 1 c. Erst wenn eine Druckbildspalte s erreicht worden ist, wird der Wert des HR-Signals von 'Null' auf 'Eins'gewechselt. Der Wert kann beim Erreichen einer weiteren Druckbildspalte n auf 'Null' zurückgeschaltet werden.

Die Figur 1 e zeigt eine Darstellung einer Datenstringanordnung für ein Druckbild nach Figur 1 c. In einer Position 1 ist ein erster Datenstring in Spaltenrichtung angeordnet (sägezahngemustertes Band). Eine erste Anzahl von - nicht näher dargestellten - Datenstrings mit je einer Anzahl bis zu 320 binären Pixeldaten können in den Positionen 1 ≤ M ≤ S-1 spaltenweise angeordnet sein und füllen einen Bereich 220. Eine weitere Anzahl von - nicht näher dargestellten - Datenstrings mit je einer Anzahl bis zu 640 binären Pixeldaten können in den Positionen S bis N+K+G spaltenweise angeordnet sein und füllen einen Bereich 230. Dem Bereich 220 bzw. 230 ist eine Anzahl an Datenstrings zugeordnet, die jeweils beim Laden der 320 bzw. 640 Pixeldaten via BUS in 20 bzw. 40 DMA-Zyklen ä 16 Bit in die Zwischenspeicher der Druckdatensteuerung übertragen werden. Beim Laden mit nur 20 DMA-Zyklen ist die BUS-Last reduziert.

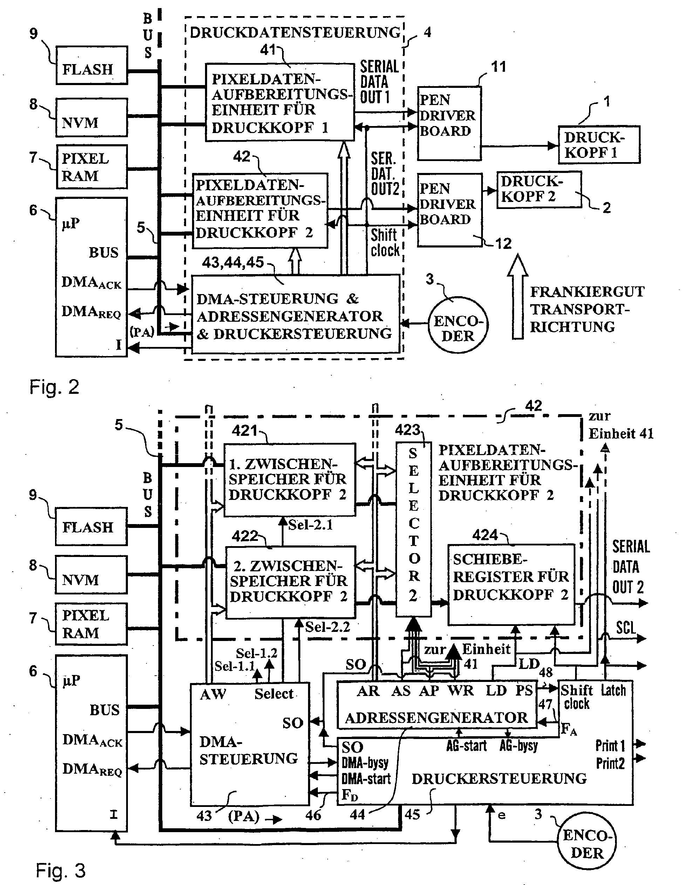

Die Figur 2 zeigt das Blockschaltbild der bevorzugten Schaltungsanordnung für die Pixeldatenaufbereitung durch eine Druckdatensteuerung. Ein erster und ein zweiter Druckkopf 1 und 2 sind jeweils über eine Treibereinheit (Pen-Driver-Board) 11 und 12 mit einer Druckdatensteuerung 4 verbunden, welche bei einem direkten Speicherzugriff eingangsseitig 16 bit parallel anliegende binäre Pixeldaten von einem BUS 5 speichert und ausgangsseitig seriell binäre Pixeldaten an die Treibereinheiten 11 und 12 abgibt. Über den BUS 5 sind mindestens ein Mikroprozessor 6, ein Pixelspeicher 7, ein nichtflüchtiger Speicher 8 und ein Festwertspeicher FLASH 9 adress-,daten- und steuerungsmäßig verbunden. Ein Encoder 3 ist mit der Druckdatensteuerung 4 verbunden, um das Zwischenspeichern der binären Pixeldaten und das Drucken der Druckbildspalten auszulösen, wobei jeder Druckkopf mit einer Taktfrequenz von max. 6,5 KHz betrieben wird. Ein für einen Frankierabdruck postalisch gesicherter und über eine zugehörige Teibereinheit (Pen Driver Board) ansteuerbarer Bubble-jet-Tintenstrahldruckkopf, der in einer Tintenkartusche vom Typ HP 51645A der Firma Hewlett Packard angeordnet ist, wird in der europäischen Patentanmeldung EP 1 176 016 A2 näher erläutert, welche den Titel trägt: Anordnung und Verfahren zur Datennachführung für Aufwärmzyklen von Tintenstrahldruckköpfen.

Der Druckdatensteuerung 4 wird mindestens ein Parameter PA via BUS 5 zugeführt, um die Auflösung beim Drucken zu steuern. Die Druckdatensteuerung 4 weist eine erste und zweite Pixeldatenaufbereitungseinheit 41 und 42 und zugehörige Steuerungen, insbesondere eine DMA-Steuerung 43, einen Adressengenerator 44 und eine Druckersteuerung 45 auf. Die Druckdatensteuerung 45 ist über den BUS 5 und über eine Steuerleitung für ein Interruptsignal I direkt mit dem Mikroprozessor 6 verbunden. Die DMA-Steuerung 43 ist über eine Steuerleitung für DMA-Steuersignale DMA_{ACK}, DMA_{REQ} mit dem Mikroprozessor 6 verbunden. Vorzugsweise verfügen der Mikroprozessor 6 und der Pixelspeicher 7 über einen 32 Bit breiten Daten-BUS, um wortweise auf die Pixeldaten zugreifen zu können. Ein interner DMA-Controller des Mikroprozessors 6 erlaubt auch die Adressierung von 16 Bit breiten Datenworten. Aus dem Pixelspeicher 7 werden die binären Pixeldaten den beiden Pixeldatenaufbereitungseinheiten 41, 42 datenstringweise zur Verfügung gestellt.

Die Figur 3 zeigt einen Ausschnitt aus der Schaltungsanordnung nach Figur 2 mit einer Pixeldatenaufbereitungseinheit 42 für den zweiten Druckkopf, mit einer DMA-Steuerung 43 für einen direkten Speicherzugriff (DMA), mit einem Adressengenerator 44 und einer Druckersteuerung 45.

Die Druckersteuerung 45 ist mit der DMA-Steuerung 43 und dem Adressengenerator 44 sowie der Adressengenerator 44 ist mit den Pixeldatenaufbereitungseinheiten 41 (nicht gezeigt) und 42 steuerungsmäßig verbunden. Der Encoder 3 ist mit der Druckersteuerung 45 verbunden. Die Letztere ist mit der DMA-Steuerung 43 direkt über Steuerleitungen für erste DMA-Steuersignale (DMA-Start, DMA-busy) verbunden, wobei der DMA-Steuerung 43 von der Druckersteuerung 45 das DMA-Startsignal zugeführt wird, welche im Ergebnis einer Anzahl von durchgeführten DMA-Zyklen die Pixeldaten der Pixeldatenaufbereitungseinheit (41, 42) datenstringweise zur Verfügung stellt. Die DMA-Steuerung 43 gibt das DMA-busy-Signal mit dem Wert 'Null' an die Druckersteuerung 45 ab, um zu signalisieren, daß der direkte Speicherzugriff erfolgt und die DMA-Zyklen beendet sind. Die Druckersteuerung 45 ist mit dem Adressengenerator 44 über mindestens eine Steuerleitung zur Zuführung eines Startsignals (AG-Start) verbunden. Der Adressengenerator 44 weist - in hier nicht gezeigter Weise - eine Einheit zur Generierung von Leseadressen und Mittel zur Bildung eines Adressenlesesignals AR in Abhängigkeit vom Dekomprimierungsfaktor F_{A} auf, wobei das Adressen-lesesignal AR dem Quotient aus den generierten Leseadressen und dem Dekomprimierungsfaktor F_{A} entspricht. Der letztere geht aus einem F_{A}-Signal hervor, welches von der Druckersteuerung 45 über eine Steuerleitung 47 übermittelt wird. Ist eine Anzahl an Adressenlesesignalen AR für eine Adressgruppe A generiert worden, gibt der Adressengenerator 44 ein Druckstartsignal PS via Steuerleitung 48 an die Druckersteuerung 45 ab.

Die Druckersteuerung 45 ist mit dem Mikroprozessor 6 über eine Steuerleitung für ein Interruptsignal I und über den BUS 5 verbunden. Über den BUS 5 sind mindestens der Mikroprozessor 6, der Pixelspeicher 7, der nichtflüchtige Speicher 8 und Festwertspeicher 9 adress-, daten- und steuerungsmäßig verbunden. Die Druckersteuerung 45 weist Mittel zur Generierung und Ausgabe eines Umschaltsignals SO auf und ist über eine Steuerleitung mit der DMA-Steuerung 43 und mit der Pixeldatenaufbereitungseinheit 42 verbunden. Letztere wird angesteuert, um mittels Umschaltsignal SO einen der Zwischenspeicher 412, 422 für eine Übertragung von Pixeldaten zu der Treibereinheit 12 auszuwählen. Der letzteren können dadurch die binären Pixeldaten eines bereits gespeicherten Datenstrings gruppenweise zugeführt werden. Das Umschaltsignal SO wird der DMA-Steuerung 43 zugeführt, um den jeweis anderen der Zwischenspeicher 412 und 422 für ein Laden von Pixeldaten auszuwählen. Die DMA-Steuerung 43 weist Mittel zur Generierung und Ausgabe von Auswahlsignalen Sel_2.1, Sel_2.2 in Abhängigkeit vom Schaltzustand des Umschaltsignals SO auf, um die binären Pixeldaten in den jeweils ersten oder den jeweils zweiten der beiden Zwischenspeicher 421 oder 422 zwischenzuspeichern, wobei bei einer Übertragung von Pixeldaten aus dem jeweils einen der beiden Zwischenspeicher zu der Treibereinheit 12, die jeweils anderen Zwischenspeicher zum Zwischenspeichern eines Datenstrings nacheinander durch die Auswahlsignale ausgewählt werden.

Die beiden Pixeldatenaufbereitungseinheiten sind jeweils eingangsseitig zwar am BUS 5 jedoch dort nur an die niederwertigen 16 Bit des Daten-Busses angeschlossen. In den nachfolgenden Ausfühungsbeispielen sollen unter den Begriffen wie "Datenwort" bzw. "wortweise" immer ein 16 Bit breites Datenwort verstanden werden, wenn nicht ausdrucklich die Datenwortbreite zusätzlich angegegeben wird. Die Pixeldaten für einen ½ Zoll-Druckkopf benötigen nur den halben Platz (max. 320 Bit aus jedem Datenstring) im Pixelspeicher 7, aus dem diese Pixeldaten der Pixeldatenaufbereitungseinheit 42 zur Verfügung gestellt werden. Ein Datenstring für beide Druckkopfe erfordert folglich, daß zweimal ein Zwischenspeichern von je 20 * 16 Bit Datenworten, beispielsweise in den jeweils ersten Zwischenspeicher vorgenommen wird. Für aufeinanderfolgende Datenstrings werden die ersten und zweiten Zwischenspeicher 421 und 422 durch die Auswahlsignale Sel-2.1 und Sel-2.2 abwechselnd ausgewählt.

Es ist vorgesehen, dass die DMA-Steuerung 43 mit dem Mikroprozessor 6 und mit den Zwischenspeichern 421 und 422 steuerungsmäßig verbunden ist, dass die DMA-Steuerung 43 Mittel zur Generierung und Ausgabe von Adressenschreibsignalen AW aufweist, die bei einem DMA-Zugriff auf die im Pixelspeicher 7 gespeicherten binären Pixeldaten deren Einschreiben in die Zwischenspeicher 421, 422 der Pixeldatenaufbereitungseinheit 42 gestatten. Von der DMA-Steuerung 43 wird zur wortweisen Adressierung ein 5 Bit breites Adressenschreibsignal AW geliefert. Letzteres liegt jeweils an einem separaten Adresseneingang des ersten und zweiten Zwischenspeichers 421 und 422 für Pixeldaten für den zweiten Druckkopf an. Von der DMA-Steuerung 43 wird ein erstes Auswahlsignal Sel_2.1 für Pixeldaten für den zweiten Druckkopf geliefert und liegt an einem separaten Steuereingang des ersten Zwischenspeichers 421 für Pixeldaten für den zweiten Druckkopf an. Von der DMA-Steuerung 43 wird ein zweites Auswahlsignal Sel_2.2 für Pixeldaten für den zweiten Druckkopf geliefert und liegt an einem separaten Steuereingang des zweiten Zwischenspeichers 422 für Pixeldaten für den zweiten Druckkopf an.

Es ist vorgesehen, dass der Adressengenerator 44 mindestens Mittel zur Generierung und Ausgabe von Adressensignalen AR, AP und von Steuersignalen WR, LD, PS aufweist, und wobei die Adressensignale AR, AP und Steuersignale WR, LD der Pixeldatenaufbereitungseinheit 41, 42 zur Auswahl der zwischengespeicherten binären Pixeldaten und deren Gruppierung in einer vorbestimmten Reihenfolge zugeführt werden.

Jede Pixeldatenaufbereitungseinheit weist zwei Zwischenspeicher, einen Selektor zur Auswahl der binären Pixeldaten und ein Schieberegister zur Parallel/Serienwandlung der in einer neuen Reihenfolge bereitgestellten binären Pixeldaten auf. Die vom Adressengenerator 44 generierten Adressenlesesignale AR werden den Zwischenspeichern und dem Selektor der Pixeldatenaufbereitungseinheit zugeführt. Die vom Adressengenerator 44 generierten Primitiv-Adressensignale AP und das Schreibsteuersignal WR werden dem Selektor und ein Ladesignal LD wird dem Schieberegister zugeführt. Von der Druckersteuerung 45 wird ein Startsignal AG-start dem Adressengenerator 44 zugeführt. Vom Adressengenerator 44 wird nun ein Adressenlesesignal AR zur Auswahl des Datenwortes mit den Pixeldaten geliefert, die für den zweiten Druckkopf bestimmt sind. Zur wortweisen Adressierung liegen die höherwertigen Bits des Adressenlesesignals AR an einem separaten Adresseneingang des ersten und zweiten Zwischenspeichers 421 und 422 an. Die vier niederwertigen Bits des Adressenlesesignals AR liegen an einem Adresseneingang eines zweiten Selektors 423 an und erlauben eine Adressierung innerhalb des 16 Bit breiten Datenwortes. Die parallelen Datenausgänge des ersten und zweiten Zwischenspeichers 421 und 422 für Pixeldaten für den zweiten Druckkopf liegen an einem ersten und zweiten Eingang des Selektors 423 an, der vom Adressengenerator 44 gesteuert an seinem Ausgang ein 14 Bit paralleles Datensignal an den parallelen Dateneingang eines Schieberegisters 424 für Pixeldaten für den zweiten Druckkopf liefert. Das Schieberegister 424 wird durch ein Schiebetaktsignal SCL der Druckersteuerung 45 gesteuert und gibt ein serielles Datenausgangssignal SERIAL DATA OUT 2 aus. Der Adressengenerator 44 weist Mittel zur Generierung und Ausgabe von Adressensignalen auf und erzeugt ein zusätzliches Adressensignal AS zur Umschaltung des Selektors 423, solange wie in einem Register der Druckersteuerung 45 ein Hochauflösungssignal (HR-Signal) gespeichert wird. Im Falle einer im Druckbild erforderlichen hohen Auflösung wird ein HR-Signal vorzugsweise mit dem Wert "Eins" gespeichert. Der Adressengenerator 44 erzeugt außerdem eine primitive Adresse AP zur Steuerung des Selektors 423 und ein Schreibsignal WR. Der Adressengenerator 44 gibt ein Ladesignal LD an das Schieberegister 424 und ein Druckstartsignal PS an die Druckersteuerung 45 aus. Die letztere gibt die Latch- und

Print2-Signale für die Steuerung des Pen Driver Boards 12 aus. Die Druckersteuerung 45 ist über eine Steuerleitung für die Ausgabe des Umschaltsignals SO mit einem entsprechenden Steuereingang der DMA-Steuerung 43 und mit dem Selektor 423 der Pixeldatenaufbereitungseinheit 42 verbunden. Die Druckersteuerung 45 hat Auswertemittel zur Auswertung der via BUS 5 übermittelten Adress-und Steuerungssignale, die hinsichtlich des Vorkommens eines Druckbefehls ausgewertet werden und speichert die zum Steuern des Druckens mit unterschiedlicher Auflösung erforderlichen Parameter PA wie HRS, H, S in Speichern. Die Druckersteuerung 45 generiert mindestens die Signale DMA-start, AG-start, SO, F_{D}, F_{A}, speichert letztere in Registern und steht mit der DMA-Steuerung 43 über Steuerleitungen für DMA-start, DMA-busy, SO-, und

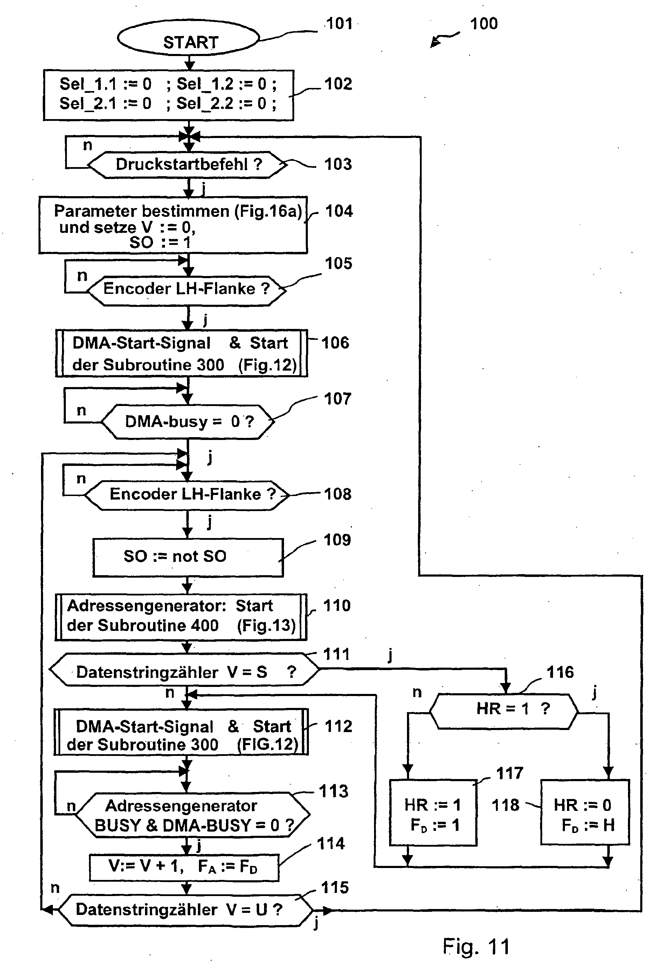

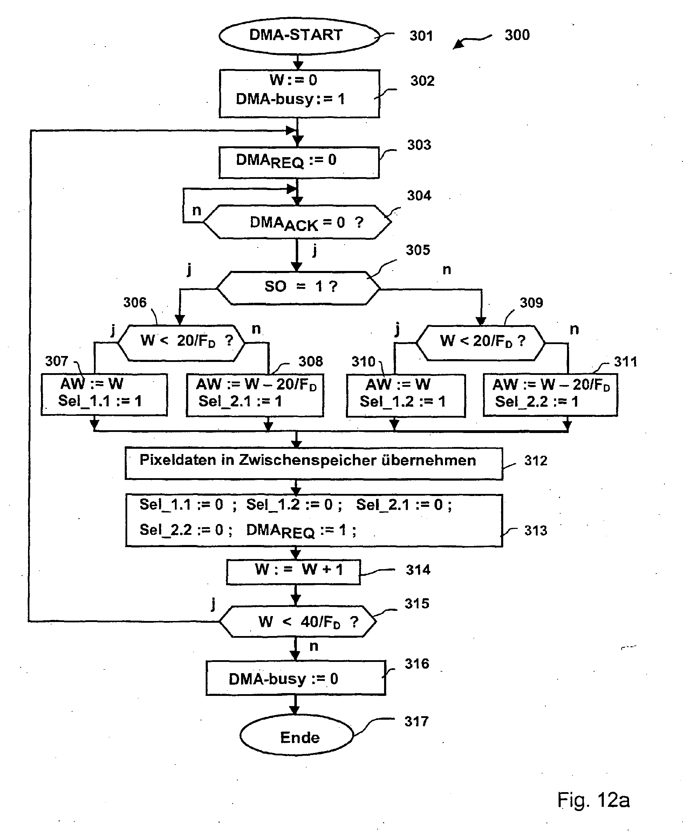

F_{D}-Signale in Verbindung. Die SO- und F_{D}-, F_{A}-Signale werden erst beim Empfangen eines Druckbefehls erzeugt und die Druckauflösung ist durch den Parameter H als ein geradzahliger Komprimierungsfaktor (für F_{D} = F_{A} = 2 oder 4) vorgegeben, der dem Quotienten aus der Anzahl der Datenworte für Hochauflösung pro Anzahl der Datenworten für Niedrigauflösung entspricht. Wenn wahlweise mit verschiedenen Komprimierungsfaktoren vorzugsweise H = 2 oder 4 für Niedrigauflösung gearbeitet wird, kann ein 3 bit breites F_{D}-Signal gebildet und zur DMA-Steuerung 43 bzw ein F_{A}-Signal mit 3 bit gebildet und zum Adressengenerator 44 übermittelt werden. Anderenfalls, wenn ausschließlich mit F = 2 für Niedrigauflösung gearbeitet wird, muss nur das Bit der niedrigsten Stelle ausgewertet werden. Ausgelöst durch den Druckbefehl wird von der Druckersteuerung 45 ein erstes Steuersignal DMA-start an die DMA-Steuerung 43 abgegeben, wobei letztere daraufhin ein Anforderungssignal DMA_{REQ} erzeugt und zum Mikroprozessor 6 sendet. Der Mikroprozessor verfügt über einen internen DMA-controller (nicht gezeigt), der bei einem direkten Speicherzugriff eine bestimmte Adresse an den Pixelspeicher (RAM) 7 anlegt, wodurch ein wortweises Übermitteln von binären Pixeldaten via BUS 5 an die Zwischenspeicher ermöglicht wird. Von der DMA-Steuerung 43 wird dazu ein Adressenschreibsignal AW an die Zwischenspeicher geliefert. Der Mikroprozessor 6 kann via DMA aus dem Pixelspeicher 7 beispielsweise ein 16 Bit breites Datenwort mit Pixeldaten auslesen und zur Druckdatensteuerungseinheit übermitteln. Der Mikroprozessor 6 sendet ein Bestätigungssignal DMA_{ACK} an die DMA-Steuerung 43, um die Generierung des Adressenschreibsignals AW in der DMA-Steuerung 43 mit dem DMA-Zyklus des Mikroprozessors 6 zu synchronisieren. Anhand der Figur 12a wird später der Ablauf der DMA-Steuerung 43 noch genauer erläutert.

Je DMA-Zyklus gelangt ein 16 Bit breites Datenwort mit binären Pixeldaten in einen Zwischenspeicher. Jeder der vier Zwischenspeicher kann nach je 20 DMA-Zyklen insgesamt 320 Bit zur weiteren Datenaufbereitung bereitstellen. Zur Erzielung einer Druckauflösung von 600 dpi werden je zwei der vier Zwischenspeicher für ein Einspeichern während der DMA-Zyklen benutzt. Beim wortweisen Einspeichern und Auslesen von Pixeldaten für den zweiten Druckkopf wechseln sich die beiden Zwischenspeicher 421 und 422 ab. Von der DMA-Steuerung 43 werden deshalb während der DMA-Zyklen ein erstes und ein zweites Auswahlsignal Sel_2.1 oder Sel_2.2 wechselweise zum wortweisen Einspeichern von Pixeldaten für den zweiten Druckkopf geliefert. Von der DMA-Steuerung 43 wird beispielsweise zum wechselweisen und wortweisen Einspeichern von Pixeldaten für den zweiten Druckkopf ein erstes Auswahlsignal Sel_2.1 und ein Adressenschreibsignal AW geliefert. Die für jede Druckbildspalte gewünschte Pixelanzahl erfordert maximal 40 Datenworte a 16 Bit in zwei von vier Zwischenspeichern zwischenzuspeichern. In der DMA-Steuerung 43 werden Schaltungsmittel zur Abgabe des zweiten Steuersignals DMA-busy und zur Realsierung mindestens eines Zyklenzählers für eine vorbestimmte Anzahl an 16 Bit-Datenwörtern vorgesehen.

Auf die gleiche - jedoch nicht näher gezeigten - Weise werden wortweise die binären Pixeldaten für den ersten Druckkopf via BUS 5 geliefert und liegen an einem entsprechenden Dateneingang des ersten und zweiten Zwischenspeichers 411 und 412 für Pixeldaten für den ersten Druckkopf an. Die - nicht detailliert gezeigte - erste Pixeldatenaufbereitungseinheit 41 für den ersten Druckkopf umfasst ebenfalls einen ersten und zweiten Zwischenspeicher 411 und 412, welche jeweils eingangsseitig an die niederwertigen 16 Bit des Datenbusses des Busses 5 angeschlossen sind. Das von der DMA-Steuerung 43 gelieferte Adressenschreibsignal AW liegt ebenfalls jeweils an einem separaten Adresseneingang des ersten und zweiten Zwischenspeichers 411 und 412 für Pixeldaten für den ersten Druckkopf an. Von der DMA-Steuerung 43 wird ein erstes Auswahlsignal Sel_1.1 für Pixeldaten für den ersten Druckkopf geliefert und liegt an einem separaten Steuereingang des ersten Zwischenspeichers 411 für Pixeldaten für den ersten Druckkopf an. Von der DMA-Steuerung 43 wird ein zweites Auswahlsignal Sel_1.2 für Pixeldaten für den ersten Druckkopf geliefert und liegt an einem separaten Steuereingang des zweiten Zwischenspeichers 412 für Pixeldaten für den ersten Druckkopf an.

Das vom Adressengenerator 44 gelieferte Adressenlesesignal AR liegt ebenso wieder an einem separaten Adresseneingang des ersten und zweiten Zwischenspeichers 411 und 412 für Pixeldaten für den ersten Druckkopf und an einem ersten Selektor 413 an. Die parallelen Datenausgänge des ersten und zweiten Zwischenspeichers 411 und 412 für Pixeldaten für den ersten Druckkopf liegen an einem ersten und zweiten Eingang des Selektors 413 an, der vom Adressengenerator 44 gesteuert an seinem Ausgang ein 14 Bit paralleles Datensignal an den parallelen Dateneingang eines Schieberegisters 414 für Pixeldaten für den ersten Druckkopf liefert. Das Schieberegister 414 wird durch das Schiebetaktsignal SCL der Druckersteuerung 45 gesteuert und gibt ein serielles Datenausgangssignal Serial data out 1 aus.

Der Adressengenerator 44 weist Mittel zur Erzeugung eines zusätzlichen Adessensignal AS zur Umschaltung des Selektors 413 auf. Die Umschaltung wird solange aufrecherhalten, wie in dem Falle einer im Druckbild erforderlichen hohen Auflösung von der Druckersteuerung 45 ein HR-Signal (mit dem Wert "Eins") ausgegeben wird.

Die Druckersteuerung 45 gibt einen Schiebetakt SCL an das Schieberegister 414 für Pixeldaten für den ersten Druckkopf sowie Signale Latch und Print1 für die Steuerung des Pen Driver Boards 11 aus. Die Druckersteuerung 45 ist über eine Steuerleitung für die Ausgabe des Signals SO mit einem entsprechenden Steuereingang der DMA-Steuerung 43 und mit der Pixeldatenaufbereitungseinheit 41 verbunden.

Der Zyklenzähler der DMA-Steuerung 43 ist ein Wortzähler für eine vorbestimmte Anzahl an 16 Bit-Datenworten, der durch ein DMA-start-Signal gestartet wird. Die DMA-Steuerung ist beispielsweise Bestandteil einer anwendungsspezifischen Schaltung (ASIC), wobei der Zyklenzähler einerseits mit den vorgenannten Mitteln zur Generierung und Ausgabe von Adressenschreibsignalen AW und andererseits mit Mitteln zur Generierung und Ausgabe von Auswahlsignalen verbunden ist, wobei die letzteren - in nicht gezeigter Weise - mindestens ein Ausgabemittel und Vergleichsmittel aufweisen. Beispielsweise steuert ein erstes Vergleichsmittel die Ausgabemittel in Abhängigkeit vom SO-Signal an, um bis zum Erreichen einer ersten vorbestimmten Anzahl an 16 Bit-Datenworten ein für die erste Pixeldatenaufbereitungseinheit 41 bestimmtes Auswahlsignal Sel_1.1 oder Sel_1.2 und um nach dem Erreichen der ersten vorbestimmten Anzahl an 16 Bit-Datenworten ein für die zweite Pixeldatenaufbereitungseinheit 42 bestimmtes Auswahlsignal Sel_2.1 oder Sel_2.2 auszugeben. Nach dem Erreichen einer zweiten vorbestimmten Anzahl von 40 _{*} 16 Bit-Datenworten wird von dem ersten oder einem zweiten Vergleichsmittel ein Signal, das am Zyklenzähler anliegt, um das Zählen von DMA-Zyklen zu beenden. Aus dem Signal wird ein DMA-busy-Signal mit dem Wert 'Null' erzeugt und über ein Register ausgegeben.

Während die Pixeldaten für einen Datenstring per direkten Speicherzugriff (DMA) in die jeweils ersten Zwischenspeicher 411 und 421 geladen und dort zwischen gespeichert werden, können die jeweils zweiten Zwischenspeicher 412 und 422 ausgelesen werden. Mittels des speziellen Adressengenerators 44 und den Selektoren 413, 423 werden die binären Pixeldaten aus diesen Zwischenspeichern in der von den Druckköpfen benötigten Reihenfolge ausgelesen, gruppenweise gesammelt und anschließend mittels Schieberegister 414, 424 seriell zu den beiden Druckköpfen übertragen. Mindestens eine halbe Druckbildspalte wird von dem ersten Druckkopf und mindestens eine andere halbe Druckbildspalte wird von dem zweiten Druckkopf gedruckt.

Durch diese Lösung können binäre Pixeldaten im Pixelspeicher in einer optimalen Ordnung gespeichert vorliegen, die den Mikroprozessor bei der Druckbildänderung entlastet. Durch die Datenübertragung per DMA wird der Mikroprozessor ebenfalls entlastet.

In der Druckersteuerung 45 ist ein Datenstringzähler realisiert (nicht näher gezeigt), wobei jeder Datenstring maximal die oben genannte Anzahl von 40 _{*} 16 Bit-Datenwörtern aufweist. Nachdem die aus einem Datenstring entnommenen und aufbereiteten binären Pixeldaten gedruckt worden sind, wird beim Auftreten der LH-Flanke des Encodertaktes der Datenstringzähler inkrementiert. Wenn ein vorgegebener Grenzwert U erreicht ist, wird das Drucken des Druckbildes beendet.

Es ist vorgesehen, dass die Druckersteuerung 45, die DMA-Steuerung 43, der Adressengenerator 44 und die Pixeldatenaufbereitungseinheit 41, 42 mit Mitteln zur Umschaltung der vertikalen Auflösung des Druckbildes ausgestattet sind. Die Druckersteuerung 45 ist steuerungsmäßig mit der DMA-Steuerung 43 verbunden, um mindestens ein F_{D}-Signal über eine Steuerleitung 46 zu liefern, welches eine Information über die vertikale Auflösung liefert. Der Anfangswert H für das F_{D}-Signal wird vom Mikroprozessor 6 via Datenbus 5 in ein Register der Druckersteuerung 45 geschrieben. Das F_{D}-Signals wird geändert, wenn von einem Datenstringzähler ein Sollwert S erreicht wird, der einer vorbestimmten Position s im Abstand von Druckbildanfang entspricht. Wird das F_{D}-Signal mit dem Wert "Eins" zur DMA-Steuerung 43 übermittelt, wird der maximale Wortzählersollwert eingestellt. Anderenfalls können alle Wortzählersollwerte halbiert (Fig. 12) bzw. in vorbestimmter Weise verringert werden. Die Anzahl der DMA-Zyklen und damit die BUS-Last ist dadurch reduziert und der CPU steht noch mehr Zeit zur Programmabarbeitung zur Verfügung. Bei einer Änderung variabler Druckbildelemente müssen durch die CPU weniger Daten zwischen den Frankierungen geändert werden. Dadurch wird die benötigte Rechenzeit reduziert. Gegebenenfalls entfallen zusätzliche Speicherbausteine, was die Herstellungskosten der Maschine reduziert.

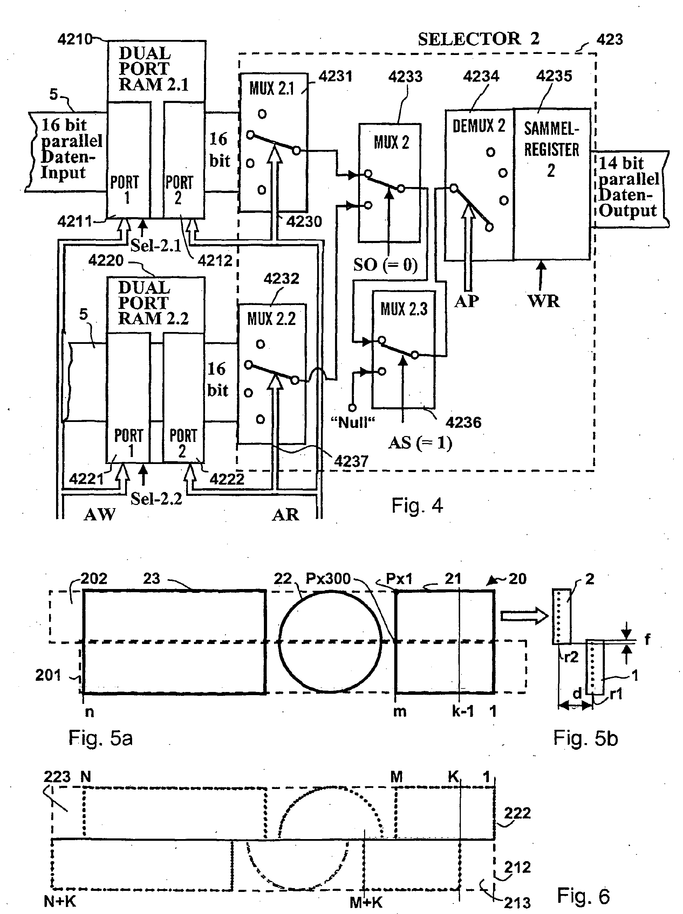

In der Figur 4 ist die Pixeldatenaufbereitungseinheit für den zweiten Druckkopf detallierter dargestellt. Die ersten und zweiten Zwischenspeicher 421 und 422 für Pixeldaten für den zweiten Druckkopf sind beispielsweise als Dualport-RAM's 4210 und 4220 realisiert. Letztere werden für das Einlesen der binären Pixeldaten ausgewählt, indem das von der DMA-Steuerung gelieferte erste bzw. zweite Auswahlsignal Sel_2.1 bzw. Sel_2.2 an einem separaten Steuereingang des jeweils ersten Ports 4211 bzw. 4221 des ersten bzw. zweiten Dualport-RAM's 4210 bzw. 4220 anliegt. An den jeweiligen ersten Ports 4211 bzw. 4221 liegt ein Adressenschreibsignal AW beim Einlesen von Pixeldaten an. Die zuvor eingelesenen Bits werden anschließend beispielsweise aus dem ersten bzw. zweiten Dualport-RAM 4210 bzw. 4220 ausgelesen. Dafür wird am zweiten Port 4212 bzw. 4222 der höherwertige Teil eines Adressenlesesignals AR angelegt, wobei der letztere vom speziellen Adressengenerator 44 geliefert wird. Nachfolgend wird beschrieben, wie die Bits in eine vom zweiten Druckkopf benötigten Reihenfolge gebracht werden. Ein nachgeschalteter zweiter Selektor 423 wählt mittels eines ersten Multiplexers 4231 aus den 16 Bit ein einzelnes Bit der binären Pixeldaten aus, wenn an seinem Adresseneingang 4230 der niederwertige Teil des Adressenlesesignals AR anliegt, welches ebenfalls vom speziellen Adressengenerator 44 geliefert wird. Der dem ersten Dualport-RAM 4210 nachgeschaltete erste Multiplexer 4231 ist ausgangsseitig mit einem ersten Dateneingang eines dritten Multiplexers 4233 und ein dem zweiten Dualport-RAM 4220 nachgeschalteter zweiter Multiplexer 4232 ist ausgangsseitig mit einem zweiten Dateneingang des dritten Multiplexers 4233 verbunden.

Der zweite Multiplexer 4232 hat einen Adresseneingang 4237 für den niederwertigen Teil des Adressenlesesignals AR.

Am Steuereingang des dritten Multiplexers 4233 liegt ein Umschaltsignal SO an, so dass beispielsweise das vorgenannte einzelne Bit der binären Pixeldaten ausgegeben wird und über einen vierten Multiplexer 4236 am Dateneingang eines nachgeschalteten Demultiplexers 4234 anliegt.

Durch ein Steuersignal AS mit dem Wert 'Eins' ist der erste Eingang des vierten Multiplexers 4236 auf Durchgang geschaltet. Anderenfalls wird durch ein Steuersignal AS mit dem Wert 'Null' dieser Durchgang durch den vierten Multiplexer 4236 unterbrochen und vom zweiten Eingang des vierten Multiplexers 4236 wird ein Spannungspotential mit dem Wert 'Null' über den Ausgang des vierten Multiplexers 4236 auf den Dateneingang des nachgeschalteten Demultiplexers 4234 durchgeschaltet. Beispielsweise werden die Düsen von einer der zwei Düsenreihen eines Tintendruckkopfes dem vorgenannten Spannungspotential entsprechend und die Düsen der anderen Düsenreihe mit den in der vorgenannten Weise selektierten variablen Werten aus dem Zwischenspeicher entsprechend angesteuert. Die Auflösung kann somit mindestens halbiert werden.

Dem Demultiplexer 4234 ist ein rücksetzbares Sammelregister 4235 für binäre Pixeldaten nachgeschaltet, welches einen 14 Bit parallelen Datenausgang aufweist. Das vorgenannte einzelne Bit der binären Pixeldaten wird in das Sammelregister 4235 übernommen, wenn ein Schreibsignal WR an einem Steuereingang des Sammelregisters 4235 angelegt wird. Dem Demultiplexer 4234 wird eine primitive Adresse AP zugeführt, welche den Speicherplatz des Bits im Sammelregister 4235 einstellt und somit letztendlich die Reihenfolge festlegt, an welcher Stelle das Bit im Datenstrom steht, der seriell zum Pen Driver Board 12 übermittelt wird. Das vorgenannte Sammelregister erzeugt an seinem parallelen Datenausgang nacheinander Gruppen von 14 Bit Binärdaten, die zur Treibereinheit (Pen-Driver-Board) des ½ Zoll Tintenstrahldruckkopfes übermittelt werden.

Außerdem kann über das Schieberegister - in nicht gezeigter Weise-ebenso die zugehörige Primitivadresse zur Treibereinheit übermittelt werden. Nach Übermittlung einer 22. Datengruppe sind alle der 300 binären Pixeldaten übermittelt, welche ein ½ Zoll Tintenstrahldruckkopf zum Drucken benötigt. Die andere Hälfte des Druckbildes wird von dem ersten Druckkopf gedruckt. Die Pixeldatenaufbereitungseinheit für den ersten Druckkopf ist in gleichartiger Weise aufgebaut. Die gesamte Druckdatensteuerung kann vorzugsweise mit einer anwendungsspezifischen Schaltung (ASIC) bzw. programmierbaren Logik.

In der Figur 5a ist ein Druckbild von einer Frankiermaschine mit zwei Druckköpfen vereinfacht dargestellt. Das vereinfachte Druckbild 20 weist ein Frankierstempelbild 21, ein Poststempelbild 22 und ein Werbestempelbild 23 auf, die bei Bewegung eines Frankiergutes (nicht gezeigt) in Transportrichtung (weisser Pfeil) nacheinander gedruckt werden. Das Druckbild 20 ist in zwei parallel liegende Bereiche 201 und 202 aufgeteilt, die orthogonal zur Frankierguttransportrichtung angeordnet sind, wobei der Druckkopf 1 nur den Bereich 201 und der Druckkopf 2 nur den Bereich 202 bedruckt, wenn das Frankiergut in Transportrichtung bewegt wird. Jeder der zwei Bereiche 201 und 202 ist ein Druckhalbbild des Druckbildes, dass durch orthogonal zur Frankierguttransportrichtung angeordnete gemeinsame Druckbildspalten 1 bis n geschnitten wird.

Die Figur 5b zeigt die Anordnung der zwei Druckköpfe zum Drucken des Druckbildes auf eine Oberfläche eines Poststückes, welches relativ zu den Druckköpfen in Transportrichtung (weisser Pfeil) bewegt wird. Die Düsenreihen r1, r2 der beiden Druckköpfe 1 und 2 sind um eine Distanz d zueinander in Transportrichtung versetzt und überlappen in Druckbildspaltenrichtung auf einer Strecke f. Die Distanz d entspricht einer Anzahl von k Druckbildspalten. In den Druckbereich des zweiten Druckkopfes 2 läuft zuerst eine Poststückoberfläche ein, auf welcher eine erste Anzahl an Druckbildspalten 1 bis k-1 des Bereiches 202 gedruckt wird. Durch den ersten Druckkopf 1 wird die erste Druckbildspalte zum gleichen Zeitpunkt gedruckt, wenn bereits die k-te Druckbildspalte durch den zweiten Druckkopf 2 gedruckt wird. Dieser Versatz wird bei der Anordnung binärer Pixeldaten im Pixelspeicher berücksichtigt.

Die Figur 6 zeigt eine Darstellung von Pixeldaten für zwei Druckhalbbilder, die im Pixelspeicher gespeichert sind, wobei jeweils ein Druckhalbbild zum Drucken durch einen Druckkopf vorgesehen ist und im Pixelspeicher völlig unverzerrt wiedergespiegelt wird. Nur die Pixeldaten mit dem Datenwert Eins sind als farbiger Punkt dargestellt. Die Pixeldaten mit dem Datenwert Null sind als weisser Punkt dargestellt. Vereinfachend wird angenommen, alle Düsen eines Druckkopfes lägen in einer einzigen Reihe, welche parallel zu einer Druckbildspalte ausgerichtet ist. Die Darstellung von Pixeldaten für das erste Druckhalbbild beginnt in der Position 1. Die betreffenden Pixeldaten für ein vereinfachtes Druckbild liegen für zwei Druckhalbbilder vor und sind um einen Abstand K versetzt abgebildet, wobei ein erster Bereich 212 einer Darstellung von Pixeldaten für die untere Hälfte des Druckbildes mit dem Datenwert Null für Pixeldaten im Vorspann 213 beginnt und ein zweiter Bereich 222 einer Darstellung von Pixeldaten für die obere Hälfte des Druckbildes mit dem Datenwert Null für Pixeldaten im Nachspann 223 endet. Beide, d.h. der Vorspann und Nachspann kennzeichnen den vorgenannten Versatz, der im Adressenraum des Pixelspeichers zu berücksichtigen ist. Aufgrund des Versatzes beginnt die Darstellung von Pixeldaten für das zweite Druckhalbbild, welches der unteren Hälfte des Druckbildes entspricht, erst in der Position K. Eine erste Anzahl binärer Pixeldaten liegen in der Darstellung von Pixeldaten in einer Position M auf einer Linie, welche der Position der Druckbildspalte m im zweiten Druckbildbereich 202 gemäß Fig.5a entspricht. Eine zweite Anzahl binärer Pixeldaten liegen in der Darstellung von Pixeldaten in einer Position M+K, d.h. auf einer anderen um K versetzten Position in einer Linie, welche die Druckbildspalte m im ersten Druckbildbereich 201 gemäß Fig.5a widerspiegelt.

Wenn je Druckkopf zwei Düsenreihen oder mehr existieren, wobei die Düsen unterschiedlicher Düsenreihen zueinander versetzt (interlaced) sind, kann ein Druckbild mit einer verdoppelten oder größeren Anzahl an Pixeln gedruckt werden. Im Pixelspeicher sind dann die zusätzlichen binären Daten in einer geeigneten Ordnung zu speichern, die eine leichte Änderung von Bildelementen erlaubt.

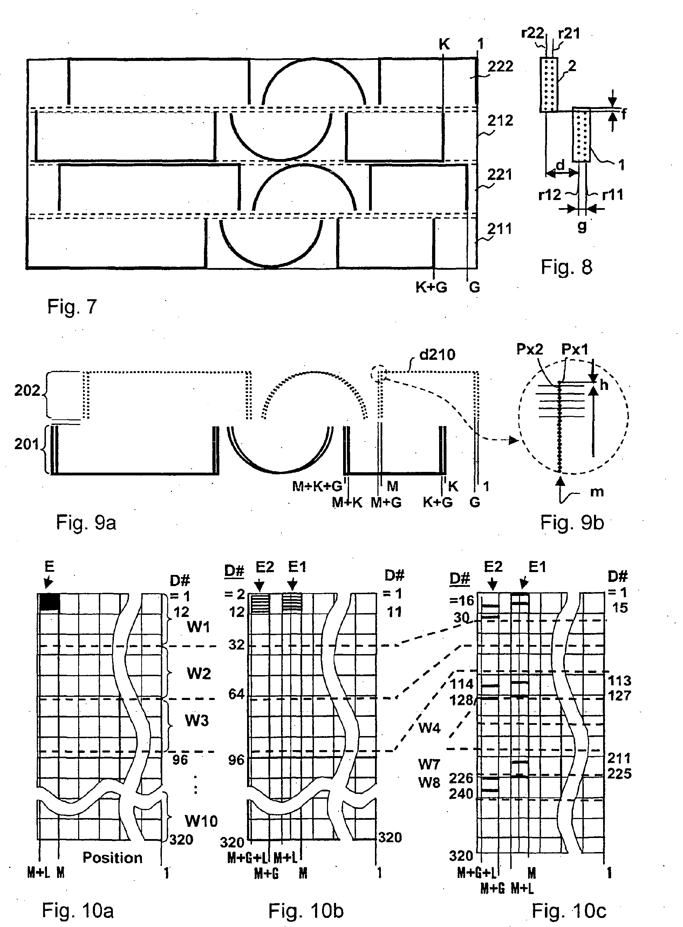

Die Figur 7 zeigt eine Darstellung von Pixeldaten für vier Druckhalbbilder im Pixelspeicher. Aus Platzgründen und der Anschaulichkeit halber wurden die vier Druckhalbbilder untereinander gezeichnet dargestellt. In der Praxis sind die Pixeldaten für eine Druckbildspalte besispielsweise in vier aufeinander folgenden Speicherbereichen angeordnet. In der Darstellung sind beispielsweise ein erster Bereich 212 und ein zweiter Bereich 222 für die binären Pixeldaten für die jeweils zweiten Düsenreihen je Druckkopf sowie ein dritter Bereich 221 und ein vierter Bereich 211 für die zusätzlichen binären Pixeldaten für die jeweils ersten Düsenreihen je Druckkopf vorgesehen. Die binären Pixeldaten der vier Druckhalbbilder mit dem Datenwert 'Eins' sind der Einfachheit halber mit einander verbunden als durchgezogene Linien gezeichnet. Bei dieser Widerspiegelung des Druckbildes durch die binären Pixeldaten bleibt die Gestalt der Bildelemente des Druckbildes erhalten.

In der Figur 8 ist eine Anordnung von zwei Druckköpfen zum Drucken eines Druckbildes mit einer verdoppelten Auflösung dargestellt. Jeder Druckkopf besitzt zwei Düsenreihen r11 und r12 bzw. r21 und r22, welche zueinander jeweils einen Abstand g einnehmen. Weiterhin ist eine orthogonal zur Transportrichtung gelegene Strecke f gezeigt, wo die Düsen im Randbereich der Düsenreihen von beiden Druckköpfen überlappen. Die jeweils ersten oder zweiten Düsenreihen der beiden Druckköpfe 1 und 2 liegen parallel zueinander. Beide Druckköpfe 1 und 2 sind in Transportrichtung mit einem Abstand d beabstandet. Bei einem postalischen ½ Zoll Inkjet-Druckkopf mit Bubble-jet-Technologie, der in einer Kartusche beispielsweise vom Typ HP 5165A der Firma Hewlett Packard angeordnet ist, liegen alle Düsen mit einer ungeraden Nummer in der Düsenreihe mit der ungeraden Nummer bzw. alle Düsen mit einer geraden Nummer liegen in der Düsenreihe mit der geraden Nummer.

Aufgrund des o.g. Versatzes d der Druckköpfe 1, 2 in Transportrichtung beginnt die - in der Figur 7 gezeigte - Darstellung von Pixeldaten für das durch die zweite Düsenreihe r12 des ersten Druckkopfes 1 zu druckende erste Druckhalbbild erst in der Position K.

Aufgrund des o.g. Versatzes der Düsenreihen r11, r12 bzw. r21, r22 jedes der Druckköpfe 1, 2 beginnt die - in der Figur 7 gezeigte - Darstellung von Pixeldaten für das durch die erste Düsenreihe r21 des zweiten Druckkopfes zu druckende dritte Druckhalbbild erst in der Position G.

Aufgrund des o.g. Versatzes der Druckköpfe in Transportrichtung und des des o.g. Versatzes der Düsenreihen jedes der Druckköpfe beginnt die - in der Figur 7 gezeigte - Darstellung von Pixeldaten für das durch die erste Düsenreihe r11 des ersten Druckkopfes zu druckende erste Druckhalbbild erst in der Position K+G.

Es sind weitere Ordnungen von Binärdaten im Pixelspeicher denkbar, die eine leichte Änderung von Bildelementen erlauben.

Die Figur 9a zeigt eine Darstellung von Pixeldaten für vier Druckhalbbilder im Pixelspeicher für eine bevorzugte Anordnung der Pixeldaten. Ein aus einer Anzahl von 20 aufeinanderfolgenden Datenwörtern mit jeweils 16 binären Pixeldaten bestehender Datenstring von binären Pixeldaten aus dem Pixelspeicher ergibt ein identisches Abbild der Pixel mit geraden Nummern einer ersten Druckbildspalte und der Pixel mit ungeraden Nummern einer zweiten Druckbildspalte, die auf ca. ½ Zoll Breite von einem Inkjet-Druckkopf mit zwei Düsenreihen gedruckt werden.

Ein Muster mit solchen spaltenweise angeordneten Datenstrings - wie in der Figur 9a gezeigt ist - ergibt somit ein identisches Abbild des durch einen Inkjet-Druckkopf mit ca. ½ Zoll Breite ausgedruckten Teiles des Frankierstempeldruckbildes. Die binären Pixeldaten, die von demselben Druckkopf gedruckt werden, liegen in ein und demselben Bereich 201 bzw. 202 und sind in benachbarten spaltenweise angeordneten Datenstrings dargestellt. In beiden Bereichen gilt die gleiche oben genannte Ordnung der Datenstrings. Die binären Pixeldaten für Druckhalbbilder, die unterschiedlichen Düsenreihen desselben Druckkopfes zuordenbar sind, werden in der Darstellung in ein und demselben Bereich 201 bzw. 202 in zueinander versetzten Positionen angeordnet, d.h. die binären Pixeldaten der Druckhalbbilder einer Hälfte des Druckbildes können im Pixelspeicher nacheinander verschachtelt angeordnet sein. Die Darstellung der binären Pixeldaten der jeweils zwei Druckhalbbilder für die beiden Düsenreihen desselben Druckkopfes ist in einem Bereich 202, der die obere Hälfte des Druckbildes widerspiegelt, gepunktet gezeichnet. Jeder Punkt soll ein binäres Pixeldatum mit den Datenwert 'Eins' widerspiegeln. Im Datenstring, der an der ersten Position dargestellt ist, liegen die binären Pixeldaten für die Düsen der Düsenreihe mit einer geraden Nummer oder die binären Pixeldaten für die Düsen mit einer geraden Nummer und haben zum Beispiel den Datenwert 'Eins'. Die binären Pixeldaten für die Düsen der Düsenreihe mit einer ungeraden Nummer oder für alle ungeraden Nummern der Düsen, die im Datenstring liegen, der an der ersten Position dargestellt ist, haben zum Beispiel den Datenwert 'Null'.

Im Datenstring, der an der Position G dargestellt ist, liegen die binären Pixeldaten für die Düsen der Düsenreihe mit einer ungeraden Nummer oder die binären Pixeldaten für die Düsen mit einer ungeraden Nummer und haben zum Beispiel den Datenwert 'Eins'. Die binären Pixeldaten für die Düsen der Düsenreihe mit einer geraden Nummer oder für alle Düsen mit einer geraden Nummer, die im Datenstring liegen, welcher an der Position G dargestellt ist, haben zum Beispiel den Datenwert 'Null'. Die binären Pixeldaten d210 des Rahmens des Frankierstempelbildes sind für jeweils zwei Druckhalbbilder zwar in zueinander versetzten Positionen (zum Beispiel M und M+G) gespeichert aber werden beim Drucken einer Druckbildspalte (zum Beispiel m) als zwei in idealer Weise übereinanderliegenden Reihen an Pixeln zu unterschiedlichen Zeitpunkten ausgedruckt, so dass beide nach dem Drucken praktisch eine einzige Linie in Druckbildspaltenrichtung ergeben. Nur zur Unterscheidung der Wiederspiegelung der unteren Hälfte des Druckbildes wurde in einem weiteren Bereich 201 der Figur 9a eine durchgezogene dicke Linie verwendet, um auch die binären Pixeldaten der jeweils zwei Druckhalbbilder für die beiden Düsenreihen des anderen Druckkopfes als einfaches Muster darzustellen.

In der Darstellung zum spaltenweisen Druck von Pixeln von Figur 9b ist eine Druckbildspalte m gezeigt, in welche beide oben genannte Reihen an Pixeln fallen. Dabei wird von einer ersten Düsenreihe r1 ein erster Pixel Px1 und von einer zweiten Düsenreihe r2 ein erster Pixel Px2 gedruckt, welcher orthogonal zur Transportrichtung einen Abstand h aufweisen. Für eine solche Druckbildspalte existieren im Pixelspeicher Datenworte mit binären Pixeldaten für Düsen mit ungeraden bzw. geraden Nummern. Je Datenwort sind 32 Bit gespeichert. Diesen Datenworten sind jeweils Adressen zugeordnet.

Die Figur 10a zeigt eine Darstellung der binären Pixeldaten eines Bildelementes für eine Anordnung von zwei Druckköpfen mit jeweils nur einer Düsenreihe, entsprechend der Fig.5b. Die binären Pixeldaten sind in einem Teilbereich des Pixelspeichers gespeichert. Für eine Abbildung E eines Bildelements sind diejenigen binären Pixeldaten als schwarze Bildpunkte dargestellt, welche den Wert 'Eins' haben. Der Wert 'Null' wird nicht farbig dargestellt. Zehn Datenworte W1 bis W10 von jeweils 32 Bit Binärdaten bilden einen Datenstring mit binären Pixeldaten, die zum Drucken einer Druckbildspalte mit einer Düsenreihe erforderlich sind. Eine erster Datenstring von 320 binären Pixeldaten ist rechts in der Fig.10a mittels weissen Punkten dargestellt, die in der Position 1 auf einer Reihe liegen. Die binären Pixeldaten des ersten Datenstrings sind von der Datennummer D# = 1 bis zur Datennummer D# = 320 durchnummeriert und haben den Wert'Null'.

Aus Platzgründen endet die Darstellung mit einem Datenstring auf der Position M+L und es wurde nur ein mit den jeweils ersten drei Datenwörtern W1, W2 und W3 eines Datenstrings ansprechbarer Bereich zusammenhängend dargestellt, mit welchen nur ca. ein Drittel der für 300 Düsen erforderlichen binären Pixeldaten ansprechbar ist. Das soll aber keine Begrenzung für eine Darstellung von Datenstrings bedeuten. Eine praktische Begrenzung ergibt sich nur aus der maximalen Anzahl an Datenworten. Welche in einem Pixelspeicher speicherbar sind. Die in der Darstellung verwendete Nummerierung der binären Pixeldaten entspricht der Nummerierung der Düsen in einer Düsenreihe und beginnt für jeden Datenstring mit der Nummer Eins in der ersten Gruppe. Die Nummerierung der binären Pixeldaten der zehnten Gruppe endet jeweils mit der Nummer 320. Das wiederholt sich für jeden Datenstring bis die Position M erreicht ist. Wie bereits anhand der - in der Figur 6 gezeigten - Anordnung von binären Pixeldaten für zwei Druckhalbbilder im Pixelspeicher erläutert wurde, kann bereits das Bildelement E mittels eines ersten Datenwortes W1 adressiert werden. Das wiederholt sich bis zur Position M+L und somit ergibt sich, weil ein jeder Binärwert 'Eins' als schwarzer Punkt dargestellt ist, die Abbildung E des Bildelementes als schwarzes Kästchen. Bei jeweils zwölf ersten binären Pixeldaten mit dem Wert 'Eins' für eine Anzahl Datenstrings von der Postion M bis zur Position M+L, wobei L gleich sechs sei, wird das vorgenannte schwarze Kästchen als 12 Pixel langes und 6 Pixel breites Pixelfeld mit einer Auflösung von 600 * 300 dpi durch einen der beiden Druckköpfe mit einer einzigen Düsenreihe gedruckt. Ein Datamatrixcode hat beispielsweise 48 x 48 Bildelemente.

Da solche Tintenstrahldruckköpfe mit nur einer Düsenreihe und mit der erforderlichen Auflösung nicht immer verfügbar sind, bezieht sich die Darstellung in der Figur 10b auf handelsübliche postalische ½ Zoll Tintenkartuschen vom Typ HP51645A der Firma Hewlett Packard. Letztere weisen zwei Düsenreihen pro Tintenstrahldruckkopf auf. Mit zwei Tintenstrahldruckköpfe solcher Art - in der in Fig.8 gezeigten Anordnung-wird zum Beispiel auf einem 1 Zoll breiten Streifen ein Abdruck mit einer Auflösung von 300 dpi in Transportrichtung und mit einer Auflösung von 600 dpi im orthogonaler Richtung zur letzteren ermöglicht.

Die Figur 10b zeigt eine Darstellung der binären Pixeldaten eines Bildelementes, das vorteilhaft aufgeteilt im Pixelspeicher gespeichert ist. Die binären Pixeldaten eines Bildelementes für die Düsen mit einer geraden Nummer D# und für die Düsen mit einer ungeraden Nummer D# liegen in unterschiedlichen Datenstrings immer im gleichrangigen Datenwort.

Die binären Pixeldaten mit dem Datenwert 'Eins' für die Düsen der Düsenreihe mit einer geraden bzw. ungeraden Nummer oder anders gesagt, für die ungeraden bzw. geraden Nummern der Düsen, bilden jeweils eine Abbildung E1 bzw. E2 des Bildelementes. Im vorliegenden Beispiel liegen beide Abbildungen im jeweils ersten Datenwort von unterschiedlichen Datenstrings. Die binären Pixeldaten mit dem Datenwert 'Eins' für die Düsen der Düsenreihe mit einer geraden bzw. ungeraden Nummer oder anders gesagt, für die ungeraden bzw. geraden Nummern der Düsen, liegen in Datenstrings auf der Position M ≤ E1 ≤ Position M+L bzw. auf der Position M+G ≤ E2 ≤ Position M+G+L. Die binären Pixeldaten mit dem Datenwert 'Eins' und mit der gleichen Datennummer von unmittelbar benachbarten Datenstrings wurden nur zur Verdeutlichung nicht als Punkt, sondern als dicker schwarzer Strich dargestellt.

Aus Platzgründen ist wieder nur ein mit den jeweils ersten drei Datenwörtern W1, W2 und W3 eines Datenstrings ansprechbarer Bereich zusammenhängend dargestellt worden, was für eine Darstellung der binären Pixeldaten der Abbildungen E1, E2 des Bildelementes ausreicht.

Die gespeicherten binären Pixeldaten eines Bildelementes liegen bei beiden Darstellungen der Figuren 10a und 10b jeweils innerhalb eines 32 Bit-Datenwortes W1. In vorteilhafter Weise müssen keine weiteren 32 Bit-Datenwörter aufgerufen werden, insbesondere wenn variable Bildelemente von Abdruck zu Abdruck geändert werden. Damit wird Rechenzeit des Mikroprozessors eingespart. Vorzugsweise wird also im Pixelspeicher eine Ordnung organisiert, die bereits in Verbindung mit der Fig.9a erläutert wurde und die es ermöglicht, die Anzahl an Datenworten zu reduzieren, die vom Mikroprozessor aufgerufen werden müssen, um ein Bildelement zu ändern.

Die Figur 10c zeigt eine Darstellung der in bekannter Weise gespeicherten binären Pixeldaten eines Bildelementes im Pixelspeicher, wobei die Pixeldaten im Pixelspeicher so angeordnet sind, dass diese beim Drucken nacheinander ausgelesen werden können. Zur Widerspiegelung des vorgenannten Bildelementes sind wieder eine Abbildung E2 von binären Pixeldaten mit geraden Datennummern D# und eine Abbildung E1 von binären Pixeldaten mit ungeraden Datennummern D# vorhanden, wobei die binären Pixeldaten mit dem Datenwert 'Eins' und mit der gleichen Datennummer als dicker schwarzer Strich dargestellt sind. Im Unterschied zu den - in den Figuren 10a und b gezeigten - Darstellungen haben die geraden Datennummern D# und ungeraden Datennummern D# der gespeicherten binären Pixeldaten in der Darstellung nach Figur 10c nicht mehr die gleichen Nummen, wie die angesteuerten zugeordneten Düsen eines Druckkopfes. Die Datennummern D# = 0 bis 240 wurde zur Verdeutlichung der Binärdaten angegeben, die für ein Abdrucken des vorgenannten Bildelementes benutzt werden. Das Bildelement wird von den zugehörigen Düsen D1 bis D12 eines Druckkopfes ausgedruckt. Nun mußte aus Platzgründen der Maßstab in der Darstellung verkleinert werden, um den erhöhten Aufwand beim Zugriff auf die gespeicherten binären Pixeldaten zu verdeutlichen, auf welche der Mikroprozessor bei einer Änderung nur eines Bildelementes im Druckbild zugreifen muß. Der erhöhte Aufwand wird durch die weit auseinander liegenden Datenwörter W1, W4, W7 und W8 verursacht. Es ist klar, dass die Rechenzeit des Mikroprozessors größer ist, wenn die gespeicherten binären Pixeldaten eines Bildelementes nach einem komplizierten Muster verteilt sind bzw. weit auseinander in nicht gleichrangigen Datenwörtern liegen, so dass viele Schritte erforderlich sind, um eine Änderung eines Bildelementes oder im Muster des Druckbildes durchzuführen.

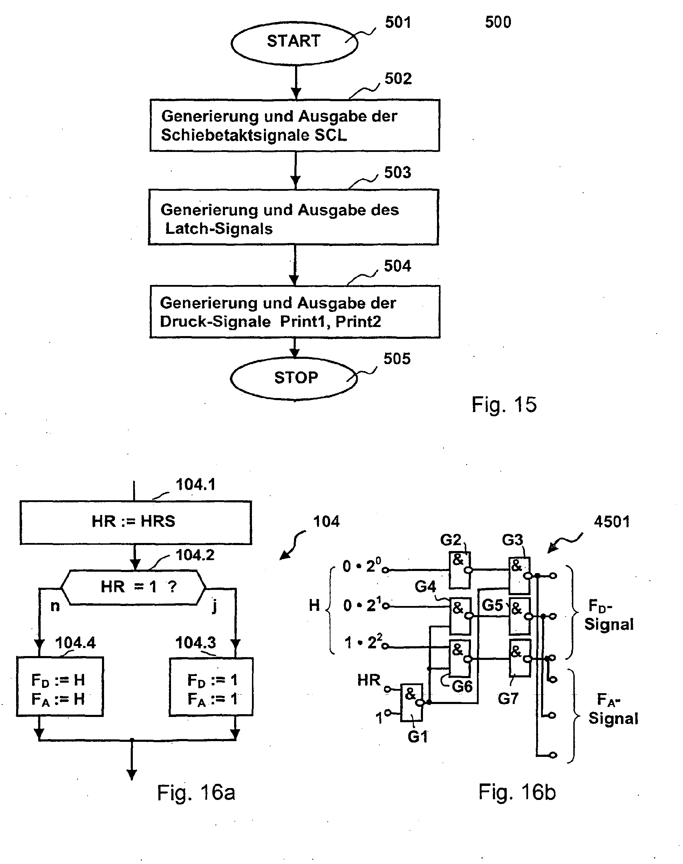

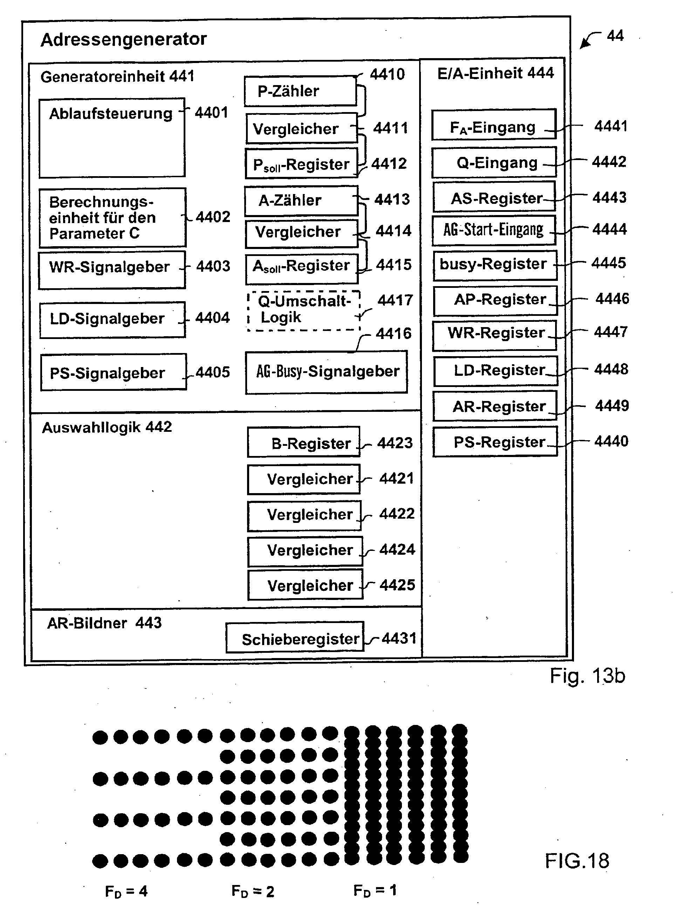

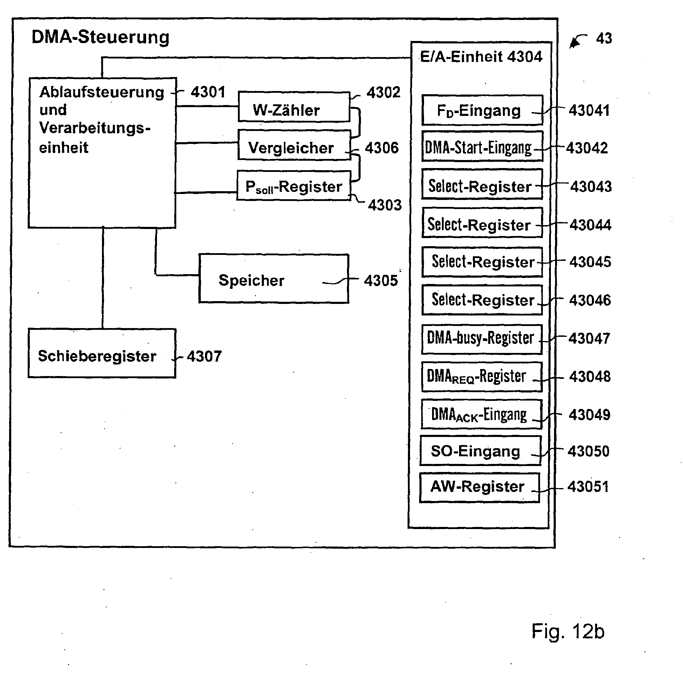

Die Figur 11 zeigt einen Flußplan zur Ablaufsteuerung der Druckersteuerung. Nach dem Einschalten im Schritt 101 wird ein Schritt 102 erreicht und in der Routine 100 der Ablaufsteuerung werden alle Auswahlsignale Sel_1.1, Sel_1.2, Sel_2.1, Sel_2.2 auf den Wert 'Null' gesetzt. In einem folgenden ersten Abfrageschritt 103 wird nun ein via BUS 5 übermitteltes Datenwort hinsichtlich des Auftretens eines Befehls zum Druckstart ausgewertet. Ist der letztere noch nicht erteilt worden, dann wird in eine Warteschleife verzweigt. Andererseits erfolgt nach dem Druckstart in einem Schritt 104 ein Setzen des Datenstringzählwertes V auf den Anfangswert 'Null'. Ein binäres Umschaltsignal SO wird auf den Wert 'Eins' gesetzt. Es wird weiterhin eine zwischen zwei Werten umschaltbare HR-Variable auf einen Anfangswert HRS gesetzt, der in einem Register der Drucksteuerung vorliegt. Im Schritt 104 werden der HR-Anfangswert und daraus abgeleitete Komprimierungs- bzw. Dekomprimierungsfaktoren F_{D} bzw. F_{A} in Registern der Druckersteuerung gespeichert, was anhand der Figuren 16a, b noch genauer erläutert wird. Entsprechend dem, anhand der Figur 1d erörterten, Beispiel seien HR := 0 bei einem Komprimierungsfaktor von F_{D} = 2. Die entsprechenden Register mit den F_{D} bzw. F_{A}-Variablen werden in den Subroutinen 106 und 112 bzw. 110 abgefragt.

In einem zweiten Abfrageschritt 105 wird nun das Encodersignal e hinsichtlich des Auftretens einer LH-Flanke ausgewertet. Ist die letztere noch nicht aufgetreten, dann wird in eine Warteschleife verzweigt. Andererseits wird in einem Schritt 106 ein Signal DMA-Start ausgegeben und eine Subroutine 300 gestartet, welche bestimmte Auswahlsignale Sel_1.1, Sel_1.2, Sel_2.1 oder Sel_2.2 auf den Wert 'Eins' setzt, um die binären Pixeldaten in die Zwischenspeicher der Pixeldatenaufbereitungseinheiten 41 und 42 zu übernehmen, was anhand der Figur 12 später noch genauer erläutet wird.

In einem dritten Abfrageschritt 107 wird nun das DMA-busy-Signal hinsichtlich dessen ausgewertet, ob es auf den Wert 'Null' gesetzt worden ist. Ist das letztere noch nicht der Fall, dann wird in eine Warteschleife verzweigt. Ist jedoch das DMA-busy-Signal auf den Wert 'Null' gesetzt worden, dann wird ein vierter Abfrageschritt 108 erreicht, in welchem das Encodersignal hinsichtlich des Auftretens einer LH-Flanke ausgewertet wird. Ist die letztere noch nicht aufgetreten, dann wird in eine Warteschleife verzweigt. Andererseits wird in einem Schritt 109 das Umschaltsignal SO logisch negiert und dann ausgegeben. Anschließend wird im Schritt 110 der Adressengenerator aktiviert und eine Subroutine 400 gestartet, welche für die Pixeldatenaufbereitungseinheiten 41 und 42 bestimmte Leseadressen AR und Steuerungssignale, wie das zusätzliche Adressensignal AS, die Primitivadresse AP, das Schreibsignal WR und ein Ladesignal LD erzeugt. Im fünften Abfrageschritt 111 wird der Datenstringzählwert V abgefragt, ob letzterer den Sollwert S erreicht hat. Das entspricht einer Position s im Druckbild, der der Sollwert S zugeordnet ist (Figur 1e). Zum Schritt 112 wird verzweigt, wenn der Datenstringzählwert V den Sollwert S noch nicht erreicht hat. Im Schritt 112 wird ein DMA-Start-Signal ausgegeben und die DMA-Steuerung aktiviert, zum erneuten Starten der vorgenannten Subroutine 300. Die DMA-Steuerung 43 und der Adressengenerator 44 arbeiten unabhängig von einander, d.h. beide Subroutinen 300 und 400 laufen parallel zueinander ab. In einem sechsten Abfrageschritt 113 wird ausgewertet, ob die DMA-Steuerung 43 und der Adressengenerator die Arbeit (Subroutine 400) beendet haben. Das ist der Fall, wenn beide das DMA-busy-Signal und das AG-busy-Signal auf den Wert 'Null' gesetzt worden sind. Ist das noch nicht der Fall, dann wird in eine Warteschleife verzweigt. Ist jedoch der Adressengenerator mit seiner Arbeit (Subroutine 400) fertig und das AG-busy-Signal ist auf den Wert 'Null' gesetzt worden, dann wird ein Schritt 114 erreicht. Im Schritt 114 wird der Datenstringzählwert inkrementiert V:= V + 1 und Faktor F_{A} gleich F_{D} gesetzt. Im nachfolgenden siebenten Abfrageschritt 115 wird ausgewertet, ob der Spaltenzählwert V einen Grenzwert U erreicht hat. Ist das noch nicht der Fall, dann wird auf den vierten Abfrageschritt 108 verzweigt. Anderenfalls wird auf den ersten Abfrageschritt 103 verzweigt und die Routine beginnt erneut, wenn im ersten Abfrageschritt 103 ein Druckstartbefehl festgestellt wird.

Wird im fünften Abfrageschritt 111 festgestellt, dass der Datenstringzählwert V den Sollwert S erreicht hat, dann wird auf einen achten Abfrageschritt 116 verzweigt, um das HR-Register auszuwerten und in einem nachfolgendem Schritt 117 oder 118 zu ändern. Wenn der bisherige Wert HR:= 0 nicht der Forderung HR = 1 entspricht, wird im Schritt 117 das HR-Register vom Wert HR := 0 auf den aktuellen Wert HR := 1 und das F_{D}-Register vom Wert F_{D} := 2 auf den aktuellen Wert auf F_{D} : = 1 gesetzt. Der Adressengenerator arbeitet dann mit einem Dekompressionsfaktor F_{A}, der sich im Wert vom Wert des Kompressionsfaktors F_{D} für den folgenden in die Zwischenspeicher zu ladenden Datenstring unterscheidet. Beispielsweise hat die F_{A}-Variable noch den Anfangswert F_{A} := 2, aber die F_{D}-Variable wurde schon auf den aktuellen Wert auf F_{D} : = 1 gesetzt. Nachdem beide der Adressengenerator 44 und die DMA-Steuerung 43 ihre Arbeit beendet haben, wird im Schritt 114 zusätzlich der Wert des Dekompressionsfaktors F_{A} auf den Wert des Kompressionsfaktors F_{D} gesetzt, bevor oder nachdem der Datenstringzählwert inkrementiert V:= V + 1 wird. Alternativ ist es möglich, dass von Anfang an das Druckbild mit Hochauflösung gedruckt wird und ab der Position s auf Niedrigauflösung umgeschaltet wird. Dann wird der Schritt 118 erreicht, wenn die Annahme der bisherige Anfangswert sei HR := 1 richtig war. im Schritt 118 wird die F_{D}-Variable von einem Wert, zum Beispiel F_{D} := 1, auf den aktuellen Wert auf F_{D} := H gesetzt, wobei der Wert von H = 2, 4, ... beträgt. Anschließend wird von den Schritten 117 oder 118 auf den Schritt 112 verzweigt, um ein DMA-start-Signal auszugeben.

Im Druckbild existiert ein Übergangsbereich, in welchem mit Hochauflösung gedruckt werden kann aber Niedrigauflösung simuliert wird. Im Flash 7 sind entsprechend ausgedünnte Duckbilddaten für Hochauflösung gespeichert. Der Mikroprozessor greift auf bereits entsprechend ausgedünnte Duckbilddaten zu, um die Datenstrings im Pixelspeicher 7 zu erzeugen oder zu ändern. Der Betrachter des in der Figur 1c gezeigten Druckbildes gewinnt deshalb nicht den Eindruck, dass im Druckbild die Auflösung bereits ab der Position s umgeschaltet wird. Diese frühe Umschaltung ist jedoch erforderlich, da bei der Generierung der binären Pixeldaten für das Druckbild einerseits der Versatz zwischen den beiden Düsenreihen einunddesselben Druckkopfes und andererseits der Versatz zwischen den beiden Druckköpfen beachtet werden muss, was aus der Figur 9a hervorgeht. Die Pixeldaten einer ungeraden Düsennummer liegen im Druckbild in einer anderen Druckspalte als die Pixeldaten mit einer geraden Düsennummer, obwohl die Pixeldaten zu einem Datenstring gehören und im gleichen Zeitabschnitt gemeinsam ausgedruckt werden. Im Druckbild werden die für den zweiten Duckkopf bestimmten Pixeldaten mit einer ungeraden und geraden Düsennummer, in zwei weiteren Druckspalten gedruckt. Im Übergangsbereich kann ein allmählicher Übergang im Druckbild zwischen Hoch- und Niedrigauflösung und umgekehrt erzeugt werden.

In der Figur 12a ist ein Flußplan zur DMA-Steuerung dargestellt. Eine solche Subroutine 300 wird aufgerufen, wenn von der Druckersteuerung 45 ein DMA-Startsignal an die DMA-Steuerung 43 ausgegeben wird (Schritt 301). In einem Schritt 302 der Subroutine 300 wird ein Wortzählwert W auf den Wert 'Null' gesetzt. Ein DMA-busy-Signal wird auf den Wert 'Eins' gesetzt und zur Druckersteuerung 45 übermittelt. In einem weiteren Schritt 303 der Subroutine 300 wird ein DMA-Anforderungssignal DMA_{REQ} mit einem Wert 'Null' an den Mikroprozessor 6 übermittelt. Letzterer übermittelt ein Quittungssignal DMA_{ACK} an die DMA-Steuerung 43. In einem ersten Abfrageschritt 304 der Subroutine 300 wird beim Nichtempfangen des Quittungssignals DMA_{ACK} mit einem Wert 'Null' in eine Warteschleife verzweigt. Vom ersten Abfrageschritt 304 der Subroutine 300 wird beim Empfangen des Quittungssignals DMA_{ACK} mit einem Wert 'Null' zu einem zweiten Abfrageschritt 305 weitergesprungen, wobei der Zustand des Umschaltsignals SO ermittelt wird. Hat das Umschaltsignal SO den Zustand gleich Eins, dann wird zu einem dritten Abfrageschritt 306 verzweigt. Anderenfalls hat das Umschaltsignal SO den Zustand gleich 'Null' und es wird zu einem vierten Abfrageschritt 309 verzweigt. Im dritten Abfrageschritt 306 wird geprüft, ob der Wortzähler einen Wert W kleiner als der Quotient von zwanzig geteilt durch F_{D} aufweist. Für diesen Fall (W < 20/F_{D}) wird auf einen Schritt 307 verzweigt. Im Schritt 307 wird das erste Auswahlsignal für den ersten Druckkopf Sel_1.1. auf den Wert 'Eins' umgeschaltet und das Adressenschreibsignal AW erhält den aktuellen Wert W des Wortzählers. Im nachfolgenden Schritt 312 werden die Pixeldaten in die Zwischenspeicher der Pixeldatenänderungseinheiten 41, 42 übernommen. Anschließend werden im Schritt 313 alle Auswahlsignale auf den Wert 'Null' umgeschaltet und ein DMA-Anforderungssignal DMA_{REQ} mit einem Wert 'Eins' an den Mikroprozessor 6 übermittelt.

Dann wird im Schritt 314 der Wortzählwert W mit dem Wert 'Eins' inkrementiert. In einem anschließenden Abfrageschritt 315 wird geprüft, ob der Wortzähler einen Wert W kleiner als der Quotient von vierzig geteilt durch F_{D} aufweist. Für diesen Fall, in welchem der Wortzähler einen solchen Wert W < 40/F_{D} aufweist, wird auf einen Schritt 303 zurückverzweigt.

Anderenfalls wird auf einen Schritt 316 verzweigt, um ein Signal DMA-busy mit dem Wert 'Null' auszugeben, bevor das Ende (Schritt 317) der Subroutine 300 erreicht ist. Anderenfalls, wenn also im dritten Abfrageschritt 306 festgestellt wird, dass der Wortzählwert W nicht kleiner als zwanzig geteilt durch F_{D} ist, dann wird auf einen Schritt 308 verzweigt, in welchem das erste Auswahlsignal für den zweiten Druckkopf Sel_2.1. auf den Wert 'Eins' umgeschaltet wird und das Adressenschreibsignal AW den um den Wert des Quotienten 'Zwanzig geteilt durch F_{D}' verminderten aktuellen Wert W des Wortzählers erhält. Im nachfolgenden Schritt 312 werden die Pixeldaten wieder in den Zwischenspeicher übernommen.

Im vorgenannten vierten Abfrageschritt 309 wird ebenfalls geprüft, ob der Wortzähler den vorbestimmten Wert W < 20/F_{D} aufweist, wobei zuvor im Abfrageschritt 305 festgestellt wurde, das binäre Umschaltsignal SO den Wert gleich Eins nicht aufweist. Wenn der Wortzähler den vorbestimmten Wert W < 20/F_{D} aufweist, dann wird im Schritt 310 das zweite Auswahlsignal für den ersten Druckkopf Sel_1.2. auf den Wert 'Eins' umgeschaltet und das Adressenschreibsignal AW erhält den aktuellen Wert W des Wortzählers. Im nachfolgenden Schritt 312 werden die Pixeldaten wieder in den Zwischenspeicher übernommen.

Anderenfalls, wenn der Wortzähler den vorbestimmten Wert W < 20/F_{D} nicht aufweist, wird vom vierten Abfrageschritt 309 auf einen Schritt 311 verzweigt, in welchem das zweite Auswahlsignal für den zweiten Druckkopf Sel_2.2 auf den Wert 'Eins' umgeschaltet wird und das Adressenschreibsignal AW den um den Wert des Quotienten 'Zwanzig geteilt durch F_{D}' veminderten aktuellen Wert W des Wortzählers erhält. Im nachfolgenden Schritt 312 werden die Pixeldaten wieder in den Zwischenspeicher übernommen.

Die Figur 12b zeigt ein Blockschaltbild einer DMA-Steuerung. Die DMA-Steuerung 43 weist mindestens eine Ablaufsteuerung 4301, einen Wortzähler 4302, ein Sollwertregister 4303, eine Ein/Ausgabelogik 4304, einen Speicher 4305, einen Vergleicher 4306 und ein Schieberegister 4307 auf, welche miteinander verschaltet sind, um DMA-Zyklen durchzuführen. In die Ablaufsteuerung 4301 kann eine weitere Verarbeitungseinheit integriert sein, mit welcher die vorgenannten Blöcke 4302 bis 4307 schaltungsmäßig verbunden sind. Die vorgenannte Umschaltung der Anzahl an Datenworten kann mit einem Schieberegister erfolgen, da eine Stellenverschiebung von Binärzahlen einer Division durch die Zahl Zwei und eine weitere Verschiebung einer Division durch den aus der Zahl Zwei abgeleiteten Teiler Vier entspricht. Um den Signalfluß innerhalb der Druckdatensteuerung 4 und zwischen der DMA-Steuerung 43 und dem Mikroprozessor 6 zu gewährleisten, ist weiterhin vorgesehen, dass - in nicht gezeigter Weise - die Ein/Ausgabelogik 4304 mindestens einen Eingang 43041 für den übermittelten Kompressionsfaktor F_{D}, einen Eingang 43042 für das empfangene DMA-Start-Signal und Register 43043 bis 43046 für die zu sendenden Select-Signale, ein Register 43047 für das zusendende DMA-busy-Signal, ein Register 43048 für das zusendende Anforderungssignal DMA_{REQ}, einen Eingang 43049 für das empfangene Quittungssignal DMA_{ACK}, einen Eingang 43050 für das Umschaltsignal (SO) und Register 43051 für das Adressenschreibsignal AW aufweist. Die Art der Logik der konkreten Ausführungsform der DMA-Steuerung ist beliebig wählbar und es gibt eine Vielzahl an geeigneten Ausführungsvarianten. Eine Hardware-Realisierung der DMA-Steuerung ist in ansich bekannter Weise, beispielsweise durch ein ASIC oder vorteilhaft durch ein FPGA (Field Programmable Gate Array) möglich.

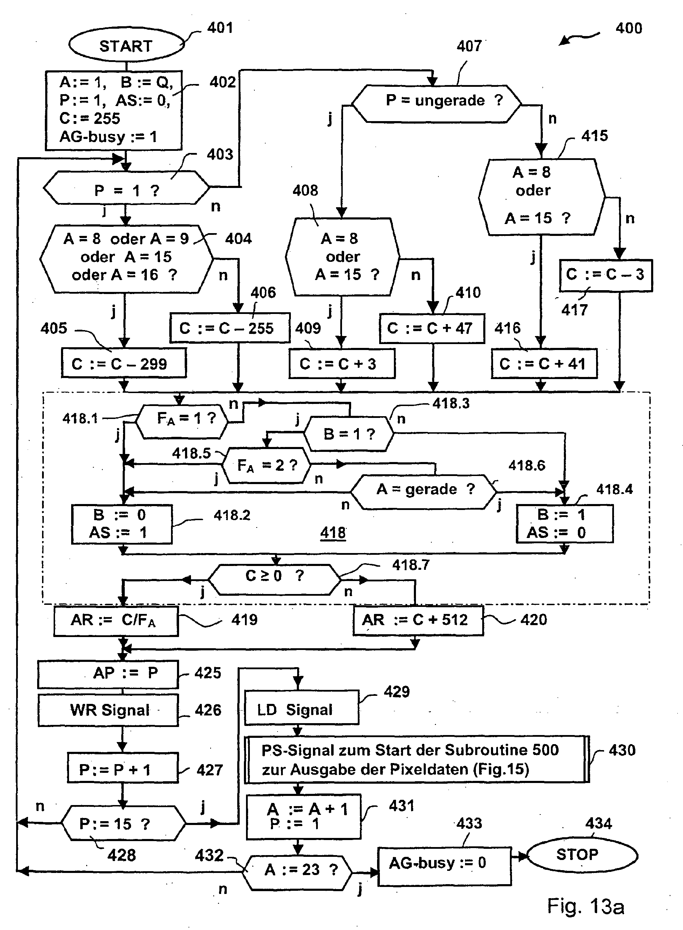

Die Figur 13a zeigt einen Flußplan zur Adressengenerierung. Die Adressen von gespeicherten binären Pixeldaten beginnen bei beiden Druckköpfen mit der Startadresse Null, die auf folgende Weise für das Adressenlesesignal AR generiert wird. Nach dem Start im Schritt 401 werden im Schritt 402 die Anfangswerte aufgerufen, A := 1 für einen Zähler der Adressengruppe, B := Q für ein Register zur Auswahl einer von beiden Düsenreihen eines jeden Druckkopfes beim Drucken mit Niedrigauflösung, P:= 1 für einen Zähler der Primitivadresse AP, AS := 0 für ein zusätzliches Adressensignal und C:= 255 für einen Zähler des Adressenlesesignals AR. Ein Register für das AG-busy-Signal wird auf den Wert 'Eins' gesetzt.

Vom Adressengenerator 44 werden nach einem ersten Adressenlesesignal AR mit dem Wert 'Null' nacheinander weitere Adressenlesesignale AR mit anderen vorbestimmten Werten generiert. Bei Niedrigauflösung werden einige der generierten Adressen ignoriert bzw. ausgewählt, wobei zur Auswahl eine Variable B im Register auf unterschiedliche Anfangswerte Q = 1 oder Q = 0 gesetzt werden kann.

Wenn ein für die erste Düsennummer bestimmtes binäres Pixeldatum in das Schieberegister übernommen werden soll, wird für das Register für B ein Anfangswert Q gleich 'Null' gewählt und ein erstes Adressenlesesignal AR mit dem Wert 'Null' generiert. In einem solchen Fall werden die Schritte 403, 404, 406 und 418 durchlaufen. Im ersten Abfrageschritt 403 wird gefragt, ob der Zahlenwert P des Zählers der Primitivadresse gleich dem Wert Eins ist. Wenn das der Fall ist, wird der zweite Abfrageschritt 404 erreicht. Hier wird ermittelt, ob der Zähler A den Wert 8 oder 9 oder 15 oder 16 erreicht hat. Ist das der Fall, dann wird der Schritt 406 ausgeführt und vom Zahlenwert C des Zählers des Adressenlesesignals AR wird der Zahlenwert 255 subtrahiert. Der nachfolgende Schritt 418 dient der Auswahl von Leseadressen und weist eine Anzahl an Subschritten auf. So wird im dritten Abfrageschritt 418.1 festgestellt, ob der Dekomprimierungsfaktor F_{A} gleich dem Wert 'Eins' ist. Bei Hochauflösung ist das stets der Fall und der Subschritt 418.2 ist erreicht, in welchem das Register für B auf den Wert 'Null' gesetzt und das zusätzliche Adressensignal AS auf den Wert 'Eins' geändert wird, wodurch der vierte Multiplexer im Selector für binäre Pixeldaten auf Durchgang geschaltet wird. Nach dem ersten Adressenlesesignal AR werden weitere Adressenlesesignale AR mit anderen vorbestimmten Werten generiert. Bei Niedrigauflösung kann am Anfang durch eine entsprechende Wahl des Wertes Q eine Auswahl getroffen werden, ob die zu geradzahligen Primitivadressen P zuordenbar erzeugte Leseadressen ignoriert oder ausgewählt werden sollen, um ein Adressenlesesignal AR zu generieren. Wenn am Anfang der Wert Q auf den Wert 'Null' gesetzt ist, dann wird jede der zu geradzahligen Primitivadressen P zuordenbar erzeugten Leseadressen ausgewählt. Wenn am Anfang der Wert Q auf den Wert 'Eins' gesetzt ist, dann wird jede der zu ungeradzahligen Primitivadressen P zuordenbar erzeugten Leseadressen ausgewählt.

Wenn im dritten Abfrageschritt 418.1 festgestellt wurde, dass der Dekomprimierungsfaktor F_{A} ungleich dem Wert 'Eins' ist, dann wird zum Abfrageschritt 418.3 verzweigt und geprüft, ob die Variable B gleich dem Wert 'Eins' ist. In einem solchen Fall kann der Dekomprimierungsfaktor F_{A} = 2 oder 4 sein, weshalb zu einem weiteren Abfrageschritt 418.5 verzweigt und geprüft, ob der Dekomprimierungsfaktor F_{A} gleich dem Wert 'Zwei' ist. Ist das der Fall, dann wird zum Subschritt 418.2 verzweigt, in welchem das Register für B auf den Wert 'Null' gesetzt und das zusätzliche Adressensignal AS auf den Wert 'Eins' geändert wird, wodurch der vierte Multiplexer im Selector für binäre Pixeldaten auf Durchgang geschaltet wird. Ist das aber nicht der Fall, d.h. der Dekomprimierungsfaktor F_{A} ist gleich dem Wert 'Vier', dann wird zum Abfrageschritt 418.6 verzweigt, in welchem ermittelt wird, ob ein Zählwert A für die Adressengruppe geradzahlig ist. Bei einem ungeradzahligen Zählwert A wird wieder zum Subschritt 418.2 verzweigt. Bei einem geradzahligen Zählwert A wird zum Subschritt 418.4 verzweigt. Anderenfalls wird zum Subschritt 418.4 verzweigt, wenn im Abfrageschritt 418.3 festgestellt wurde, dass das Register für B ungleich dem Wert 'Eins' ist. Im Abfrageschritt 418.4 wird das Register für B auf den Wert 'Eins' gesetzt und das zusätzliche Adressensignal AS auf den Wert 'Null' geändert. Dadurch wird der jeweils vierte Multiplexer im Selector auf den - in der Figur 4 nicht gezeigten-Schaltzustand umgeschaltet und gibt ein binäres Pixeldatum mit dem Wert 'Null' an seinem Ausgang ab. Der Subschritt 418.7 dient der Auswahl von Leseadressen, indem festgestellt wird, ob der Zahlenwert C des Zählers des Adressenlesesignals AR größer/gleich dem Wert 'Null' ist. In einem solchen Fall wird zum Schritt 419 zur Ausgabe des Adressenlesesignals AR := 1 verzweigt. Anderenfalls liegt ein negativer Zahlenwert vor und es wird auf den Schritt 420 verzweigt, um zum negativen Zahlenwert einen Zahlenwert 512 hinzu zu addieren. Nach den Schritten 419 und 420 werden die Schritte 425, 426 und 427 durchlaufen.

Im Schritt 425 wird der Zahlenwert für den Zähler der Primitivadresse AP ausgegeben. Dann wird im Schritt 426 ein Schreibsignal WR für den Eintrag des binaren Pixeldatums in ein Sammelregister abgegeben. Im Schritt 427 wird der Zahlenwert für den Zähler der Primitivadresse AP um den Wert 'Eins' inkrementiert. Dann ist ein weiterer Abfrageschritt 428 erreicht und es wird festgestellt, dass der Zahlenwert P des Zählers der Primitivadresse AP den Grenzwert 15 noch nicht erreicht hat. Anschließend wird auf den ersten Abfrageschritt 403 zurückverzweigt.

Im ersten Abfrageschritt 403 wird nun festgestellt, dass der Zahlenwert P des Zählers der Primitivadresse ungleich dem Wert 'Eins' ist und zum sechsten Abfrageschritt 407 verzweigt. Wenn der Zahlenwert P ungerade ist, dann wird zum siebenten Abfrageschritt 408 verzweigt, in welchem geprüft wird, ob der Zähler der Adressengruppe den Wert 8 oder 15 hat. Ist das der Fall, dann wird auf einen Schritt 409 verzweigt und zum Zahlenwert C des Zählers des Adressenlesesignals AR wird der Zahlenwert 3 hinzuaddiert. Anderfalls wird vom siebenten Abfrageschritt 408 auf einen Schritt 410 verzweigt und zum Zahlenwert C des Zählers des Adressenlesesignals AR wird der Zahlenwert 47 hinzuaddiert.

Wenn aber der Zahlenwert P gerade ist, dann wird vom sechsten Abfrageschritt 407 zum achten Abfrageschritt 415 verzweigt, in welchem geprüft wird, ob der Zähler der Adressengruppe den Wert 8 oder 15 hat. Ist das der Fall, dann wird auf einen Schritt 416 verzweigt und zum Zahlenwert C des Zählers des Adressenlesesignals AR wird der Zahlenwert 41 hinzuaddiert. Anderfalls wird vom achten Abfrageschritt 415 auf einen Schritt 417 verzweigt und zum Zahlenwert C des Zählers des Adressenlesesignals AR wird der Zahlenwert 3 subtrahiert.

Von den vorgenannten Schritten 405, 406, 409, 410, 416 und 417 ausgehend wird wieder der Abfrageschritt 418.1 erreicht und festgestellt, dass beispielsweise am Anfang Niedrigauflösung, d.h. der Dekomprimierungsfaktor F_{A} ungleich dem Wert 'Eins' gewählt wurde. Nachfolgend wird der Abfrageschritt 418.3 wiedererreicht und festgestellt, dass das Register für die Variable B zum Beispiel auf den Wert 'Null' gesetzt ist, also ungleich dem Wert 'Eins' ist. Dann wird zum Schritt 418.4 verzweigt und das zusätzliche Adressensignal AS wird auf den Wert 'Null' geändert, wodurch der vierte Multiplexer im Selector umgeschaltet wird. Wenn also am Anfang mit F_{A} ≠ 1 Niedrigauflösung und der Wert Q = 0 entsprechend gewählt wurde, werden alle diejenigen zu den jeweils ungeradzahligen Primitivadressen P zuordenbar erzeugte Adressen ignoriert und der jeweils vierte Multiplexer im Selector, der dann auf den in der Figur 4 nicht gezeigte Schaltzustand umgeschaltet ist, gibt ein binäres Pixeldatum mit dem Wert 'Null' an seinem Ausgang ab. Außerdem wird im Subschritt 418.4 das Register für B auf den Wert 'Eins' gesetzt.

Von den vorgenannten Schritten 405, 406, 409, 410, 416 und 417 ausgehend wird der Abfrageschritt 418.7 wiedererreicht und festgestellt, ob der Zahlenwert C des Zählers des Adressenlesesignals AR größer/gleich dem Wert Null ist. Beispielsweise wurde im Ergebnis eines dritten Durchlaufes durch die Routine 400 ein positiver Zahlenwert C = 44 ermittelt. Im Schritt 419 wird ein Adressenlesesignal AR generiert, welches dem Quotient aus dem positiven Zahlenwert (C = 44) und dem Dekomprimierungsfaktor (F_{A} = 2) entspricht. Die Logik im Adressengenerator 44 erzeugt jeden Zahlenwert (C = 44) als Binärzahl (101100) und enthält Schieberegister zur Quotientenbildung, wobei letztere für den Fall einer Niedrigauflösung mit einem geradzahligen Faktor (2 oder 4) vorgenommen wird. Die gleiche Ziffernfolge aber um eine Stelle nach rechts verschobene Binärzahl (010110) entspricht einem mit dem Faktor 2 gebildeten Quotienten (C/2 = 22). Eine um zwei Stellen nach rechts verschobene Binärzahl (001011) entspricht einem mit dem Faktor 4 gebildeten Quotienten (C/4 = 11). Eine um keine Stelle nach rechts verschobene Binärzahl (101100) entspricht einem mit dem Faktor 1 gebildeten Quotienten (C/1 = 44), was für den Fall einer Hochauflösung (F_{A} = 1) zutreffend ist.

Nach den Schritten 419 und 420 werden wieder die Schritte 425, 426 und 427 durchlaufen bis der fünfte Abfrageschritt 428 erreicht wird, in welchem festgestellt wird, ob der Zahlenwert P des Zählers der Primitivadresse AP den Grenzwert 15 schon erreicht hat. Ist das der Fall, dann wird auf einen Schritt 429 verzweigt und ein Ladesignal LD zum Laden des Schieberegisters abgegeben. Um die Pixeldaten auszudrucken, wird im Schritt 430 ein PS-Signal abgegeben und eine Subroutine 500 zur Ausgabe der Pixeldaten gestartet. Parallel zum Betrieb des Adressengenerators wird die Druckersteuerung 45 betrieben, die nach dem Empfangen des PS-Signals ein Schiebetaktsignal SCL an das Schieberegister angelegt, um von letzterem seriell die Pixeldaten auszugeben. Unabhängig davon wird im Schritt 431 der Subroutine 400 der Wert des Zählers der Adressengruppe um den Wert Eins inkrementiert und der Zähler der Primitivadresse auf den Wert P := 1 zurückgesetzt. Dann wird ein neunter Abfrageschritt 432 erreicht, in welchem festgestellt wird, ob der Zahlenwert A des Zählers der Adressengruppe schon den Grenzwert = 23 erreicht hat. Ist das der nicht Fall, dann wird auf den ersten Abfrageschritt 403 zurückverzweigt. Ist aber der Grenzwert = 23 erreicht, dann wird die Subroutine 400 gestoppt. Damit die Subroutinen 300, 400, 500 in einigen Zeitabschnitten überlappen, d.h. zeitweise gleichzeitig ablaufen können, sind die entsprechenden Steuerungen in separaten Schaltungsteilen festprogrammiert, die während der Ablaufsteuerung 100 der Druckersteuerung untereinander Steuersignale austauschen. Dieser Austausch wird durch Taktimpulse - in an sich bekannter und hier nicht gezeigten Weise - synchronisiert. Es ist für die Adressensteuerung 44 vorteilhaft, wenn synchron mit Taktimpulsen ein AG-busy-Signal mit dem Wert 'Null' im Schritt 433 abgegeben und dann die Subroutine 400 im Schritt 434 gestoppt wird.

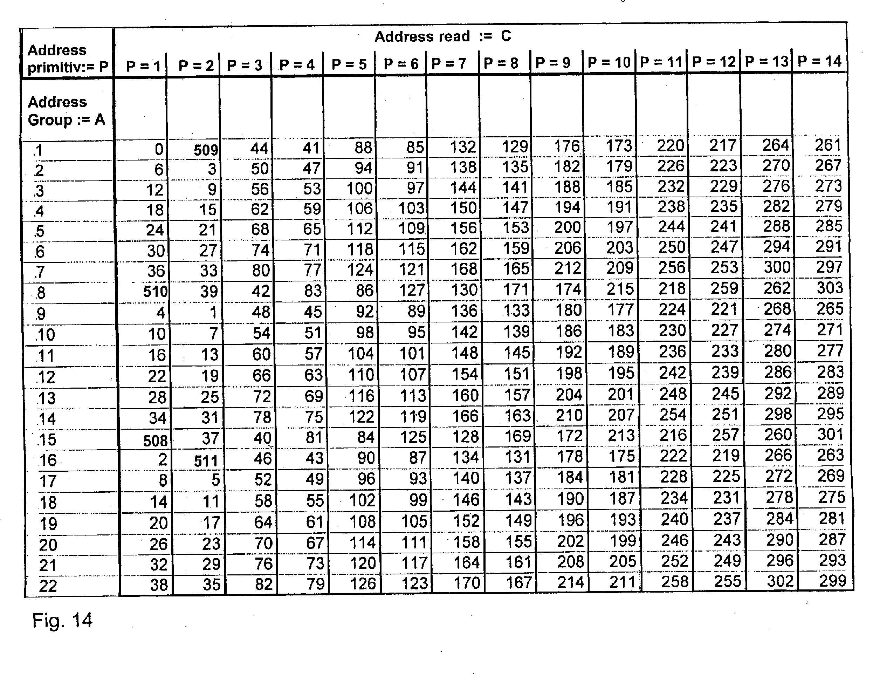

In der Figur 14 ist eine Tabelle zur Adressengenerierung durch die vorgenannte Routine 400 dargestellt. Durch den Adressengenerator 44 werden in der Praxis die Adressenwerte vorzugsweise als Binärzahl erzeugt und an die Pixeldatenaufbereitungseinheiten 41, 42 angelegt. Eine Binärzahl kann bekanntlich beispielweise als Hexadezimalzahl oder Dezimalzahl dargestellt werden, wodurch die Darstellung weniger Platz benötigt. Nur deshalb und zum besseren Verständnis sind in der Tabelle Dezimalzahlen eingetragen. Die Routine 400 erzeugt zunächst eine Primitivadresse P := 1 und eine Binärzahl 'Null' als Adressenlesesignal AR für eine erste Adressgruppe A := 1. Dann wird nach einander bis zur Primitivadresse P := 14 eine entsprechende Binärzahl als Adressen-lesesignal AR für die erste Adressgruppe A := 1 generiert. Das Adressenlesesignal AR (Address read) wird also für 14 Binärzahlen je Adressengruppe erzeugt. Nacheinander werden so entsprechende Binärzahlen als Adressenlesesignal AR für 22 Adressengruppen erzeugt. Bei Hochauflösung F_{A} = 1 wird durch ein jedes Adressenlesesignal AR im Zwischenspeicher auf ein binäres Pixeldatum zugegriffen.

Die Treibereinheiten 11 und 12 ignorieren die binäre Pixeldaten, die bei Adressenwerten A = 1 mit P = 2, A = 7 mit P = 13, A = 8 mit P = 1 und mit P = 14, A = 15 mit P = 1 und mit P = 14, A = 16 mit P = 2 sowie die bei A = 22 mit P = 14 gelesen werden. Die Adressenwerte größer als 500 müssen als Binärzahl deshalb nicht vollständig erzeugbar sein. Zum Bereitstellen von binären Pixeldaten werden alle Adressenwerte größer als 299 zwar erzeugt, aber ebenfalls nicht beim Drucken benötigt.

Die Routine 400 wird solange ausgeführt bis alle Druckbildspalten gedruckt worden sind. In Zusammenhang mit den Figuren 9a, 9b und 10b ist bereits erläutert worden, dass innerhalb eines Zeitbereiches zum Drucken mit Hochauflösung von einundderselben Druckbildspalte die Düsenreihen eines Druckkopfes abwechselnd aktiv werden. Aber beim Drucken mit Niedrigauflösung muß nur eine Düsenreihe aktiv werden.

Alternativ ist es grundsätzlich auch beim Drucken mit Niedrigauflösung möglich, dass beide Düsenreihen abwechselnd aktiv werden, wobei datenstringweise gewechselt wird. Dazu muss ein solcher Wechsel einerseits in den Druckdaten berücksichtigt werden. Vor jedem Start des Adressengenerators kann andererseits von der Duckersteuerung 45 (im Schritt 109 der Fig.11) unter der Bedingung F_{A} ≠ 1 zusätzlich der Wert Q gewechselt werden, beispielsweise von Q = 1 auf Q = 0 und umgekehrt. Alternativ zum datenstringweisen Wechseln kann natürlich druckbildweise die ausgewählte Düsenreihe des Druckkopfes gewechselt werden. In einem solchen Fall pausiert die nicht ausgewählte Düsenreihe des Druckkopfes bis zum nächstfolgenden Druckbild. Damit wird verhindert, dass eine von beiden Düsenreihen übermäßig benutzt wird und einem vorzeitigen Ausfall des Druckkopfes vorgebeugt.

Während einer der Zwischenspeicher per direktem Speicherzugriff mit binären Pixeldaten geladen wird, wird der andere Zwischenspeicher ausgelesen, um aufbereitete Gruppen von binären Pixeldaten zu den Treibereinheiten zu übertragen. Das wechselseitige Wiederholen der Routine 400 und weitere anschließende Schritte werden von der Druckersteuerung 45 gesteuert ausgeführt, welche selbst wiederum von einem Signal e eines Encoders 3 angesteuert, auch die Drucksignale Print 1 bzw. Print 2 generiert.

In der Figur 15 ist ein Flußplan der Ausgaberoutine 500 dargestellt. Letztere wird als Subroutine im Verlauf der Subroutine 400 aufgerufen, um die Schieberegister in der Druckdatensteuerung 41, 42 und um die Treibereinheiten (Pen Driver Boards) 11, 12 anzusteuern. Nach dem Start im Schritt 501 wird ein Schritt 502 erreicht und ein Schietakt SCL generiert, um via der seriellen Datenausgabe aus dem Schieberegister die in letzterem geladenen Pixeldaten zur jeweiligen die Treibereinheit 11, 12 weiterzuschieben. Anschließend wird im Schritt 503 ein Latch-Signal generiert und an die Treibereinheiten (Pen Driver Boards) 11, 12 ausgegeben. Dann werden im Schritt 504 die Druck-Signale Print1, Print2 generiert und an die Treibereinheiten (Pen Driver Boards) 11, 12 ausgegeben und im Schritt 505 wird die Subroutine 500 gestoppt.

In jedem Datenstring existiert eine erste bzw. zweite Anzahl von Datenwörtern, die binären Pixeldaten für einen ersten bzw. zweiten Tintenstrahldruckkopf 1, 2 enthalten. Mit jedem Tintenstrahldruckkopf 1, 2 wird jeweils eine Hälfte einer jeden Druckbildspalte ausgedruckt, wobei durch die erste und zweite Düsenreihe eines jeden Tintenstrahldruckkopfes gleichzeitig die Pixel mit ungeraden Nummern mindestens auf der einen Hälfte einer ersten Druckbildspalte und die Pixel mit geraden Nummern mindestens auf der einen Hälfte einer zweiten Druckbildspalte gedruckt werden. Die erste bzw. zweite Anzahl von Datenwörtern im Datenstring enthält jeweils die binären Pixeldaten für beide Düsenreihen des ersten bzw. zweiten Tintenstrahldruckkopfes, wobei in jedem Datenwort eines jeden Datenstrings nur die ersten bzw. zweiten Pixeldaten zum Drucken einer ersten bzw. weiteren Druckbildspalte enthalten sind, so dass erst nach dem Ausdrucken der Pixeldaten zum Beispiel dreier Datenstrings oder mindestens eines weiteren Datenstrings eine der Druckbildspalten vollständig gedruckt vorliegt. Aus jedem Datenstring wird die jeweils an erster Stelle in Transportrichtung liegende Düsenreihe zeitversetzt mit den binären Pixeldaten für die Pixel mit ungeraden Nummern der ersten Druckbildspalte versorgt, während die jeweils an zweiter Stelle in Transportrichtung liegende Düsenreihe bereits mit den binären Pixeldaten für die Pixel mit geraden Nummern der nachfolgenden weiteren Druckbildspalte versorgt wird. Jede Druckbildspaltenhälfte wird durch die erste und zweite Düsenreihe eines jeden Tintenstrahldruckkopfes ausgedruckt, wobei jede Druckbildspaltenhälfte zeitlich nach dem Drucken mit der jeweils zweiten Düsenreihe vervollständigt wird, durch ein Drucken mit der jeweils ersten Düsenreihe.

Die erste Druckbildspalte wird also von der zweiten Druckbildspalte in Transportrichtung beabstandet ausgedruckt, wobei beide Druckbildspalten bei einigen Druckkopftypen weiter und bei anderen Typen sehr nahe beieinanderliegen. Zur Erhöhung der horizontalen Druckbildauflösung, insbesondere auf 600 dpi, ist es vorgesehen, dass innerhalb des Abstandes weitere Druckbildspalten in Transportrichtung liegen. Damit erhöht sich entsprechend die Anzahl U an Datenstrings, welche im Pixelspeicher für ein Druckbild gespeichert sind.

In der Figur 16a ist ein Detail des Flußplans nach Fig.11 mit der Ablaufsteuerung der Druckersteuerung dargestellt. Innerhalb des Schrittes 104 wird im Subschritt 104.1 das HR-Register in der Druckersteuerung mit einem Startwert HRS geladen. In einem Abfrageschritt 104.2 wird geprüft, ob der Anfangswert HR = 1 vorliegt und damit Hochauflösung von Anfang an gedruckt werden soll. Ist das der Fall, dann werden die Register für den Komprimierungsfaktor F_{D} und für den Dekomprimierungsfaktor F_{A} im Subschritt 104.3 auf den Wert 'Eins' gesetzt. Ist das aber nicht der Fall, dann werden die Register der Komprimierungs- bzw. Dekomprimierungsfaktoren F_{D} bzw. F_{A} im Subschritt 104.4 auf den Wert 'Null' gesetzt, was dem anhand der Figur 1d erörterten Beispiel mit HR := 0 und einem Komprimierungsfaktor von F_{D} = 2 entspricht.

In der Figur 16b wird eine Logik 4501 in einer Ausführungsform mit NAND-Gattern dargestellt, welche die Subschritte 104.2, 104.3 und 104.4 ausführt. Letztere sind Bestandteil des - in der Figur 16a gezeigten-Schrittes 104. Zur Realisierung des Flußplans sind NAND-Gatter und weitere nicht gezeigte Register erforderlich. Ein durch die vorgenannten Schaltungsmittel vorgegebener Wert, beispielsweise H = 4, wird als Dualzahl 1 * 2² ; 0 * 2¹ ; 0 * 2⁰ dargestellt und eingangsseitig an die Gatter G2, G4, G6 der Logik 4501 angelegt, welche ausgangsseitig via Gatter G3, G5, G7 das 3 Bit breite F_{D}-Signal bzw. F_{A}-Signal in Abhängigheit vom HR-Signal abgibt, welches ebenfalls eingangsseitig am Gatter G1 an der Logik 4501 anliegt. Eine Minimalvariante mit einem 1 Bit breiten F_{D}-Signal bzw. F_{A}-Signal ist zwar nicht extra gezeigt worden, aber kann für die Umschaltung von der maximalen auf halbe Auflösung bzw. umgekehrt leicht daraus abgeleitet werden. Dabei entfallen die höherer wertigen Stellen der Dualzahl und somit vier der sieben Gatter, d.h. alle ausser G1, G2 und G3. Ein alternative Ausführungsform basierend auf NOR-Gattern kann ebenso eingesetzt werden. Die Ausführungsform und die konkrete Verschaltung richtet sich nach der Art der eingesetzten Hardware ASIC oder FPGA und wird mittels einem Entwicklungstool realisiert, welches als Anwendungsprogramm auf einem Computer läuft und eine Verschaltung von Baugruppen des ASIC's oder FPGA's realisiert. Beim Einsatz eines FPGA's stehen dafür bis zu Einhunderttausend Gatter-Äquivalente (beispielsweise NAND) zur Verfügung, um auch solche eine sehr große Anzahl an Gattern (beispielsweise NAND) aufweisende Schaltungsvarianten im wesentlichen mit einem handelsüblichen Baustein zu realisieren.

In der Figur 13b wird ein Blockbild einer Ausführungsform des Adressengenerators gezeigt. Es ist vorgesehen, dass der Adressengenerator 44 eine Ein/Ausgabelogik 444 und eine Auswahllogik 442 aufweist, welche zwischen die Einheit 441 zur Generierung von Leseadressen und das Mittel 443 zur Bildung des Adressenlesesignals AR geschaltet ist, dass die Auswahllogik 442 zur Auswahl von Leseadressen in Abhängigkeit vom Dekompressionsfaktor F_{A} betrieben wird. Die Auswahllogik 442 generiert das zusätzliche Adressensignal AS, welches an den Selektor 413, 423 angelegt wird. An einem anderen Eingang des vierten Multiplexer 4236 wird ein Spannungspotential mit dem Wert 'Null' zum Ergänzen der aufgrund der Komprimierung fehlenden Pixeldaten angelegt. Auf das Spannungspotential mit dem Wert 'Null' wird umgeschaltet, wenn das zusätzliche Adressensignal AS den Wert 'Null' aufweist (Fig.4). In der Einheit 441 zur Generierung von Leseadressen ist ein erster Zähler 4410 für die Primitivadresse und ein zugeordneter erster Vergleicher 4411 für den Vergleich eines Zählwertes P der Primitivadresse mit einem ersten Sollwert, der von einem ersten Sollwertregister 4412 geliefert wird, und ein zweiter Zähler 4413 für eine Adressengruppe und ein zugeordneter zweiter Vergleicher 4414 für den Vergleich eines Zählwertes A der Adressengruppe mit einem zweiten Sollwert, der von einem zweiten Sollwertregister 4415 geliefert wird, sowie eine Ablaufsteuerung 4401 angeordnet. Letztere arbeitet zusammen mit einer Berechnungseinheit 4402 für den Parameter C, einem WR-Signalgeber 4403, einem LD-Signalgeber 4404, einem PS-Signalgeber 4405, mit den Zählern 4410 und 4413, mit den Vergleichern 4411 und 4414, mit den Registern 4412 und 4415 sowie einem AG-busy-Signalgeber 4416 und ggf. mit einer weiteren Umschaltlogik 4417 (gestrichelt gezeichnet) zusammen, wobei nach einer Bildung des Adressenlesesignals AR und nach einer Inkrementierung eines Zählwertes P für die Primitivadresse um den Wert 'Eins' der Vergleich im ersten Vergleicher vorgenommen wird, wobei nachdem nacheinander eine Anzahl an Leseadressen generiert, ein Überschreiten eines Sollwertes bzw. ein Überlauf des Zählers für die Primitivadresse ausgelöst, ein Ladesignal LD ausgegeben und eine Subroutine zur Ausgabe gestartet wird, der Zähler für eine Adressengruppe um den Wert 'Eins' inkrementiert wird, wobei ein Unterschreiten des zweiten Sollwertes beim Vergleich im zweiten Vergleicher ein Rücksetzen des Zählwertes P der Primitivadresse auf den Wert 'Eins' und ein Generieren einer nachfolgenden Leseadresse auslöst, die zu einer weiteren Adressengruppe zugehörig ist.

Es ist weiterhin vorgesehen, dass die Ein/Ausgabelogik 444 des Adressengenerators 44 einen Eingang 4441 für den übermittelten Dekompressionsfaktor F_{A}, einen Eingang 4442 zum Empfangen eines Anfangswertes Q für eine Variable B, ein Register 4443 für das zusätzliche Adressensignal AS, einen Eingang 4444 für den Empfang des Adressengeneratorstartsignals und ein Register 4445 für das zu sendende Adressengeneratorbusysignal, dass die Auswahllogik 442 ein Register 4423 für die Variable B und eine erste Vergleichslogik 4421 zur Generierung des zusätzlichen Adressensignals AS mit dem Wert 'Null' aufweist, welches generiert wird, wenn beide die Variable B und der von der Druckersteuerung 45 im F_{A}-Signal übermittelte Dekompressionsfaktor F_{A} auf einen Wert ungleich dem Wert 'Eins' gesetzt sind oder wenn der Dekompressionsfaktor F_{A} auf einen Wert ungleich dem Wert 'Eins' gesetzt ist und die Variable B gleich dem Wert 'Eins' ist und der Dekompressionsfaktor F_{A} auf einen Wert ungleich dem Wert 'Zwei' gesetzt und der Zählwert A der Adressengruppe eine gerade Zahl ist.

Die Auswahllogik 442 weist weiterhin eine zweite Vergleichslogik 4422 zur Generierung des zusätzlichen Adressensignals AS mit dem Wert 'Eins' auf, welches generiert wird, wenn der von der Druckersteuerung (45) im F_{A}-Signal übermittelte Dekompressionsfaktor F_{A} auf den Wert 'Eins' gesetzt ist.

Die zweite Vergleichslogik 4422 hat weitere Vergleichsmittel 4424 zur Generierung des zusätzlichen Adressensignals AS mit dem Wert 'Eins', welches generiert wird, wenn der Dekompressionsfaktor F_{A} auf einen Wert ungleich dem Wert 'Eins' gesetzt ist und die Variable B gleich dem Wert 'Eins' ist und der Dekompressionsfaktor F_{A} auf einen Wert gleich dem Wert 'Zwei' gesetzt ist oder der Dekompressionsfaktor F_{A} auf einen Wert ungleich dem Wert 'Zwei' gesetzt und der Zählwert A der Adressengruppe keine gerade Zahl ist.

Im Register 4423 für die Variable B wird der Wert auf den Wert 'Eins' gesetzt, wenn von der Auswahllogik die Generierung des zusätzlichen Adressensignals AS mit dem Wert 'Null' erfolgt. Mit jeder Generierung des zusätzlichen Adressensignals AS mit dem Wert 'Eins' wird von der Auswahllogik der Wert im Register für die Variable B auf den Wert 'Null' zurückgesetzt. Ein weiterer Vergleicher 4425 in der Auswahllogik 442 ist vorgesehen, damit das Adressenlesesignal AR nur aus Leseadressen mit einem positiven Wert generiert wird. Das entspricht dem Abfrageschriitt 418.7 gemäß Figur 13a.

Zur Bildung des Adressenlesesignals AR schließen die Mittel des AR-Bildners 443 ein Schieberegister 4431 ein, in welchem eine entsprechend der generierten Leseadresse gespeicherten Dualzahl um mindestens eine Stelle verschoben wird, wenn ein Dekomprimierungsfaktor F_{A} am Eingang 4441 des Adressengenerators 44 anliegt, welcher vom Wert 'Eins' abweicht.

Weiterhin ist vorgesehen, dass die Einheit 441 zur Generierung einer Leseadresse eine Anzahl Zähler aufweist, die verbunden sind, um die Bildung des Adressenlesesignals AR mit einem Primitivadressensignal AP zu koppeln, so dass sich ein jeder Zählwert P für die Primitivadresse wiederholt und jedem Zählwert P eine Anzahl von Leseadressen zugeordnet werden kann, wobei durch die Auswahllogik mindestens eine Gruppe von Leseadressen in Abhängigkeit von der Variable B und vom Dekompressionsfaktor F_{A} ausgewählt ist.

Die Ablaufsteuerung 4401 ist mit einer Berechnungseinheit 4402 für den Parameter C mit einem Signalgeber 4403 zur Erzeugung eines Schreibsignals WR, mit einem Signalgeber 4404 zur Erzeugung eines Ladesignals LD, mit einem weiteren Signalgeber 4405 zur Erzeugung eines Druckstartsignals PS zum Veranlassen des Ausdruckens der Pixeldaten aus einem Datenstring und mit einem Busy-Signalgeber 4416 verbunden. Die Ein/Ausgabelogik 444 des Adressengenerators 44 weist ein Register 4446 für die Abgabe der Primitivadresse AP, ein Register 4447 für das Schreibsignal WR, ein Register 4448 für das Ladesignal LD, ein Register 4449 für die Ausgabe des Adressenlesesignals AR und ein Register 4440 für die Ausgabe des Druckstartsignals PS auf.

In einer alternativen Ausführungsform kann der vierte Multiplexer 4136 bzw. 4236, der mit seinem Ausgang - gemäß Figur 4 - am Dateneingang eines nachgeschalteten Demultiplexers 4134 bzw. 4234 anliegt, entfallen, wenn die Funktion entsprechend vom ersten und zweiten Multplexer 4131 und 4132 bzw. 4231 und 4232 mit übernommen wird. Wenn ein weiterer Dateneingang an dem ein zusätzliches Spannungspotential mit dem Wert 'Null' anliegt mittels des zusätzlichen Adressensignals AS, welches als Bestandteil des Adressenlesesignals AR erzeugt wird, auf den Ausgang des ersten und zweiten Multplexers 4131 und 4132 bzw. 4231 und 4232 durchgeschaltet wird, kann die - in der Figur 3 gezeigte - separate Steuerleitung zur Pixeldatenaufbereitungseinheit entfallen.

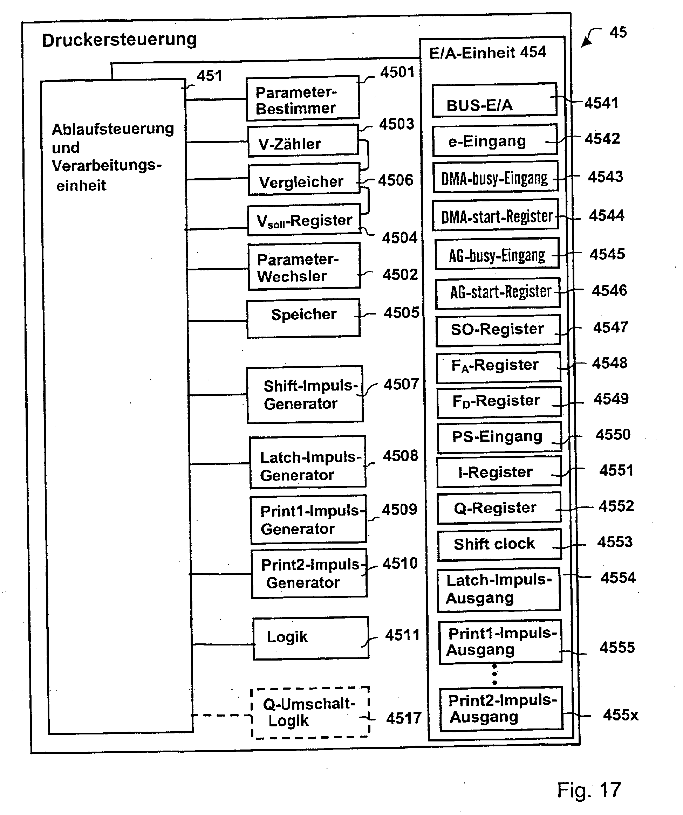

Die Figur 17 zeigt ein Blockschaltbild für eine Druckersteuerung 45. An eine Ablaufsteuerung und Verarbeitungseinheit 451 sind eine Ein/Ausgabeeinheit 454 und mindestens folgende Blöcke angeschlossen, ein Parameterbestimmer 4501, ein Parameterwechsler 4502, ein V-Zähler 4503, ein Vergleicher 4506, ein Vₛₒₗₗ-Register 4504, ein Speicher 4505, ein Shift-Impulsgenerator 4507, ein Latch-Impulsgenerator 4508, ein erster Print-Impulsgenerator 4509 und ein zweiter Print-Impulsgenerator 4510, eine Logik 4511 sowie gegebenenfalls eine Umschaltlogik 4517.

Die Ein/Ausgabeeinheit 454 weist mindestens folgende Blöcke auf, eine BUS-Ein/Ausgabeeinheit 4541, ein Eingang 4542 für das Encodersignal e, einen Eingang 4543 für das DMA-busy-Signal, ein Register 4544 für das DMA-start-Signal, einen Eingang 4545 für das AG-busy-Signal, ein Register 4546 für AG-start-Signal, ein Register 4547 für das Umschaltsignal SO, ein F_{A}-Register 4548, ein F_{D}-Register 4549, einen Eingang 4550 für das PS-Signal, einen Ausgang 4551 für das I-Signal, einen Ausgang 4553 für das Shift-clock-Signal, einen Ausgang 4554 für das Latch-Impuls-Signal, einen Print1-Impuls-Ausgang 4555 und einen Print2-Impuls-Ausgang 455x. Ein Q-Register 4552 in der E/A-Einheit 454 übermittelt einen Anfangswert Q an den Adressengenerator 44.

Die Druckersteuerung 45 kann ebenfalls in der bereits erläuterten oder in einer alternativen Ausführungsform realisiert werden, wobei jede Druckersteuerung 45 - von der Ausführungsform unabhängig - einen Datenstringzähler 4503 aufweist und mit dem Encoder 3 verbunden ist. Nach jedem gedruckten Datenstring wird der Wert V des Datenstringzählers bei Auftreten des Encodertaktes inkrementiert, wobei der Wert des Hochauflösungssignals HR gewechselt wird, wenn ein vorgegebener erster Sollwert S des Datenstringzählers erreicht ist und wobei das Drucken des Druckbildes beendet wird, wenn ein vorgegebener zweiter Sollwert U des Datenstringzählers erreicht ist.

Als Parameterwechsler 4502 kann die Druckersteuerung 45 einen ersten Umschalter 45021 aufweisen, um den Kompressionsfaktor auf den Wert gleich 'Eins' (F_{D} := 1) zu wechseln, wenn das Hochauflösungssignal den Wert gleich 'Null' (HR := 0) hat und auf den Wert gleich 'Eins' (HR := 1) gewechselt wird. Die Druckersteuerung 45 weist einen zweiten Umschalter 45022 auf, um den Kompressionsfaktor auf einen vorbestimmten geradzahligen Wert (F_{D} := H) zu wechseln, wenn das Hochauflösungssignal den Wert gleich 'Eins' (HR := 1) hat und auf den Wert gleich 'Null' (HR := 0) gewechselt wird.

Vorteilhaft ist ein Parameterwechsler 4502 mit untereinander verschalteten NAND-Gattern vorgesehen,der die gleiche Funktion erfüllt.

Die Logik 4511 der Druckersteuerung 45 ist vorgesehen, um den Dekompressionsfaktor F_{A} dem aktuellen Kompressionsfaktor F_{D} anzugleichen, wenn die DMA-Steuerung 43 und der Adressengenerator 44 ein Busy-Signal mit dem Wert 'Null' aussenden.

Über den BUS 5 und die BUS-Ein/Ausgabeeinheit 4541 können die entsprechenden Parameter für mindestens einen weiteren Sollwert Vₛₒₗₗ₂ des Datenstringzählers und ein zugehöriger Wert für die Auflösung H in den Speicher 4505 der Druckersteuerung 45 geladen werden. Der jeweils nächste Sollwert Vₛₒₗₗ₂ wird in das Register 4504 übernommen, nachdem der Abfrageschritt 111 der Routine 100 ausgeführt wurde (Fig. 11).

Es ist alternativ vorgesehen, dass in der Druckersteuerung 45 weitere Sollwertregister und Vergleicher vorhanden sind, um mit jedem weiteren Gleichstand des Sollwertes eines der Sollwertregister mit dem aktuellen Zählwert des Datenstringzählers die aktuelle Druckauflösung zu ändern.

In einem Fall werden die entsprechenden Parameter zwischen den Drucken oder während des Druckens einprogrammiert, ab welcher Datenstringzahl mit welcher Auflösung gedruckt wird. In einem anderen Fall sind die entsprechenden Parameter voreingestellt bzw. fest programmiert, ab welcher Datenstringzahl mit welcher Auflösung gedruckt wird.

Es ist alternativ weiterhin möglich, dass in der Druckersteuerung 45 eine weitere - gestrichelt gezeichnete - Umschaltlogik 4517 angeordnet ist, um synchron zum Umschaltsignal SO den Anfangswert Q für den Adressengenerator 44 zu wechseln, damit die Düsenreihen eines Druckkopfes wechselseitig betrieben werden. Der Anfangswert Q wird über eine separate Steuerleitung zum Q-Eingang des Adressengenerators 44 übermittelt.

In einer anderen Variante wird die Steuerleitung für das Umschaltsignal SO zum Adressengenerator 44 weitergeführt, welcher dann mittels einer weiteren - gestrichelt gezeichneten - Umschaltlogik 4417 selbst synchron zum Umschaltsignal SO einen Anfangswert Q generiert. Statt dem Q-Eingang wird dann ein SO-Eingang realisiert. Bei einem Anfangswert Q mit dem Wert 'Eins' wird die erste generierte Leseadresse ausgewählt sowie die folgende und jede weitere einer geradzahligen Primitivadresse zuordenbare Leseadresse ignoriert Bei einem Anfangswert Q mit dem Wert 'Null' wird die erste generierte Leseadresse ignoriert und die folgende und jede weitere einer geradzahligen Primitivadresse zuordenbare Leseadresse ausgewählt. Bei der Generierung der Pixeldaten und Speicherung im Pixelspeicher ist das abwechselnde Pausieren der Düsenreihen natürlich ebenfalls zu berücksichtigen.

In einer Ausführungvariante mit nur einem einzigen Druckkopf ist in vorteilhafter Weise nur eine einzige Pixeldatenaufbereitungseinheit 42 und die spezielle Steuerung 43, 44 und 45 erforderlich. Die Druckersteuerung 45 und der Adressengenerator 44 können ebenfalls entsprechend einfacher aufgebaut sein. Für den Fall, dass der Druckkopf nur mit einer einzigen Düsenreihe zum Drucken einer Druckbildspalte ausgestattet ist, stimmt die Reihenfolge der binären Pixeldaten im Datenstring mit der Reihenfolge der Pixel in der Druckbildspalte überein. Folglich wird die Reihenfolge der binären Pixeldaten dann dem Druckkopftyp entsprechend sogar druckbildspaltenweise während des Druckens geändert.

Von allen Ausführungsformen unabhängig kann in vorteilhafter Weise die Anordnung von binären Pixeldaten im Pixelspeicher RAM 7 so organisiert werden, dass eine Änderung von Bildelementen leicht bzw. unaufwendig möglich ist. Die Reihenfolge der binären Pixeldaten innerhalb eines Datenstrings kann vorteilhaft während des Druckens dem Druckkopftyp entsprechend geändert werden. Innerhalb eines Druckabschnittes kann die Anzahl der binären Pixeldaten innerhalb eines jeden Datenstrings vorteilhaft reduziert werden, wobei letztere komprimiert erzeugt werden und im Pixelspeicher in Form von 16-Bit-Datenworten gespeichert vorliegen. Die Anzahl der 16-Bit-Datenworte ist vom Komprimierungsfaktor bestimmt und die DMA-Steuerung 43 bzw. der Adressengenerator ist für unterschiedliche Komprimierungsfaktoren F_{D} = 1, 2 oder 4 bzw. Dekomprimierungsfaktoren F_{A} = 1, 2 oder 4 umschaltbar ausgebildet. Aus der Figur 18 sind verschiedene vertikale Druckauflösungen (orthogonal zur Transportrichtung) ersichtlich, die sich bei einer Umschaltung des Komprimierungsfaktoren F_{D} = 1, 2 oder 4 ergeben, wobei die horizotale Druckauflösungen (300 dpi in Transportrichtung) gleich bleibt. Bei einer erforderlichen Hochauflösung wird mit 600 dpi orthogonal zur Transportrichtung, d.h. einem Komprimierungsfaktor F_{D} = 1 und Dekomprimierungsfaktor F_{A} = 1 gearbeitet. Beim Komprimierungsfaktor F_{D} = 2 bzw. F_{D} = 4 ergeben sich vertikale Druckauflösungen von 300 dpi bzw. 150 dpi. In demjenigen Druckabschnitt, in welchem keine Hochauflösung erforderlich ist, kann durch Datenkomprimierung offensichtlich Speicherplatz im Pixelspeicher eingespart werden. Die Datenkomprimierung hat keine negativen Auswirkungen auf eine leicht durchführbare Änderung von variablen Bildelementen und kann vom Mikroprozessor unaufwendig während des Druckens des einen Datenstrings für den im Pixelspeicher nachfolgenden Datenstring durchgeführt werden.

Die Erfindung ist nicht auf die vorliegenden Ausführungsform beschränkt. So können offensichtlich weitere andere Ausführungen der Erfindung entwickelt bzw. eingesetzt werden, die vom gleichen Grundgedanken der Erfindung ausgehend, die von den anliegenden Ansprüchen umfaßt werden.

## Patentansprüche

1. Anordnung zum Drucken eines Druckbildes auf ein bewegtes Postgut in einem Postbearbeitungsgerät mit einem Druckkopf (1, 2) der über eine Treibereinheit (11, 12) von einer Druckdatensteuerung (4) ansteuerbar ist, die mit einem Encoder (3) und über einen BUS (5) mit mindestens einem Mikroprozessor (6), einem Pixelspeicher (7), einem nichtflüchtigen Speicher (8) und einem Festwertspeicher (9) adress-, daten- und steuermäßig verbunden ist, **gekennzeichnet dadurch, dass** der Mikroprozessor (6) so programmiert ist ein Druckbild mit Bereichen unterschiedlicher Druckbildauflösung zu generieren, unter Verwendung von Daten aus dem Festwertspeicher (9) eine Anzahl an Datenstrings mit einer umschaltbaren Anzahl an Datenworten zu generieren und im Pixelspeicher (7) zu speichern, wobei eine maximale Anzahl an Datenworten je Datenstring unterschritten wird, wenn die Pixeldaten komprimiert gespeichert werden, dass die Druckdatensteuerung (4) zur Pixeldatenaufbereitung während des Druckens mit dem Druckkopf (1, 2) ausgebildet und mit Mitteln ausgestattet ist, die komprimierten Pixeldaten je Datenstring zu dekomprimieren und dabei die aufgrund der Komprimierung fehlenden Pixeldaten so zu ergänzen, dass die Verringerung der Anzahl an Datenworten je Datenstring der Reduzierung der Auflösung bei Drucken entspricht, dass der Mikroprozessor (6) programmiert ist, mindestens einen Parameter (PA) zur Steuerung der Auflösung via BUS (5) der Druckdatensteuerung (4) zuzuführen und dass die Druckdatensteuerung (4) dazu ausgebildet ist, die beim Drucken erzielbare Auflösung umzuschalten.

2. Anordnung, nach Anspruch 1, **gekennzeichnet dadurch, dass** der Mikroprozessor (6) programmiert ist, für Hochauflösung einen Anfangswert (HRS) via BUS (5) zur Druckersteuerung (45) zu übermitteln, dass die Druckdatensteuerung (4) aus einer Pixeldatenaufbereitungseinheit (41, 42), einer DMA-Steuerung (43), einem Adressengenerator (44) und einer Druckersteuerung (45) besteht, wobei die Druckersteuerung (45) steuerungsmäßig mit der DMA-Steuerung (43), dem Adressengenerator (44) und der Pixeldatenaufbereitungseinheit (41, 42) verbunden ist.

3. Anordnung, nach den Ansprüchen 1 bis 2, **gekennzeichnet dadurch, dass** die Druckersteuerung (45) mit Mitteln zur Generierung von Signalen entsprechend den Faktoren (F_{A}, F_{D}) ausgestattet ist, wobei die Faktoren (F_{A}, F_{D}) gleich dem Wert 'Eins' des Anfangswertes (HRS) oder verschieden vom Wert 'Null' des Anfangswertes (HRS) sind, wobei die Faktoren (F_{A}, F_{D}) mindestens gleich dem Wert 'Zwei' gesetzt sind, wobei die DMA-Steuerung (43) durch ein über eine Steuerleitung (46) übermitteltes F_{D}-Signal umschaltbar ist, so dass beim Laden von binären Pixeldaten in einen Zwischenspeicher (411, 421 bzw. 412, 422) der Pixeldatenaufbereitungseinheit (41, 42) die Anzahl an DMA-Zyklen mindestens halbiert ist und wobei der Adressengenerator (44) durch ein über eine Steuerleitung (47) übermitteltes F_{A}-Signal umschaltbar ist, so dass dann mindestens halbierte Leseadressen für einen Lesezugriff auf die Zwischenspeicher der Pixeldatenaufbereitungseinheit (41, 42) erzeugt werden.

4. Anordnung, nach Anspruch 3, **gekennzeichnet dadurch, dass** das Verhältnis der maximalen Anzahl an DMA-Zyklen zur reduzierten Anzahl an DMA-Zyklen dem via F_{D}-Signal übermittelten Kompressionsfaktor (F_{D}) entspricht und dass der auf einunddenselben Datenstring angewendete Kompressionsfaktor (F_{D}) gleich dem via F_{A}-Signal übermittelten Dekompressionsfaktor (F_{A}) ist.

5. Anordnung, nach den Ansprüchen 1 bis 2, **gekennzeichnet dadurch, dass** die Pixeldatenaufbereitungseinheit (41, 42) einen Selektor (423 bzw. 413) und ein Schieberegister (414, 424) enthält, wobei der Selektor (423 bzw. 413) mit den Zwischenspeichern (421, 422 bzw. 411, 412) zur Auswahl der binären Pixeldaten verbunden und mit den Mitteln zum Ergänzen der aufgrund der Komprimierung fehlenden Pixeldaten ausgestattet ist und wobei das Schieberegister (414, 424) zur Parallel/ Serienwandlung am Ausgang des Selektors (423 bzw. 413) angeschlossen ist und die binären Pixeldaten in einer für den Druckkopftyp erforderlichen Reihenfolge bereitgestellt.

6. Anordnung, nach den Ansprüchen 1 bis 2, **gekennzeichnet dadurch, dass** die Druckersteuerung (45) steuerungsmäßig mit der DMA-Steuerung (43), dem Adressengenerator (44) und der Pixeldatenaufbereitungseinheit (41, 42) verbunden ist,
- wobei ein DMA-Startsignal der DMA-Steuerung (43) übermittelt wird, welche im Ergebnis einer Anzahl von durchgeführten DMA-Zyklen die Pixeldaten der Pixeldatenaufbereitungseinheit (41, 42) datenstringweise zur Verfügung stellt,
- wobei von der Druckersteuerung (45) ein AG-Startsignal zu dem Adressengenerator (44) übermittelt wird, wobei der Adressengenerator (44) eine Einheit (441) zur Generierung von Leseadressen und Mittel (443) zur Bildung eines Adressenlesesignals (AR) in Abhängigkeit vom Dekomprimierungsfaktor (F_{A}) aufweist, wobei das Adressenlesesignal (AR) dem Quotient aus den für einen Lesezugriff auf die Zwischenspeicher generierten Leseadressen und dem Dekomprimierungsfaktor (F_{A}) entspricht und
- wobei die Pixeldatenaufbereitungseinheit (41, 42) einen ersten und zweiten Zwischenspeicher (411, 421 und 412, 422) für jeden Druckkopf (1, 2) aufweist, wobei die Zwischenspeicher wechselseitig einen Datenstring speichern und einen Adresseneingang (4112, 4212 und 4122, 4222) zum Anlegen des Adressenlesesignals (AR) aufweisen.

7. Anordnung, nach den Ansprüchen 1 bis 6, **gekennzeichnet dadurch, dass** die Druckersteuerung (45) mit Mitteln zur Generierung eines Umschaltsignals (SO) ausgebildet und mit der DMA-Steuerung (43) sowie mit der Pixeldatenaufbereitungseinheit (41, 42) verbunden ist, wobei das Umschaltsignal (SO) einen ersten Wert 'Eins' zum Verhindern des Auslesens aus dem jeweils ersten Zwischenspeicher (411, 421) und zum Erlauben des Auslesens aus dem jeweils zweiten Zwischenspeicher (412, 422) aufweist bzw. wobei das Umschaltsignal (SO) einen zweiten Wert 'Null' zum Erlauben des Auslesens aus dem jeweils ersten Zwischenspeicher (411, 421) und zum Verhindern des Auslesens aus dem jeweils zweiten Zwischenspeicher (412, 422) aufweist.

8. Anordnung, nach den Ansprüchen 1 bis 6, **gekennzeichnet dadurch, dass** die niederwertigen Adressen des Adressenlesesignals (AR) außerdem am Selektor (413, 423) der Pixeldatenaufbereitungseinheit (41, 42) anliegen und dass der Adressengenerator (44) Mittel zur Generierung eines Primitvadressensignals (AP) und eines Schreibsignals (WR) aufweist, die ebenfalls an den Selektor (413, 423) angelegt werden

9. Anordnung, nach den Ansprüchen 1 bis 8, **gekennzeichnet dadurch, dass** die Zwischenspeicher (421, 422 bzw. 411, 412) als Dual-Port-RAM realisiert sind, dass der Selektor (413 bzw. 423) einen ersten Multiplexers (4131 bzw. 4231) aufweist, welcher ein einzelnes Bit der binären Pixeldaten auswählt, wenn an seinem Adresseneingang (4130 bzw. 4230) der nieder-wertige Teil des Adressenlesesignals (AR) anliegt, wobei der dem ersten Dualport-RAM (4110 bzw. 4210) nachgeschaltete erste Multiplexer (4131 bzw. 4231) ausgangsseitig mit einem ersten Dateneingang eines dritten Multiplexers (4133 bzw. 4233) und wobei ein dem zweiten Dualport-RAM (4120 bzw. 4220) nachgeschalteter zweiter Multiplexer (4132 bzw. 4232) ausgangsseitig mit einem zweiten Dateneingang des dritten Multiplexers (4133 bzw. 4233) verbunden ist, dass ein Umschaltsignal (SO) am Steuereingang des dritten Multiplexers (4133 bzw. 4233) anliegt, so dass das vorgenannte einzelne Bit der binären Pixeldaten ausgegeben wird und am Dateneingang eines nachgeschalteten vierten Multiplexers (4136 bzw. 4236) anliegt und zum Dateneingang eines nachgeschalteten Demultiplexers (4134 bzw. 4234) durchgeschaltet wird, wenn an seinem Steuereingang ein zusätzliches Adressensignal (AS) mit einem ersten Wert 'Eins' anliegt, dass dem Demultiplexer (4134 bzw. 4234) ein rücksetzbares Sammelregister (4135 bzw. 4235) für binäre Pixeldaten nachgeschaltet ist, welches einen 14 Bit parallelen Datenausgang aufweist, wobei das vorgenannte einzelne Bit der binären Pixeldaten in das Sammelregister (4135 bzw. 4235) übernommen wird, wenn ein Schreibsignal (WR) an einem Steuereingang des Sammelregisters (4135 bzw. 4235) angelegt wird, dass dem Demultiplexer (4134 bzw. 4234) das Primitivadressensignal (AP) zugeführt wird, welches den Speicherplatz des Bits im Sammelregister (4135 bzw. 4235) einstellt.

10. Anordnung, nach den Ansprüchen 1 bis 9, **gekennzeichnet dadurch, dass** der Adressengenerator (44) eine Ein/Ausgabelogik (444) und eine Auswahllogik (442) aufweist, welche zwischen die Einheit (441) zur Generierung von Leseadressen und das Mittel (443) zur Bildung des Adressenlesesignals (AR) geschaltet ist, dass die Auswahllogik (442) zur Auswahl von Leseadressen in Abhängigkeit vom Dekompressionsfaktor (F_{A}) betrieben wird.

11. Anordnung, nach den Ansprüchen 1 bis 10, **gekennzeichnet dadurch, dass** der Ausgang des dritten Multiplexers (4133 bzw. 4233) mit dem Dateneingang des nachgeschalteten Demultiplexers (4134 bzw. 4234) direkt verbunden ist und dass die Funktion entsprechend vom ersten und zweiten Multplexer (4131 und 4132 bzw. 4231 und 4232) mit übernommen wird, an welchen an einem weiterer Dateneingang ein zusätzliches Spannungspotential mit dem Wert 'Null' anliegt, das auf den Ausgang des ersten und zweiten Multplexers (4131 und 4132 bzw. 4231 und 4232) durchgeschaltet wird, wobei das zusätzliche Adressensignal (AS) als Bestandteil des Adressenlesesignals (AR) durch die Auswahllogik (442) erzeugt wird.

12. Anordnung, nach den Ansprüchen 1 bis 10, **gekennzeichnet dadurch, dass** die Auswahllogik (442) das zusätzliche Adressensignal (AS) generiert, welches an den Selektor (413, 423) angelegt wird, dass dem an einem anderen Eingang des vierten Multiplexer (4236) ein Spannungspotential mit dem Wert 'Null' zum Ergänzen des Wertes der aufgrund der Komprimierung fehlenden Pixeldaten anliegt, wobei auf das Spannungspotential mit dem Wert 'Null' umgeschaltet wird, wenn das zusätzliche Adressensignal (AS) den Wert 'Null' aufweist.

13. Anordnung, nach den Ansprüchen 1 bis 11, **gekennzeichnet dadurch, dass** die Einheit (441) zur Generierung von Leseadressen einen ersten Zähler (4410) für die Primitivadresse und einen zugeordneten ersten Vergleicher (4411) für den Vergleich eines Zählwertes (P) der Primitivadresse mit einem ersten Sollwert, der von einem Register (4412) geliefert wird, und einen zweiten Zähler (4413) für eine Adressengruppe und einen zugeordneten zweiten Vergleicher (4414) für den Vergleich eines Zählwertes (A) der Adressengruppe mit einem zweiten Sollwert, der von einem Register (4415) geliefert wird, sowie eine Ablaufsteuerung (4401) aufweist, wobei nach einer Bildung des Adressenlesesignals (AR) und nach einer Inkrementierung eines Zählwertes (P) für die Primitivadresse um den Wert 'Eins' der Vergleich im ersten Vergleicher (4411) vorgenommen wird, wobei nachdem nacheinander eine Anzahl an Leseadressen generiert, ein Überschreiten eines Sollwertes bzw. ein Überlauf des Zählers für die Primitivadresse ausgelöst, ein Ladesignal (LD) ausgegeben und eine Subroutine zur Ausgabe gestartet wird, der Zähler (4413) für eine Adressengruppe um den Wert 'Eins' inkrementiert wird, wobei ein Unterschreiten des zweiten Sollwertes beim Vergleich im zweiten Vergleicher ein Rücksetzen des Zählwertes (P) der Primitivadresse auf den Wert Eins' und ein Generieren einer nachfolgenden Leseadresse auslöst, die zu einer weiteren Adressengruppe zugehörig ist.

14. Anordnung, nach den Ansprüchen 1 bis 10, **gekennzeichnet dadurch, dass** die Ein/Ausgabelogik (444) des Adressengenerators (44) einen Eingang (4441) für den Dekompressionsfaktor (F_{A}), einen Eingang (4442) zum Empfangen eines Anfangwertes (Q) für eine Variable (B), ein Register (4443) für das zusätzliche Adressensignal (AS), einen Eingang (4444) für das empfangene Adressengeneratorstartsignal und ein Register (4445) für das zusendende Adressengeneratorbusysignal, dass die Auswahllogik (442) ein Register (4423) für die Variable (B) und eine erste Vergleichslogik (4421) zur Generierung des zusätzlichen Adressensignals (AS) mit dem Wert 'Null' aufweist, welches generiert wird, wenn beide die Variable (B) und der von der Druckersteuerung (45) im F_{A}-Signal übermittelte Dekompressionsfaktor (F_{A}) auf einen Wert ungleich dem Wert 'Eins' gesetzt sind oder wenn der Dekompressionsfaktor (F_{A}) auf einen Wert ungleich dem Wert 'Eins' gesetzt ist und die Variable (B) gleich dem Wert 'Eins' ist und der Dekompressionsfaktor (F_{A}) auf einen Wert ungleich dem Wert 'Zwei' gesetzt und der Zählwert (A) der Adressengruppe eine gerade Zahl ist.

15. Anordnung, nach den Ansprüchen 10 und 14, **gekennzeichnet dadurch, dass** die Auswahllogik (442) eine zweite Vergleichslogik (4422) zur Generierung des zusätzlichen Adressensignals (AS) mit dem Wert 'Eins' aufweist, welches generiert wird, wenn der von der Druckersteuerung (45) im F_{A}-Signal übermittelte Dekompressionsfaktor (F_{A}) auf den Wert 'Eins' gesetzt ist.

16. Anordnung, nach Anspruch 15, **gekennzeichnet dadurch, dass** zusätzlich zur zweiten Vergleichslogik (4422) weitere Vergleichsmittel (4424) zur Generierung des zusätzlichen Adressensignals (AS) mit dem Wert 'Eins' angeordnet sind, welches generiert wird, wenn der Dekompressionsfaktor (F_{A}) auf einen Wert ungleich dem Wert 'Eins' gesetzt ist und die Variable (B) gleich dem Wert 'Eins' ist und der Dekompressionsfaktor (F_{A}) auf einen Wert gleich dem Wert 'Zwei' gesetzt ist oder der Dekompressionsfaktor (F_{A}) auf einen Wert ungleich dem Wert 'Zwei' gesetzt und der Zählwert (A) der Adressengruppe keine gerade Zahl ist.

17. Anordnung, nach Anspruch 14, **gekennzeichnet dadurch, dass** der Wert des Registers (4423) für die Variable (B) auf den Wert 'Eins' gesetzt wird, wenn von der Auswahllogik die Generierung des zusätzlichen Adressensignals (AS) mit dem Wert 'Null' erfolgt und dass mit jeder Generierung des zusätzlichen Adressensignals (AS) mit dem Wert 'Eins' von der Auswahllogik der Wert im Register für die Variable (B) auf den Wert 'Null' zurückgesetzt wird.

18. Anordnung, nach den Ansprüchen 10 und 14, **gekennzeichnet dadurch, dass** ein Vergleicher (4425) in der Auswahllogik (442) vorgesehen ist, damit das Adressenlesesignal (AR) nur aus Leseadressen mit einem positiven Wert generiert wird.

19. Anordnung, nach Anspruch 10, **gekennzeichnet dadurch, dass** die Mittel (443) zur Bildung des Adressenlesesignals (AR) ein Schieberegister (4431) einschließen, in welchem eine entsprechend der generierten Leseadresse gespeicherten Dualzahl um mindestens eine Stelle verschoben wird, wenn ein Dekomprimierungsfaktor (F_{A}) in einem Eingang (4441) des Adressengenerators (44) anliegt, welcher vom Wert 'Eins' abweicht.

20. Anordnung, nach den Ansprüchen 1 bis 10, **gekennzeichnet dadurch, dass** die Einheit (441) zur Generierung einer Leseadresse eine Anzahl Zähler aufweist, die schaltungsmäßig verbunden sind, um die Bildung des Adressenlesesignals (AR) mit einem Primitivadressensignal (AP) zu koppeln, so dass sich ein jeder Zählwert (P) für die Primitivadresse wiederholt und jedem Zählwert (P) eine Anzahl von Leseadressen zugeordnet werden kann, wobei durch die Auswahllogik mindestens eine Gruppe von Leseadressen in Abhängigkeit von der Variable (B) und vom Dekompressionsfaktor (F_{A}) ausgewählt ist.

21. Anordnung, nach einem der Ansprüche 1 bis 19 oder 20, **gekennzeichnet dadurch, dass** die Ablaufsteuerung (4401) mit einem Signalgeber (4403) zur Erzeugung eines Schreibsignals (WR), mit einem Signalgeber (4404) zur Erzeugung eines Ladesignals (LD), mit einem Signalgeber (4405) zur Erzeugung eines Druckstartsignals (PS) und mit einem AG-busy-Signalgeber (4416) verbunden ist sowie dass die Ein/Ausgabelogik (444) des Adressengenerators (44) ein Register (4446) für die Abgabe der Primitivadresse (AP), ein Register (4447) für das Schreibsignal (WR), ein Register (4448) für das Ladesignal (LD), ein Register (4449) für die Ausgabe des Adressenlesesignals (AR) und ein Register (4440) für die Ausgabe des Druckstartsignals (PS) aufweist.

22. Anordnung, nach den Ansprüchen 1, 2, 5 und 6, **gekennzeichnet dadurch, dass** die Druckersteuerung (45) einen Datenstringzähler (454) aufweist und mit dem Encoder (3) verbunden ist, wobei nach jedem gedruckten Datenstring der Wert (V) des Datenstringzählers bei Auftreten des Encodertaktes inkrementiert wird, wobei der Wert des Hochauflösungssignal (HR) gewechselt wird, wenn ein vorgegebener erster Sollwert (S) des Datenstringzählers erreicht ist und wobei das Drucken des Druckbildes beendet wird, wenn ein vorgegebener zweiter Sollwert (U) des Datenstringzählers erreicht ist.

23. Anordnung, nach den Ansprüchen 1 bis 4, **gekennzeichnet dadurch, dass** die Druckersteuerung (45) einen ersten Umschalter (45021) aufweist, um den Kompressionsfaktor auf den Wert gleich 'Eins' (F_{D} := 1) zu wechseln, wenn das Hochauflösungssignal (HR) den Wert gleich 'Null' (HR := 0) hat und auf den Wert gleich 'Eins' (HR := 1) gewechselt wird und dass die Druckersteuerung (45) einen zweiten Umschalter (45022) aufweist, um den Kompressionsfaktor auf einen vorbestimmten geradzahligen Wert (F_{D} := H) zu wechseln, wenn das Hochauflösungssignal den Wert gleich 'Eins' (HR := 1) hat und auf den Wert gleich 'Null' (HR := 0) gewechselt wird.

24. Anordnung, nach den Ansprüchen 1, 2 und 23, **gekennzeichnet dadurch, dass** die Druckersteuerung (45) eine Logik (4511) aufweist, den Dekompressionsfaktor (F_{A}) dem aktuellen Kompressionsfaktor (F_{D}) anzugleichen, wenn die DMA-Steuerung (43) und der Adressengenerator (44) ein Busy-Signal mit dem Wert 'Null' aussenden.

25. Anordnung, nach Anspruch 22, **gekennzeichnet dadurch, dass** weitere Sollwertregister und Vergleicher vorhanden sind, um mit jedem weiteren Gleichstand des Sollwertes eines der Sollwertregister mit dem aktuellen Zählwert des Datenstringzählers die aktuelle Druckauflösung zu ändern.

26. Anordnung, nach einem der vorhergehenden Ansprüche, **gekennzeichnet dadurch, dass** in der Druckersteuerung (45) oder im Adressengenerator (44) eine weitere Umschaltlogik (4517) oder (4417) angeordnet ist, die synchron zum Umschaltsignal (SO) einen Anfangswert (Q) für den Adressengenerator (44) wechselt, damit die Düsenreihen eines Druckkopfes wechselseitig betrieben werden.

27. Anordnung, nach den Ansprüchen 1 bis 6, **gekennzeichnet dadurch, dass** die DMA-Steuerung (43) mindestens eine Ablaufsteuerung (4301), einen Wortzähler (4302), ein Sollwertregister (4303), eine Ein/Ausgabelogik (4304), einen Speicher (4305), einen Vergleicher (4306) und ein Schieberegister (4307) aufweist, welche miteinander verschaltet sind, um DMA-Zyklen durchzuführen.

28. Anordnung, nach Anspruch 27, **gekennzeichnet dadurch, dass** die Ein/Ausgabelogik (4304) mindestens einen Eingang (43041) für den übermittelten Kompressionsfaktor (F_{D}), einen Eingang (43042) für das empfangene DMA-Start-Signal und Register (43043 bis 43046) für die zusendenden Select-Signale, ein Register (43047) für das zusendende DMA-busy-Signal, ein Register (43048) für das zusendende Anforderungssignal (DMA_{REQ}), einen Eingang (43049) für das empfangene Quittungssignal (DMA_{ACK}), einen Eingang (43050) für das Umschaltsignal (SO) und Register (43051 bis 430x0) für das Adressenschreibsignal (AW) aufweist.

29. Anordnung, nach den Ansprüchen 1 bis 4, **gekennzeichnet dadurch, dass** die Druckersteuerung (45) einen Parameterwechsler (4502) mit NAND-Gattern aufweist, die untereinander verschaltet sind, um den Kompressionsfaktor auf den Wert gleich 'Eins' (F_{D} := 1) zu wechseln, wenn das Hochauflösungssignal (HR) den Wert gleich 'Null' (HR := 0) hat und auf den Wert gleich 'Eins' (HR := 1) gewechselt wird und um den Kompressionsfaktor auf einen vorbestimmten geradzahligen Wert (F_{D} := H) zu wechseln, wenn das Hochauflösungssignal den Wert gleich 'Eins' (HR := 1) hat und auf den Wert gleich 'Null' (HR := 0) gewechselt wird.

## Claims

1. An arrangement for printing a print image on a moving postal item in a postal-item processing device having a print head (1, 2) that can be addressed via a driver unit (11, 12) by a print data control (4) that is connected with an encoder (3) and, via a BUS (5), with at least one microprocessor (6), a pixel memory (7), a non-volatile memory (8) and a read-only memory (9) for address, data and control functions,
**characterized in that** the microprocessor (6) is programmed to generate a print image with areas of different print-image resolution, to generate, using data from the read-only memory (9), a number of data strings with a switchable number of data words and to store them in the pixel memory (7), staying below a maximum number of data words per data string when the pixel data are stored in a compressed manner; that the print data control (4) is designed for pixel data preparation during the printing with the print head (1, 2) and is equipped with means for decompressing the compressed pixel data per data string and completing the pixel data missing due to compression in such a manner that the reduction of the number of data words per data string corresponds to the reduction of the resolution of prints; that the microprocessor (6) is programmed to feed at least one parameter (PA) for controlling the resolution via the BUS (5) to the print data control (4); and that the print data control (4) is designed for switching the resolution achievable when printing.

2. An arrangement according to Claim 1, **characterized in that** the microprocessor (6) is programmed to transmit an initial value (HRS) for high resolution via the BUS (5) to the printer control (45); that the print data control (4) is composed of a pixel data preparation unit (41, 42), a DMA control (43), an address generator (44) and a printer control (45), said printer control (45) being connected, for control functions, with the DMA control (43), the address generator (44) and the pixel data preparation unit (41, 42).

3. An arrangement according to Claims 1 to 2, **characterized in that** the printer control (45) is equipped with means for generating signals according to the factors (F_{A}, F_{D}), wherein the factors (F_{A}, F_{D}) are equal to the value 'One' of the initial value (HRS) or different from the value 'zero' of the initial value (HRS), wherein the factors (F_{A}, F_{D}) are set at least equal to the value 'Two', wherein the DMA control (43) can be switched by an F_{D} signal transmitted via a control line (46) so that, upon loading binary pixel data into an intermediate memory (411, 421 or 412, 422) of the pixel data preparation unit (41, 42), the number of DMA cycles is at least halved, and wherein the address generator (44) can be switched by an F_{A} signal transmitted via a control line (47) so that then at least halved read addresses are generated for a read access to the intermediate memory means of the pixel data preparation unit (41, 42).

4. An arrangement according to Claim 3, **characterized in that** the ratio of the maximum number of DMA cycles to the reduced number of DMA cycles corresponds to the compression factor (F_{D}) transmitted via F_{D} signal and that the compression factor (F_{D}) applied to one and the same data string is equal to the decompression factor (F_{A}) transmitted via F_{A} signal.

5. An arrangement according to Claims 1 to 2, **characterized in that** the pixel data preparation unit (41, 42) includes a selector (423 or 413) and a shift register (414, 424), wherein the selector (423 or 413) is connected with the intermediate memory means (421, 422 or 411, 412) for selecting the binary pixel data and is provided with the means for completing the pixel data missing due to compression and wherein the shift register (414, 424) is connected for parallel/serial conversion to the output of the selector (423 or 413) and provides the binary pixel data in a sequence as required for the print head type.

6. An arrangement according to Claims 1 to 2, **characterized in that** the printer control (45) is connected, for control functions, with the DMA control (43), the address generator (44) and the pixel data preparation unit (41, 42),
- wherein a DMA start signal of the DMA control (43) is transmitted which, as a result of a number of DMA cycles executed, provides the pixel data to the pixel data preparation unit (41, 42) data string by data string,
- wherein the printer control (45) transmits an AG start signal to the address generator (44), wherein the address generator (44) comprises a unit (441) for generating read addresses and means (443) for forming an address read signal (AR) depending on the decompression factor (F_{A}), wherein the address read signal (AR) corresponds to the quotient of the read addresses generated for a read access to the intermediate memory means and the decompression factor (F_{A}), and
- wherein the pixel data preparation unit (41, 42) comprises a first and a second intermediate memory (411, 421 and 412, 422) for every print head (1, 2), wherein the intermediate memory means alternately store a data string and have an address input (4112, 4212 and 4122, 4222) for creating the address read signal (AR).

7. An arrangement according to Claims 1 to 6, **characterized in that** the printer control (45) is provided with means for generating a switching signal (SO) and is connected with the DMA control (43) as well as with the pixel data preparation unit (41, 42), wherein the switching signal (SO) has a first value 'One' for impeding a reading from the respective first intermediate memory (411, 421) and for allowing the reading from the respective second intermediate memory (412, 422) and wherein the switching signal (SO) has a second value 'Zero' for allowing the reading from the respective first intermediate memory (411, 421) and for impeding the reading from the respective second intermediate memory (412, 422).

8. An arrangement according to Claims 1 to 6, **characterized in that** the low-order addresses of the address read signal (AR) moreover are applied to the selector (413, 423) of the pixel data preparation unit (41, 42) and that the address generator (44) has means for generating a primitive-address signal (AP) and a write signal (WR) that are applied to the selector (413, 423), too.

9. An arrangement according to Claims 1 to 8, **characterized in that** the intermediate memory means (421, 422 or 411, 412) are realized as dual-port RAM; that the selector (413 or 423) comprises a first multiplexer (4131 or 4231) that selects an individual bit of the binary pixel data when the low-order part of the address read signal (AR) is applied to its address input (4130 or 4230), wherein the first multiplexer (4131 or 4231) that is arranged downstream the first dual-port RAM (4110 or 4210) is connected, on its output side, with a first data input of a third multiplexer (4133 or 4233) and wherein the second multiplexer (4132 or 4232) that is arranged downstream the second dual-port RAM (4120 or 4220) is connected, on its output side, with a second data input of the third multiplexer (4133 or 4233); that a switching signal (SO) is applied to the control input of the third multiplexer (4133 or 4233) so that the above-mentioned individual bit of the binary pixel data is output and applied to the data input of a fourth multiplexer (4136 or 4236) arranged downstream and is put through to the data input of a demultiplexer (4134 or 4234) arranged downstream when an additional address signal (AS) with a first value 'One' is applied to its control input; that a resettable collecting register (4135 or 4235) for binary pixel data having a parallel 14-bit data output is arranged downstream the demultiplexer (4134 or 4234), wherein the above-mentioned individual bit of the binary pixel data is taken over into the collecting register (4135 or 4235) when a write signal (WR) is applied to a control input of the collecting register (4135 or 4235); and that there is fed to the demultiplexer (4134 or 4234) the primitive-address signal (AP) that sets the storage space of the bit in the collecting register (4135 or 4235).

10. An arrangement according to Claims 1 to 9, **characterized in that** the address generator (44) comprises an input/output logic (444) and a selection logic (442) that is arranged between the unit (441) for generating read addresses and the means (443) for forming the address read signal (AR) and that the selection logic (442) is operated for selecting read addresses depending on the decompression factor (F_{A}).

11. An arrangement according to Claims 1 to 10, **characterized in that** the output of the third multiplexer (4133 or 4233) is directly connected with the data input of the demultiplexer (4134 or 4234) arranged downstream and that the function is accordingly also taken over by the first and second multiplexers (4131 and 4132 or 4231 and 4232) to which an additional voltage potential with the value 'Zero' is applied on another data input that is put through to the output of the first and second multiplexers (4131 and 4132 or 4231 and 4232), wherein the additional address signal (AS) is generated by the selection logic (442) as part of the address read signal (AR).

12. An arrangement according to Claims 1 to 10, **characterized** i n that the selection logic (442) generates the additional address signal (AS) that is applied to the selector (413, 423); that, on another input of the fourth multiplexer (4236), there is applied a voltage potential having the value 'Zero' for completing the value of the pixel data missing due to compression, wherein the voltage potential having the value 'Zero' is switched to when the additional address signal (AS) has the value 'Zero'.

13. An arrangement according to Claims 1 to 11, **characterized in that** the unit (441) for generating read addresses comprises a first counter (4410) for the primitive address and an assigned first comparator (4411) for the comparison of a count value (P) of the primitive address with a first set value supplied by a register (4412) and a second counter (4413) for an address group and an assigned second comparator (4414) for the comparison of a count value (A) of the address group with a second set value supplied by a register (4415) as well as a sequence control (4401), wherein, after a forming of the address read signal (AR) and after an incrementing of a count value (P) for the primitive address by the value 'One', the comparison is effected in the first comparator (4411), wherein, after successively a number of read addresses have been generated, an exceeding of a set value or an overrun of the counter for the primitive address has been triggered, a loading signal (LD) is issued and a subroutine for the output is started, the counter (4413) for an address group is incremented by the value 'One', wherein a falling short of the second value during the comparison in the second comparator triggers a resetting of the count value (P) of the primitive address to the value 'One' and a generating of a subsequent read address that pertains to another address group.

14. An arrangement according to Claims 1 to 10, **characterized in that** the input/output logic (444) of the address generator (44) comprises an input (4441) for the decompression factor (F_{A}), an input (4442) for receiving an initial value (Q) for a variable (B), a register (4443) for the additional address signal (AS), an input (4444) for the received address-generator start signal and a register (4445) for the address-generator busy signal to be transmitted; that the selection logic (442) comprises a register (4423) for the variable (B) and a first comparator logic (4421) for generating the additional address signal (AS) with the value 'Zero' that is generated when both, the variable (B) and the decompression factor (F_{A}) transmitted by the printer control (45) in the F_{A} signal have been set to a value not equal to the value 'One' or when the decompression factor (F_{A}) has been set to a value not equal to the value 'One' and the variable (B) is equal to the value 'One' and the decompression factor (F_{A}) has been set to a value not equal to the value 'Two' and the count value (A) of the address group is an even number.

15. An arrangement according to Claims 10 and 14, **characterized in that** the selection logic (442) comprises a second comparator logic (4422) for generating the additional address signal (AS) with the value 'One' that is generated when the decompression factor (F_{A}) transmitted by the printer control (45) in the F_{A} signal has been set to the value 'One'.

16. An arrangement according to Claim 15, **characterized in that**, in addition to the second comparator logic (4422), there are provided further comparator means (4424) for generating the additional address signal (AS) with the value 'One' that is generated when the decompression factor (F_{A}) has been set to a value not equal to the value 'One' and the variable (B) is equal to the value 'One' and the decompression factor (F_{A}) has been set to a value equal to the value 'Two' or the decompression factor (F_{A}) has been set to a value not equal to the value 'Two' and the count value (A) of the address group is not an even number.

17. An arrangement according to Claim 14, **characterized in that** the value of the register (4423) for the variable (B) is set to the value 'One' when the comparator logic generates the additional address signal (AS) with the value 'Zero' and that with every generation of the additional address signal (AS) with the value 'One' by the selection logic the value for the variable (B) in the register is reset to the value 'Zero'.

18. An arrangement according to Claims 10 and 14, **characterized in that** a comparator (4425) is provided in the selection logic (442) so that the address read signal (AR) is only generated from read addresses having a positive value.

19. An arrangement according to Claim 10, **characterized in that** the means (443) for forming the address read signal (AR) include a shift register (4431) in which a binary number stored according to the generated read address is shifted by a least one place when a decompression factor (F_{A}) is applied to an input (4441) of the address generator (44) that diverges from the value 'One'.

20. An arrangement according to Claims 1 to 10, **characterized in that** the unit (441) for generating a read address comprises a number of counters that are connected in a circuit arrangement for coupling the formation of the address read signal (AR) with a primitive-address signal (AP) so that every count value (P) repeats itself for the primitive address and a number of read addresses can be assigned to every count value (P), wherein at least one group of read addresses is selected by the selection logic depending on the variable (B) and on the decompression factor (F_{A}).

21. An arrangement according to one of the Claims 1 to 19 or 20, **characterized in that** the sequence control (4401) is connected with a signal generator (4403) for generating a write signal (WR), with a signal generator (4404) for generating a loading signal (LD), with a signal generator (4405) for generating a print start signal (PS) and with an AG-busy signal generator (4416) and that that the input/output logic (444) of the address generator (44) comprises a register (4446) for the issue of the primitive address (AP), a register (4447) for the write signal (WR), a register (4448) for the loading signal (LD), a register (4449) for the output of the address read signal (AR) and a register (4440) for the output of the print start signal (PS).

22. An arrangement according to Claims 1, 2, 5 and 6, **characterized in that** the printer control (45) comprises a data-string counter (454) and is connected with the encoder (3), wherein, after every data string printed, the value (V) of the data-string counter is incremented upon occurrence of the encoder cycle, wherein the value of the high-resolution signal (HR) is changed when a pre-defined first set value (S) of the data-string counter is reached and wherein the printing of the print image is terminated when a pre-defined second set value (U) of the data-string counter is reached.

23. An arrangement according to Claims 1 to 4, the printer control (45) comprises a first changeover switch (45021 ) for changing the compression factor to the value equal to 'One' (F_{D} := 1) when the high-resolution signal (HR) has the value equal to 'Zero' (HR := 0) and is changed to the value equal to 'One' (HR := 1) and that the printer control (45) comprises a second changeover switch (45022) for changing the compression factor to a pre-defined even-numbered value (F_{D} := H) when the high-resolution signal has the value equal to 'One' (HR := 1) and is changed to the value equal to 'Zero' (HR := 0).

24. An arrangement according to Claims 1, 2 and 23, **characterized in that** the printer control (45) comprises a logic (4511) for adjusting the decompression factor (F_{A}) to the current compression factor (F_{D}) when the DMA control (43) and the address generator (44) emit a busy signal having the value 'Zero'.

25. An arrangement according to Claim 22, **characterized in that** further set-value registers and comparators are available for changing the current print resolution whenever the set value of one of the set-value registers is equal to the current count value of the data-string counter.

26. An arrangement according to one of the preceding Claims, **characterized in that**, in the printer control (45) or in the address generator (44), there is arranged a further switch logic (4517) or (4417) that changes an initial value (Q) for the address generator (44) synchronously with the switching signal (SO) so that the nozzle rows of a print head are operated alternatingly.

27. An arrangement according to Claims 1 to 6, **characterized in that** the DMA control (43) comprises at least one sequence control (4301), a word counter (4302) a set-value register (4303), an input/output logic (4304), a memory (4305), a comparator (4306) and a shift register (4307) that are arranged in a circuit for executing DMA cycles.

28. An arrangement according to Claim 27, **characterized in that** the input/output logic (4304) comprises at least one input (43041) for the compression factor (F_{D}) transmitted, an input (43042) for the DMA start signal received and registers (43043 to 43046) for the select signals to be sent, a register (43047) for the DMA-busy signal to be sent, a register (43048) for the request signal (DMA_{REQ}) to be sent, an input (43049) for the acknowledgement signal (DMA_{ACK}) received, an input (43050) for the switching signal (SO) and registers (43051 to 430x0) for the address write signal (AW).

29. An arrangement according to Claims 1 to 4, **characterized in that** the printer control (45) comprises a parameter changer (4502) having NAND gates arranged with one another in a circuit for changing the compression factor to the value equal to 'One' (F_{D} := 1) when the high-resolution signal (HR) has the value equal to 'Zero' (HR := 0) and is changed to the value equal to 'One' (HR := 1) and for changing the compression factor to a pre-defined even numbered value (F_{D} := H) when the high-resolution signal (HR) has the value equal to 'One' (HR := 1) and is changed to the value equal to 'Zero' (HR := 0).

## Revendications

1. Disposition destinée à imprimer une prévisualisation de l'impression sur un pli en mouvement dans un appareil de traitement des plis, dotée d'une tête d'imprimante (1, 2) qui est commandable par l'intermédiaire d'une unité de pilotage (11, 12) à partir d'une commande de données imprimées (4), ladite commande étant reliée à un encodeur (3) et, par l'intermédiaire d'un BUS (5), à au moins un microprocesseur (6), à une mémoire de pixels (7), à une mémoire (8) non volatile et à une mémoire forte (9) par rapport à l'adresse, aux données, et à la commande,
**caractérisée en ce que** le microprocesseur (6) est programmé de manière à générer une prévisualisation de l'impression avec des zones à résolution différente d'image, en utilisant des données provenant de la mémoire forte (9), à générer un nombre de suites alphanumériques de données avec un nombre commutable de données élémentaires et à les enregistrer dans la mémoire de pixels (7), sachant qu'un nombre maximal de données élémentaires par suite alphanumérique de données est sous-dépassé lorsque les données de pixels sont enregistrées comprimées.
**en ce que** la commande de données imprimées (4) est constituée pour la préparation des données de pixels pendant l'impression avec la tête d'imprimante (1, 2) et équipée de moyens pour décomprimer les données de pixels comprimées par suite alphanumérique de données et compléter durant cette opération les données de pixels manquantes en raison de la compression de sorte que la réduction du nombre de données élémentaires par suite alphanumérique de données corresponde à la réduction de la résolution lors de l'impression,
**en ce que** le microprocesseur (6) est programmé pour introduire au moins un paramètre (PA) de commande de la résolution par BUS (5) dans la commande de données imprimées (4) et
**en ce que** la commande de données imprimées (4) est constituée de manière à commuter la résolution de manière réalisable lors de l'impression.

2. Disposition selon la revendication 1,
**caractérisée en ce que** le microprocesseur (6) est programmé afin de transmettre par BUS (5) à la commande d'imprimante (45) une valeur initiale (HRS) pour haute résolution,
**en ce que** la commande de données imprimées (4) se compose d'une unité de préparation des données de pixels (41, 42), d'une commande DMA (43), d'un générateur d'adresses (44) et d'une commande d'imprimante (45), sachant que la commande d'imprimante (45) est reliée pour actionnement à la commande DMA (43), au générateur d'adresses (44) et à l'unité de préparation des données de pixels (41, 42).

3. Disposition selon les revendications 1 à 2,
**caractérisée en ce que** la commande d'imprimante (45) est équipée de moyens pour générer des signaux en fonction des facteurs (F_{A}, F_{D}), sachant que les facteurs (F_{A}, F_{D}) sont égaux à la valeur "Une" de la valeur initiale (HRS) ou différents de la valeur "Zéro" de la valeur initiale (HRS), sachant que les facteurs (F_{A}, F_{D}) sont fixés au moins de manière égale à la valeur "Deux", la commande DMA (43) étant commutable par l'intermédiaire d'un signal F_{D} transmis par une ligne pilote (46), de sorte que le nombre de cycles DMA soit au moins divisé par deux durant le chargement de données de pixels binaires dans une mémoire temporaire ( 411, 421 ou 412, 422) de l'unité de préparation des données de pixels (41, 42) et sachant que le générateur d'adresses (44) est commutable par l'intermédiaire d'un signal F_{A} transmis par une ligne pilote (47), de sorte que des adresses de lecture au moins divisées par deux soient alors créées pour un accès de lecture à la mémoire temporaire de l'unité de préparation des données de pixels (41, 42).

4. Disposition selon la revendication 3,
**caractérisée en ce que** le rapport du nombre maximal de cycle DMA au nombre réduit de cycles DMA correspond au facteur de compression (F_{D}) transmis par signal F_{D} et
**en ce que** le facteur de compression (F_{D}) appliqué à une seule et même suite alphanumérique de données est égal au facteur de décompression (F_{A}) transmis par signal F_{A}.

5. Disposition selon les revendications 1 à 2,
**caractérisée en ce que** l'unité de préparation des données de pixels (41, 42) comprend un sélecteur (423 ou 413) et un registre à décalage (414, 424), sachant que le sélecteur (423 ou 413) est relié avec les mémoires temporaires (421, 422 ou 411, 412) afin de sélectionner les données de pixels binaires, et équipé des moyens pour compléter les données de pixels manquantes en raison de la compression, et sachant que le registre à décalage (414, 424) est relié à la sortie du sélecteur (423 ou 413) en vue de la conversion en série/parallèle et prépare les données de pixels binaires dans un ordre nécessaire pour le type de tête d'imprimante.

6. Disposition selon les revendications 1 à 2,
**caractérisée en ce que** la commande d'imprimante (45) est reliée pour actionnement avec la commande DMA (43), avec le générateur d'adresses (44) et avec l'unité de préparation des données de pixels (41, 42),
- sachant qu'un signal de lancement DMA est communiqué à la commande DMA (43), cette dernière mettant à disposition les données de pixels de l'unité de préparation des données de pixels (41, 42) par suite alphanumérique de données dans le résultat d'un nombre de cycles DMA exécutés,
- sachant qu'un signal de lancement AG est transmis au générateur d'adresses (44) par la commande d'imprimante (45), sachant que le générateur d'adresses (44) présente une unité (441) de génération des adresses de lecture et des moyens (443) pour constituer un signal de lecture d'adresse (AR) en fonction du facteur de décompression (F_{A}), sachant que le signal de lecture d'adresse (AR) correspond au quotient des adresses de lecture générées pour un accès de lecture sur les mémoires temporaires et du facteur de décompression (F_{A}), et
- sachant que l'unité de préparation des données de pixels (41, 42) présente une première et une deuxième mémoire temporaire (411, 421 et 412, 422) pour chaque tête d'imprimante (1, 2), sachant que les mémoires temporaires enregistrent réciproquement une suite alphanumérique de données et une entrée d'adresses (4112, 4212 et 4122, 4222) afin d'établir le signal de lecture d'adresse (AR).

7. Disposition selon les revendications 1 à 6,
**caractérisée en ce que** la commande d'imprimante (45) est constituée avec des moyens pour générer un signal de commutation (SO) et reliée avec la commande DMA (43) ainsi qu'avec l'unité de préparation des données de pixels (41, 42), sachant que le signal de commutation (SO) présente une première valeur "Une" afin d'empêcher l'extraction hors de la première mémoire temporaire respective (411, 421) et de permettre l'extraction hors de la seconde mémoire temporaire respective (412, 422) et sachant que le signal de commutation (SO) présente une deuxième valeur "Zéro" afin de permettre l'extraction hors de la première mémoire temporaire respective (411, 421) et d'empêcher l'extraction hors de la seconde mémoire temporaire respective (412, 422).

8. Disposition selon les revendications 1 à 6,
**caractérisée en ce que** les adresses d'ordre inférieur du signal de lecture d'adresse (AR) sont situées en outre sur le sélecteur (413, 423) de l'unité de préparation des données de pixels (41, 42) et
**en ce que** le générateur d'adresses (44) présente des moyens pour générer un signal d'adresses primitives (AP) et un signal d'écriture (WR) qui sont également placés sur le sélecteur (413, 423).

9. Disposition selon les revendications 1 à 8,
**caractérisée en ce que** les mémoires temporaires (421, 422 ou 411, 412) sont réalisés en RAM Dual-Port, **en ce que** le sélecteur (413 ou 423) présente un premier multiplexeur (4131 ou 4231), ledit multiplexeur sélectionnant un bit individuel des données de pixels binaires, si la partie d'ordre inférieur du signal de lecture d'adresse (AR) est placée sur son entrée d'adresse (4130 ou 4230), sachant que le premier multiplexeur (4131 ou 4231) branché en aval de la première RAM Dual-Port (4110 ou 4210) est relié du côté de la sortie avec une première entrée de données d'un troisième multiplexeur (4133 ou 4233) et sachant qu'un deuxième multiplexeur (4132 ou 4232) branché en aval de la deuxième RAM Dual-Port (4120 ou 4220) est relié du côté de la sortie avec une deuxième entrée de données du troisième multiplexeur (4133 ou 4233),
**en ce qu'**un signal de commutation (SO) est placé sur l'entrée de commande du troisième multiplexeur (4133 ou 4233), de sorte que le bit individuel des données de pixels binaires nommé précédemment est sorti et placé sur l'entrée des données d'un quatrième multiplexeur (4136 ou 4236) branché en aval et connecté pour l'entrée de données d'un démultiplexeur branché en aval (4134 ou 4234), si un signal d'adresse supplémentaire (AS) est placé sur sa sortie de commande avec une première valeur "Une",
**en ce qu'**un registre collecteur réinitialisable (4135 ou 4235) est branché en aval du démultiplexeur (4134 ou 4234) pour les données de pixels binaires, ledit registre présentant une sortie de données parallèle de 14 bits, sachant que le bit individuel des données de pixels binaires nommé précédemment est repris dans le registre collecteur (4135 ou 4235) lorsqu'un signal d'écriture (WR) est créé sur une entrée de commande du registre collecteur (4135 ou 4235),
**en ce que** le signal d'adresse primitive (AP) est alimenté dans le démultiplexeur (4134 ou 4234), ledit démultiplexeur configurant l'espace de mémoire du bit dans le registre collecteur (4135 ou 4235).

10. Disposition selon les revendications 1 à 9,
**caractérisée en ce que** le générateur d'adresses (44) présente une logique d'entrée/de sortie (444) et une logique de sélection (442), laquelle est connectée entre l'unité (441) pour générer des adresses de lecture et le moyen (443) pour constituer le signal de lecture d'adresses (AR),
**en ce que** la logique de sélection (442) est exploitée pour la sélection d'adresses de lecture en fonction du facteur de décompression (F_{A}).

11. Disposition selon les revendications 1 à 10,
**caractérisée en ce que** la sortie du troisième multiplexeur (4133 ou 4233) est reliée directement à l'entrée de données du démultiplexeur branché en aval (4134 ou 4234) et **en ce que** la fonction est reprise avec en conséquence par le premier et le deuxième multiplexeur (4131 et 4132 ou 4231 ou 4232), sur lesquels multiplexeurs un potentiel de tension supplémentaire est situé sur une autre sortie de données avec la valeur "Zéro", ledit potentiel étant connecté à la sortie du premier et du deuxième multiplexeur (4131 et 4132 ou 4231 ou 4232), sachant que le signal d'adresse supplémentaire (AS) est créé comme composant du signal de lecture d'adresses (AR) par la logique de sélection (442).

12. Disposition selon les revendications 1 à 10,
**caractérisée en ce que** la logique de sélection (442) génère le signal d'adresse supplémentaire (AS), lequel est configuré sur le sélecteur (413, 423),
**en ce que**, contre ledit sélecteur, un potentiel de tension doté de la valeur "Zéro" est situé sur une autre sortie du quatrième multiplexeur (4236) pour compléter la valeur des données de pixels manquantes en raison de la compression, sachant que la commutation s'effectue sur le potentiel de tension doté de la valeur "Zéro", lorsque le signal d'adresse supplémentaire (AS) présente la valeur "Zéro".

13. Disposition selon les revendications 1 à 11,
**caractérisée en ce que** l'unité (441) de génération d'adresses de lecture présente un premier compteur (4410) pour l'adresse primitive et un premier comparateur affecté (4411) pour la comparaison d'une valeur comptée (P) de l'adresse primitive, doté d'une première valeur de consigne livrée par un registre (4412), et un deuxième compteur (4413) pour un groupe d'adresses et un deuxième comparateur affecté (4414) pour la comparaison d'une valeur comptée (A) du groupe d'adresses, doté d'une deuxième valeur de consigne livrée par un registre (4415) ainsi qu'une commande séquentielle (4401), sachant que, après une formation du signal de lecture d'adresses (AR) et après une incrémentation d'une valeur comptée (P) pour l'adresse primitive de la valeur "Une", la comparaison est effectuée au premier comparateur (4411), sachant qu'après que, successivement, un nombre d'adresses de lecture a été généré, un dépassement d'une valeur de consigne ou un dépassement de capacité du compteur a été déclenché pour l'adresse primitive, un signal de chargement (LD) a été émis et un sous-programme démarré pour la sortie, le compteur (4413) est incrémenté de la valeur "Une" pour un groupe d'adresses, sachant que, lors de la comparaison dans le deuxième comparateur, un sous-dépassement de la deuxième valeur de consigne déclenche une réinitialisation de la valeur comptée (P) de l'adresse primitive à la valeur "Une" et la génération d'une adresse de lecture consécutive, cette dernière appartenant à un autre groupe d'adresses.

14. Disposition selon les revendications 1 à 10,
**caractérisée en ce que** la logique d'entrée/de sortie (444) du générateur d'adresses (44) présente une entrée (4441) pour le facteur de décompression (F_{A}), une entrée (4442) destinée à la réception d'une valeur initiale (Q) pour une variable (B), un registre (4443) pour le signal d'adresse supplémentaire (AS), une entrée (4444) pour le signal de lancement reçu du générateur d'adresses et un registre (4445) pour le signal occupé à envoyer du générateur d'adresses,
**en ce que** la logique de sélection (442) présente un registre (4423) pour la variable (B) et une première logique de comparaison (4421) pour la génération du signal d'adresse supplémentaire (AS) avec la valeur "Zéro", ledit signal étant généré lorsque la variable (B) et le facteur de décompression (F_{A}) transmis dans le signal F_{A} par la commande d'imprimante (45) sont réglés tous deux à une valeur différente de la valeur "Une" ou lorsque le facteur de décompression (F_{A}) est réglé à une valeur différente de la valeur "Une" et que la variable (B) est égale à la valeur "Une" et lorsque le facteur de décompression (F_{A}) est réglé à une valeur différente de la valeur "Deux" et que la valeur comptée (A) du groupe d'adresses est un nombre pair.

15. Disposition selon les revendications 10 et 14,
**caractérisée en ce que** la logique de sélection (442) présente une deuxième logique de comparaison (4422) pour la génération du signal d'adresse supplémentaire (AS) avec la valeur "Une", ledit signal étant généré lorsque le facteur de décompression (F_{A}) transmis dans le signal F_{A} par la commande d'imprimante (45) est réglé à la valeur "Une".

16. Disposition selon la revendication 15,
**caractérisée en ce que**, en plus de la deuxième logique de comparaison (4422), d'autres moyens de comparaison (4424) sont agencés avec la valeur "Une" pour la génération du signal d'adresses supplémentaires (AS), ledit signal étant généré lorsque le facteur de décompression (F_{A}) est réglé à une valeur différente de la valeur "Une", que la variable (B) est réglée à une valeur égale à la valeur "Une" et que le facteur de décompression (F_{A}) est réglé à une valeur égale à la valeur "Deux" ou que le facteur de décompression (F_{A}) est réglé à une valeur différente de la valeur "Deux" et que la valeur comptée (A) du groupe d'adresses n'est pas un nombre pair.

17. Disposition selon la revendication 14,
**caractérisée en ce que** la valeur du registre ( 4423) est réglée pour la variable (B) à la valeur "Une", lorsque la génération du signal d'adresse supplémentaire (AS) s'effectue par la logique de sélection avec la valeur "Zéro" et
**en ce que** la valeur dans le registre pour la variable (B) est remise à la valeur "Zéro" par la logique de sélection avec chaque génération du signal d'adresse supplémentaire (AS) avec la valeur "Une".

18. Disposition selon les revendications 10 et 14,
**caractérisée en ce qu'un** comparateur (4425) est prévu dans la logique de sélection (442) afin que le signal de lecture d'adresses (AR) soit généré seulement à partir d'adresses de lecture dotées d'une valeur positive.

19. Disposition selon la revendication 10,
**caractérisée en ce que** les moyens (443) destinés à la constitution du signal de lecture d'adresses (AR) comprennent un registre à décalage (4431), dans lequel un nombre binaire enregistré de manière correspondante à l'adresse de lecture générée est décalé d'au moins une position, lorsqu'un facteur de décompression (F_{A}) est placé dans une entrée (4441) du générateur d'adresses (44), ledit facteur différant de la valeur "Une".

20. Disposition selon les revendications 1 à 10,
**caractérisée en ce que** l'unité (441) destinée à la génération d'une adresse de lecture présente un nombre de compteurs qui sont reliés par branchements, afin de coupler la constitution du signal de lecture d'adresses (AR) avec un signal d'adresses primitives (AP), de sorte que chacune des valeurs comptées (P) se répète pour l'adresse primitive et qu'un nombre d'adresses de lecture peut être affecté à chaque valeur comptée (P), sachant que par la logique de sélection, au moins un groupe d'adresses de lecture est sélectionné en fonction de la variable (B) et du facteur de décompression (F_{A}).

21. Disposition selon les revendications 1 à 19 ou 20,
**caractérisée en ce que** la commande séquentielle (4401) est reliée à un poste transmetteur des signaux (4403) destiné à générer un signal d'écriture (WR), à un poste transmetteur des signaux (4404) destiné à générer un signal de charge (LD), à un poste transmetteur des signaux (4405) destiné à générer un signal de lancement d'impression (PS) et avec un poste transmetteur des signaux occupés AG (4416) ainsi
qu'en ce que la logique d'entrée/de sortie (444) du générateur d'adresses (44) présente un registre (4446) pour la livraison de l'adresse primitive (AP), un registre (4447) pour le signal d'écriture (WR), un registre (4448) pour le signal de charge (LD), un registre (4449) pour la sortie du signal de lecture d'adresse (AR) et un registre (4440) pour la sortie du signal de lancement d'impression (PS).

22. Disposition selon les revendications 1, 2, 5 et 6,
**caractérisée en ce que** la commande d'imprimante (45) présente un compteur de suites alphanumériques de données (454) et est reliée avec l'encodeur (3), sachant qu'après chaque suite alphanumérique imprimée, la valeur (V) du compteur de suites alphanumériques de données est incrémentée lors de l'intervention du cycle d'encodeur, sachant que la valeur du signal de haute résolution (HR) est changée lorsqu'une première valeur de consigne prescrite (S) du compteur de suites alphanumériques de données (454) est atteinte, et sachant que l'impression de la prévisualisation de l'impression est terminée lorsqu'une deuxième valeur de consigne prescrite (U) du compteur de suites alphanumériques de données (454) est atteinte.

23. Disposition selon les revendications 1 à 4,
**caractérisée en ce que** la commande d'imprimante (45) présente un premier commutateur (45021) afin de changer le facteur de compression à la valeur égale à "Une" (F_{D}:= 1), lorsque le signal de haute résolution (HR) a la valeur égale à "Zéro" (HR := 0) en étant changé à la valeur égale à "Une" (HR := 1) et
**en ce que** la commande d'imprimante (45) présente un deuxième commutateur (45022), afin de changer le facteur de compression à une valeur prédéterminée à nombre pair (F_{D} := H), lorsque le signal de haute résolution (HR) a la valeur égale à "Une" (HR := 1) en étant changé à la valeur égale à "Zéro" (HR := 0).

24. Disposition selon les revendications 1, 2 et 23,
**caractérisée en ce que** la commande d'imprimante (45) présente une logique (4511), afin d'harmoniser le facteur de décompression (F_{A}) au facteur de compression actuel (F_{D}), lorsque la commande DMA (43) et le générateur d'adresses (44) émettent un signal occupé avec la valeur "Zéro".

25. Disposition selon la revendication 22,
**caractérisée en ce que** d'autres registres de valeurs de consigne et comparateurs sont disponibles afin de modifier la résolution d'impression actuelle par la valeur comptée actuelle de la suite alphanumérique de données avec chaque autre équilibre de la valeur de consigne d'un des registres de valeurs de consigne.

26. Disposition selon l'une des revendications précédentes,
**caractérisée en ce que**, dans la commande d'imprimante (45) ou dans le générateur d'adresses (44), une autre logique de commutation (4517) ou (4417) est disposée, qui change une valeur initiale (Q) de manière synchronisée au signal de commutation (SO) pour le générateur d'adresses (44), afin que les séries de tuyères d'une tête d'imprimante soient exploitées en alternance.

27. Disposition selon les revendications 1 à 6,
**caractérisée en ce que** la commande DMA (43) présente au moins une commande séquentielle (4301), un compteur de mots (4302), un registre de valeurs de consignes (4303), une logique d'entrée/de sortie (4304), une mémoire (4305), un comparateur (4306) et un registre à décalage (4307), lesquels sont interconnectés les uns avec les autres afin d'effectuer des cycles DMA.

28. Disposition selon la revendication 27,
**caractérisée en ce que** la logique d'entrée/de sortie (4304) présente au moins une entrée (43041) pour le facteur de compression (F_{D}) transmis, une entrée (43042) pour le signal de lancement DMA reçu et des registres (43043 à 43046) pour les signaux de sélection à envoyer, un registre (43047) pour le signal occupé DMA à envoyer, un registre (43048) pour le signal de ligne libre à envoyer (DMA_{REQ}), une entrée (43049) pour le signal de confirmation de réception (DMA_{ACK}), une entrée (43050) pour le signal de commutation (SO) et des registres (43051 à 430x0) pour le signal d'écriture des adresses (AW).

29. Disposition selon les revendications 1 à 4,
**caractérisée en ce que** la commande d'imprimante (45) présente un convertisseur de paramètres (4502) avec des grilles NAND, lesquelles sont interconnectées les unes avec les autres, afin de changer le facteur de compression à la valeur égale à "Une" (F_{D} := 1), lorsque le signal de haute résolution (HR) a la valeur égale à "Zéro" (HR := 0) en étant changé à la valeur égale à "Une" (HR := 1) et afin de changer le facteur de compression à une valeur prédéterminée à nombre pair (F_{D} := H), lorsque le signal de haute résolution a la valeur égale à "Une" (HR := 1) en étant changé à la valeur égale à "Zéro" (HR := 0).
